# EUROPEAN PATENT APPLICATION

(11) **EP 4 398 672 A1**
(43) Date of publication of application: **10.07.2024**
(21) Application number: 22881400.0
(22) Date of filing: 14.10.2022
(51) Int. Cl.: H04W 76/27, H04W 76/15, H04L 5/00

(54) **METHOD AND DEVICE FOR CELL GROUP ACTIVATION OR DEACTIVATION IN NEXT-GENERATION MOBILE COMMUNICATION SYSTEM**

(30) Priority: 15.10.2021 KR 20210137744; 03.11.2021 KR 20210150105
(71) Applicant: Samsung Electronics Co., Ltd., Suwon-si, Gyeonggi-do 16677 (KR)
(72) Inventor: KIM, Donggun, Suwon-si, Gyeonggi-do 16677 (KR)
(74) Representative: Gulde & Partner
(86) International application number: PCT/KR2022/015588
(87) International publication number: WO 2023/063773

(57) **Abstract**

The present disclosure relates to a 5G or 6G communication system for supporting a higher data transfer rate. The present disclosure relates to a method performed by a terminal in a wireless communication system. Provided according to various embodiments of the present disclosure are a method and a device which can quickly activate cells in a next-generation mobile communication system.

## Description

### [Technical Field]

The disclosure relates to operations of a UE and a base station in a mobile communication system, and more specifically, to a method and a device for quickly activating a cell in a next-generation mobile communication system.

### [Background Art]

A 5G mobile communication technology defines a wide frequency band to make a fast transmission speed and a new service possible, and can be implemented not only in a frequency band equal to or lower than 6 GHz ("Sub 6 GHz"), such as 3.5 GHz, but also in an ultrahigh frequency band ("Above 6 GHz") called millimeter waves (mmWave), such as 28 GHz or 39 GHz. Further, in case of a 6G mobile communication technology called a beyond 5G system, in order to achieve the transmission speed that is 50 times faster than that of the 5G mobile communication technology and ultralow latency that is reduced to 1/10 of the latency of the 5G mobile communication technology, implementation of the 6G mobile communication technology in the terahertz band (e.g., the band in the range of 95 GHz to 3 terahertz (3 THz)) has been considered.

At the beginning of the 5G mobile communication technology, with the aim of supporting services for enhanced mobile broadband (eMBB), ultra-reliable low-latency communications (URLLC), and massive machine-type communications (mMTC) and satisfying performance requirements, standardization has been carried out for beamforming and massive MIMO to mitigate a path loss of radio waves in an ultrahigh frequency band and to increase a transfer distance of the radio waves, various numerology supports (operation of a plurality of subcarrier spacings and the like) for efficient utilization of ultrahigh frequency resources and a dynamic operation for a slot format, an initial access technology for supporting multi-beam transmission and broadband, definition and operation of a band-width part (BWP), a new channel coding method, such as a polar code for highly reliable transmission of a low density parity check (LDPC) code and control information for mass data transmission, L2 preprocessing, and network slicing for providing a dedicated network specialized for a specific service.

At present, in consideration of services intended to be supported by the 5G mobile communication technology, discussions for the initial 5G mobile communication technology improvement and performance enhancement are underway, and the physical layer device standardization has been carried out for technologies of vehicle-to-everything (V2X) to help the driving judgment of an autonomous vehicle and to increase user convenience based on the vehicle location and state information being transmitted by the vehicle itself, a new radio unlicensed (NR-U) for the purpose of a system operation to meet the requirements on various regulations in an unlicensed band, NR UE power saving, a non-terrestrial network (NTN) that is a UE-satellite direct communication for securing a coverage in an area where communication with a ground network is not possible, and positioning.

In addition, standardization in the field of a wireless interface architecture/protocol has also been carried out for technologies of the industrial internet of things (IIoT) for a new service support through linking and fusion with other industries, an integrated access and backhaul (IAB) to provide a node for extending a network service area through an integrated support of a wireless backhaul link and an access link, mobility enhancement including a conditional handover and a dual active protocol stack (DAPS) handover, and a 2-step random access (2-step RACH for NR) to simplify a random access procedure, and standardization in the field of a system architecture/service has also been carried out for a 5G base line architecture (e.g., service based architecture and service based interface) for grafting of network functions virtualization (NFV) and software-defined networking (SDN) technologies, and mobile edge computing (MEC) for being provided with a service based on a UE location.

If the 5G mobile communication system as described above is commercialized, it is expected that connected devices, which are on an explosive growth trend, will be connected to a communication network, and accordingly, it will be necessary to enhance the function and performance of the 5G mobile communication system and to perform an integrated operation of the connected devices. For this, new researches are scheduled to be performed for the 5G performance improvement and complexity reduction by utilizing the extended reality (XR) for efficiently supporting augmented reality (AR), virtual reality (VR), and mixed reality (MR), artificial intelligence (AI), and machine learning (ML), AI service support, meta bus service support, and drone communication.

Further, the development of the 5G mobile communication system will be able to become the basis for developments of not only the multi-antenna transmission technology, such as new waveforms, full dimension MIMO (FD-MIMO), array antennas, and large scale antennas, to secure the coverage in a terahertz band of a 6G mobile communication technology, lenses and antennas based on meta materials to improve the coverage of the terahertz band signal, high-dimensional space multiplexing technology using orbital angular momentum (OAM), reconfigurable intelligent surface (RIS) technology, but also full duplex technology for frequency efficiency enhancement and system network improvement of the 6G mobile communication technology, Al-based communication technology to realize system optimization through utilization of a satellite and artificial intelligence (AI) from a design stage and internalization of an end-to-end Al support function, and next generation distributed computing technology to realize a service having complexity that exceeds the limits of UE computation capability by utilizing the ultrahigh performance communication and computing resources.

In particular, a next-generation mobile communication system may use carrier aggregation (CA) or dual connectivity (DC) so as to provide a UE with a service having a high data rate and low latency. However, there is a demand for a method for preventing a processing delay that may occur when the carrier aggregation or the dual connectivity is configured and activated for a UE connected to a network or is deactivated after the carrier aggregation or the dual connectivity is used. Further, even in case that SCG is deactivated, there is a need for a method for detecting whether beam failure occurs in PSCell.

### [Disclosure of Invention]

### [Technical Problem]

If a UE maintains a plurality of cells in an activated state so as to use carrier aggregation or dual connectivity, the UE should perform PDCCH monitoring on each of the cells, and thus battery power consumption of the UE may be significantly increased. On the other hand, if the UE maintains the plurality of cells in a deactivated state so as to decrease the battery power consumption of the UE, when the carrier aggregation or the dual connectivity is used, data transmission/reception delay may occur due to a delay occurring when activating the plurality of cells. Accordingly, a method for solving such problems is proposed. On the other hand, in the disclosure, is proposed a method for configuring a primary cell (PCell) or a secondary cell (SCell) (e.g., SCell configured to a master cell group (MCG)) or a PSCell (e.g., PCell of a secondary cell group (SCG)) or a SCell (e.g., secondary cell group (SCG)).

### [Solution to Problem]

According to the disclosure to solve the above-described problems, a method of a UE in a wireless communication system in which dual connectivity (DC) is configured includes: receiving, from a base station, beam failure detection configuration information related to beam failure detection; detecting a beam failure based on the beam failure detection configuration information and a beam failure occurrence indicator from a lower layer device; and reporting a beam failure of a primary secondary cell (PSCell) to an upper layer device if a serving cell is the PSCell and a secondary cell group (SCG) is in a deactivated state in case that the beam failure is detected.

According to the disclosure to solve the above-described problems, a UE in a wireless communication system includes: a transceiver configured to transmit and receive signals; and a controller connected to the transceiver, wherein the controller is configured to control to: receive, from a base station, beam failure detection configuration information related to beam failure detection, detect a beam failure based on the beam failure detection configuration information and a beam failure occurrence indicator from a lower layer device, and report a beam failure of a primary secondary cell (PSCell) to an upper layer device if a serving cell is the PSCell and a secondary cell group (SCG) is in a deactivated state in case that the beam failure is detected.

According to the disclosure to solve the above-described problems, a secondary cell group (SCG) activation method of a UE in a wireless communication system includes: receiving, from a first base station related to a first network, a radio resource control (RRC) control message including control information on a base station related to a second network and control information on a second base station related to the first network; determining whether a state of a secondary cell group related to the second base station is configured to a deactivated state based on the received RRC message; and activating the secondary cell group without performing a random access procedure for the secondary cell group in case that the state of the secondary cell group (SCG) is not configured to the deactivated state.

Further, activating further includes starting physical downlink control channel (PDCCH) monitoring for primary and secondary cells (PSCell) of the secondary cell group.

Further, activating further includes initializing a media access control (MAC) layer device for the UE.

Further, the method further includes: determining whether the control information on the second base station includes reconfigurationWithSync information based on the received RRC message; and starting the random access procedure for the secondary cell group in case that the control information for the second base station includes the reconfigurationWithSync information. Further, the method further includes initializing the media access control (MAC) layer device for the UE after starting the random access procedure for the secondary cell group.

Further, the first network includes a new radio (NR), and the second network includes a long term evolution (LTE).

According to the disclosure to solve the above-described problems, a UE in a wireless communication system includes: a transceiver configured to transmit and receive signals; and a controller connected to the transceiver, wherein the controller is configured to control to: receive, from a first base station related to a first network, a radio resource control (RRC) control message including control information on a first base station related to a second network and control information on a second base station related to the first network, determine whether a state of a secondary cell group related to the second base station is configured to a deactivated state based on the received RRC message, and activate the secondary cell group without performing a random access procedure for the secondary cell group in case that the state of the secondary cell group (SCG) is not configured to the deactivated state.

Further, the controller is further configured to control to start physical downlink control channel (PDCCH) monitoring for primary and secondary cells (PSCell) of the secondary cell group.

Further, the controller is further configured to initialize a media access control (MAC) layer device for the UE.

Further, the controller is further configured to control to: determine whether the control information on the second base station includes reconfigurationWithSync information based on the received RRC message, and start the random access procedure for the secondary cell group in case that the control information for the second base station includes the reconfigurationWithSync information.

Further, the controller is further configured to control to initialize the media access control (MAC) layer device for the UE after starting the random access procedure for the secondary cell group.

Further, the first network includes a new radio (NR), and the second network includes a long term evolution (LTE).

### [Advantageous Effects of Invention]

The disclosure proposes a new dormant or suspension mode or a deactivation mode so that a UE in an RRC connected mode, having established a connection to a network in a next-generation mobile communication system, can quickly activate and deactivate carrier aggregation or dual connectivity.

Further, the disclosure proposes a method capable of operating a new hibernation, dormancy, or suspension mode in a bandwidth part-level unit, in a cell unit, or in a cell group unit (e.g., for secondary cell group), so that carrier aggregation or dual connectivity can be quickly activated to save the battery power of a UE.

Further, when a base station instructs a UE to activate a cell (PCell or PSCell or SCell), the base station can temporarily configure or allocate or send a lot of transmission resources on which the UE can perform a channel measurement, and the UE can quickly activate the cell based on the channel measurement or by quickly reporting the channel measurement result to the base station.

Effects that can be obtained in the disclosure are not limited to the above-mentioned effects, and other unmentioned effects will be able to be clearly understood by those of ordinary skill in the art to which the disclosure pertains from the following description.

### [Brief Description of Drawings]

The above and other objects, features, and advantages of the disclosure will be more apparent through the following description taken in conjunction with embodiments of the disclosure with reference to the accompanying drawings.

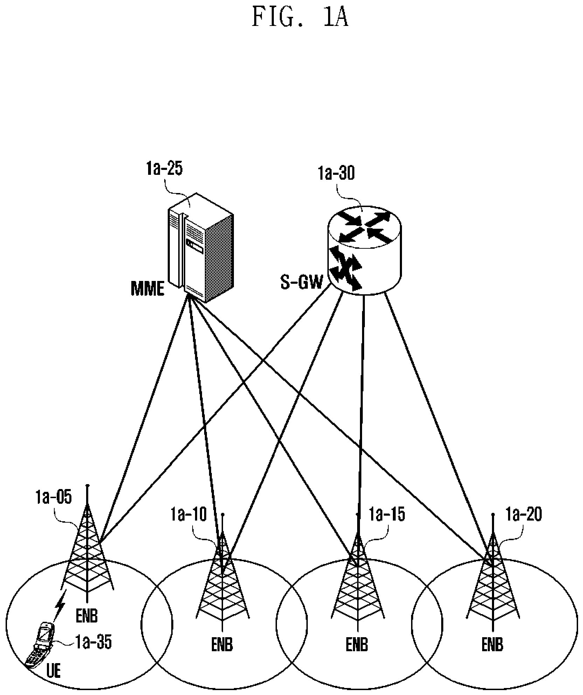

FIG. 1A is a diagram illustrating the structure of a long term evolution (LTE) system to which the disclosure is applicable.

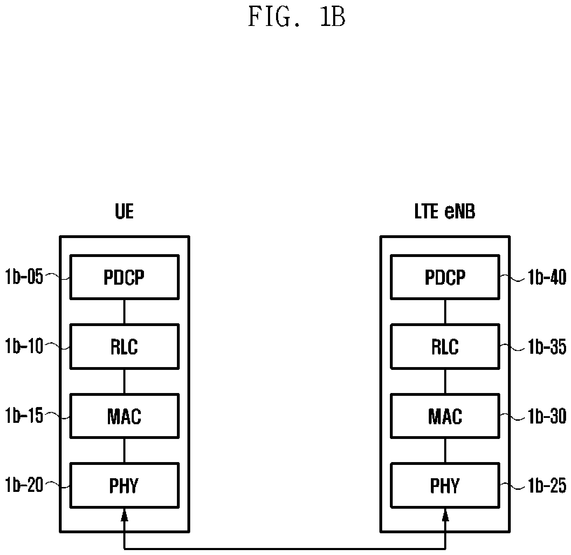

FIG. 1B is a diagram illustrating a radio protocol structure in an LTE system to which the disclosure is applicable.

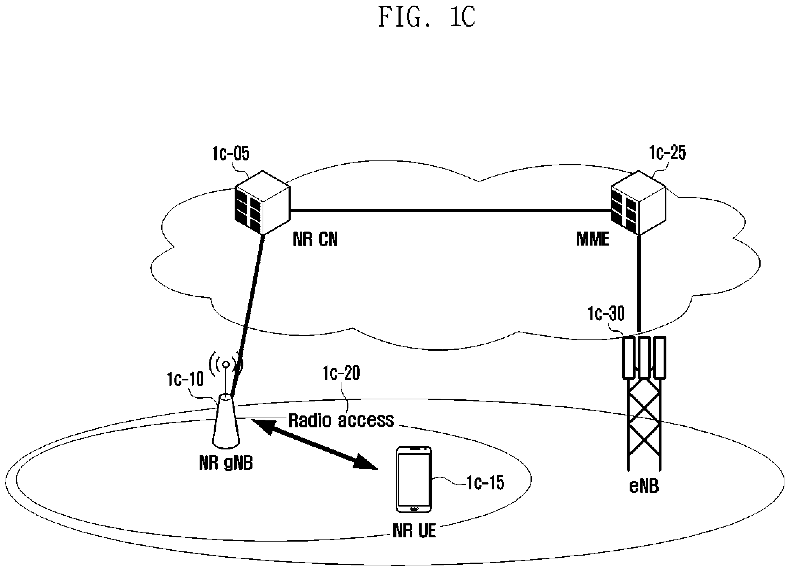

FIG. 1C is a diagram illustrating the structure of a next-generation mobile communication system to which the disclosure is applicable.

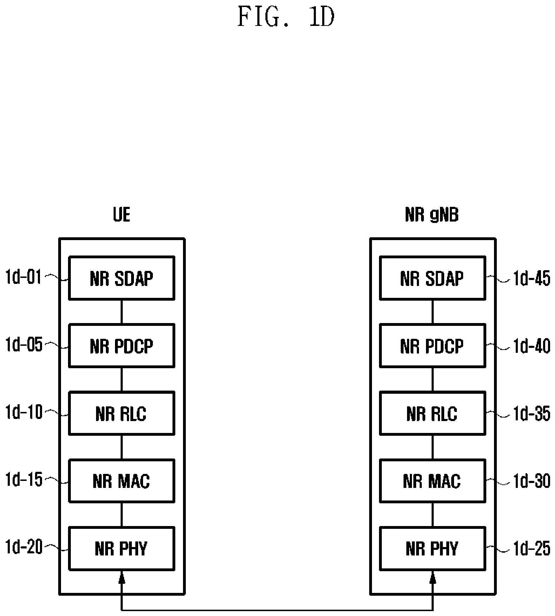

FIG. 1D is a diagram illustrating a radio protocol structure of a next-generation mobile communication system to which the disclosure is applicable.

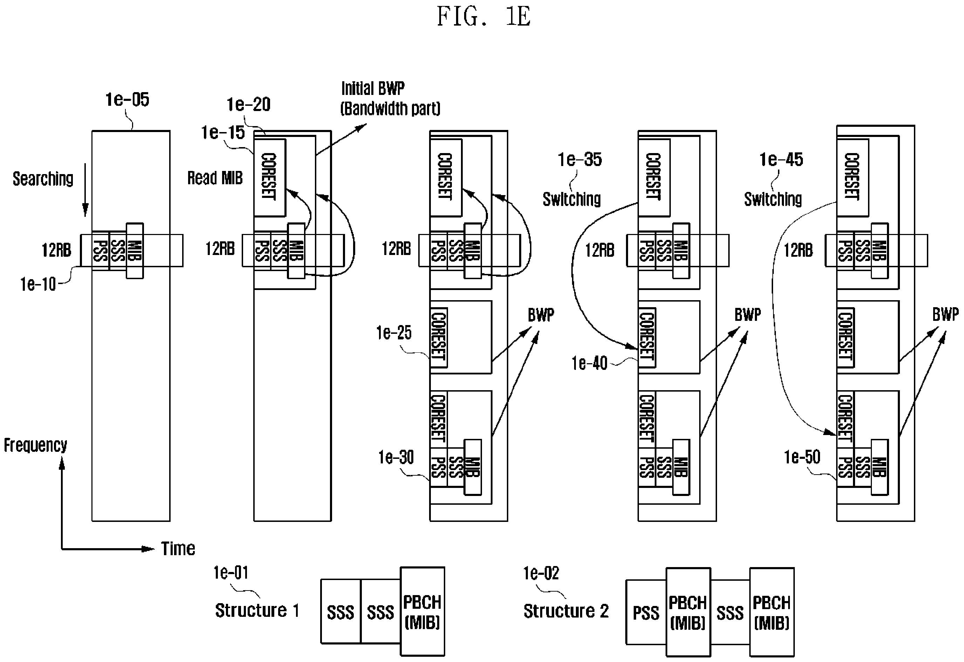

FIG. 1E is a diagram illustrating a procedure of providing a service to a U E by efficiently using a very wide frequency bandwidth in a next-generation mobile communication system to which the disclosure is applicable.

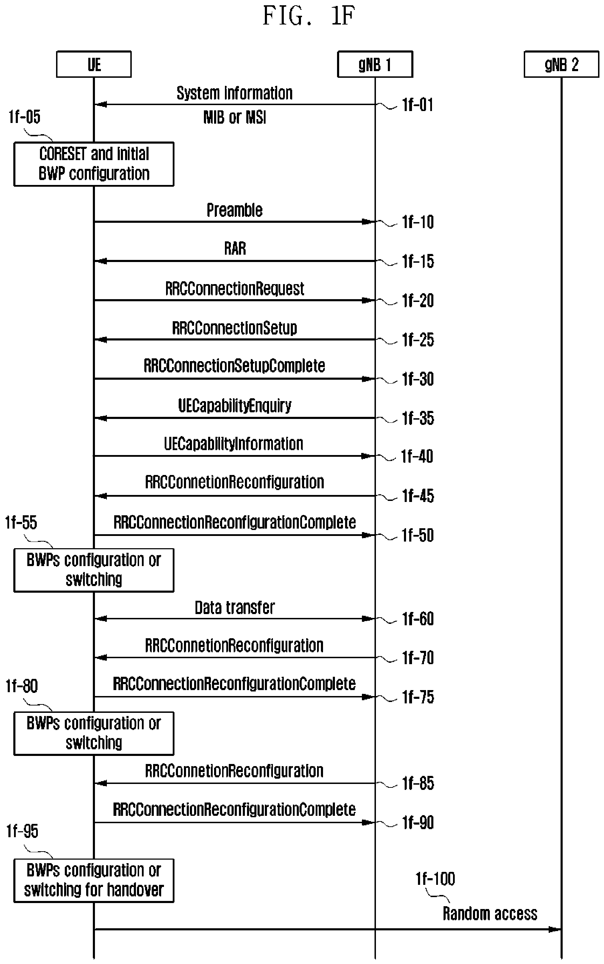

FIG. 1F is a diagram illustrating a procedure in which a UE is switched from an RRC idle mode to an RRC connected mode and a procedure in which beare r configuration information or cell group or cell configuration information or channel estimation configuration information for connection to the UE is configured for the UE in a next-generation mobile communication system to which the disclosure is applicable.

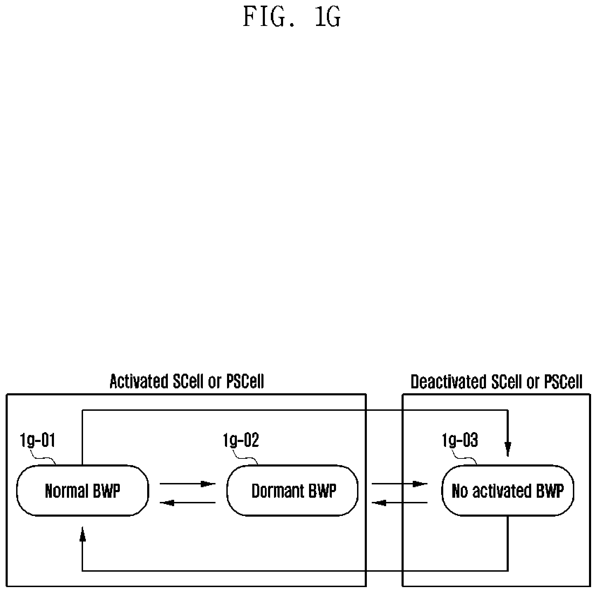

FIG. 1G is a diagram illustrating a state transition for each bandwidth part or a bandwidth part switching procedure proposed in the disclosure.

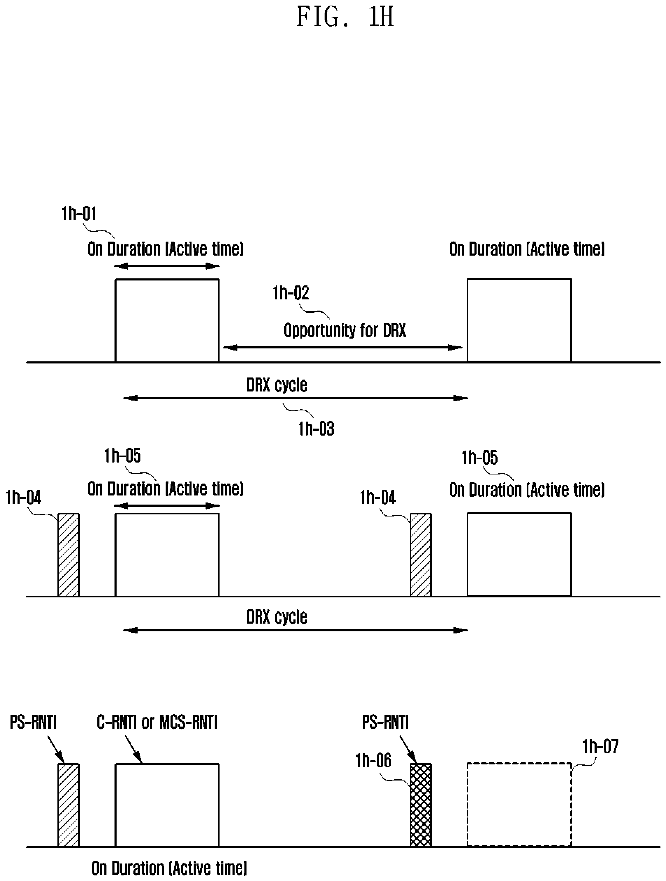

FIG. 1H is a diagram illustrating a method for configuring or operating discontinuous reception (DRX) for reduction of battery power consumption of a UE proposed in the disclosure.

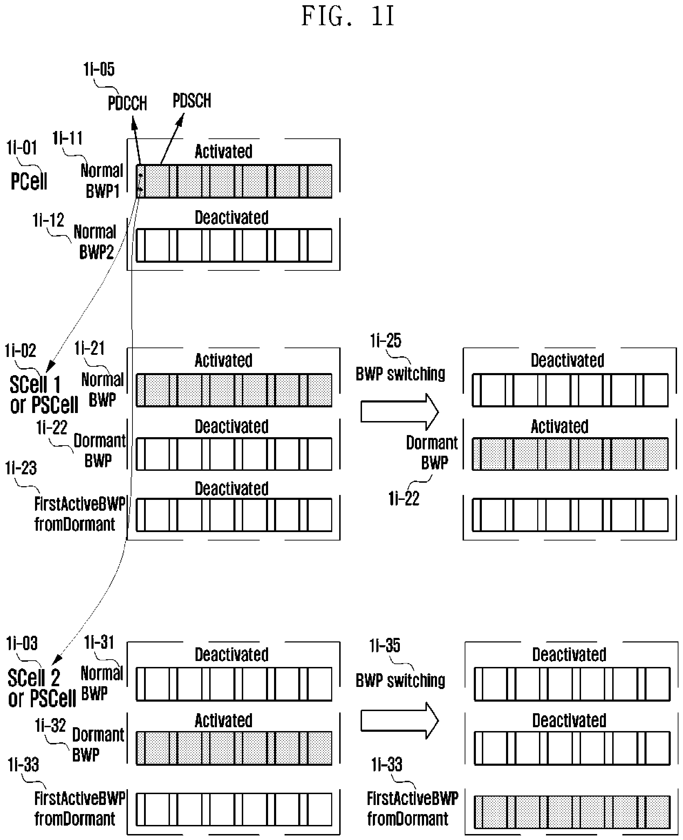

FIG. 1I is a diagram illustrating a method for operating a dormant bandwidth part in an activated SCell or PSCell proposed in the disclosure.

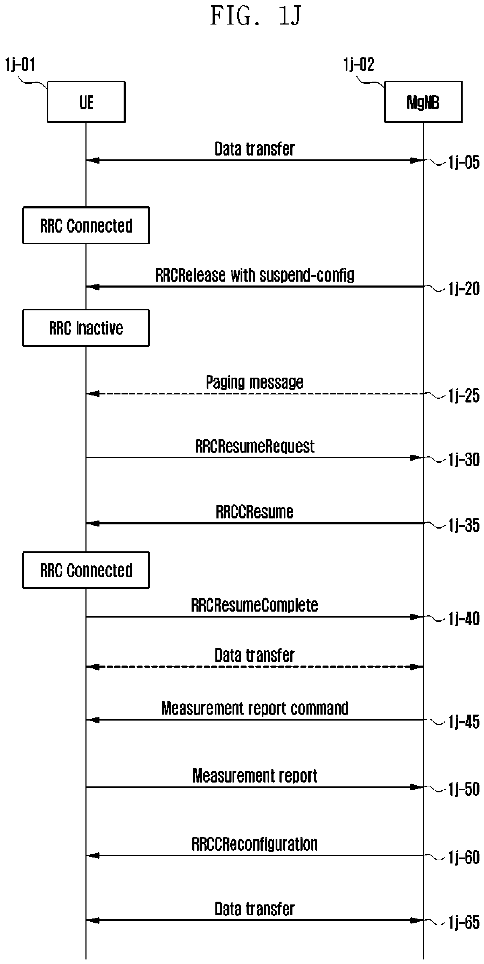

FIG. 1J is a diagram illustrating an embodiment in which embodiments proposed in the disclosure are expanded and applied to a UE in an RRC deactivated mode.

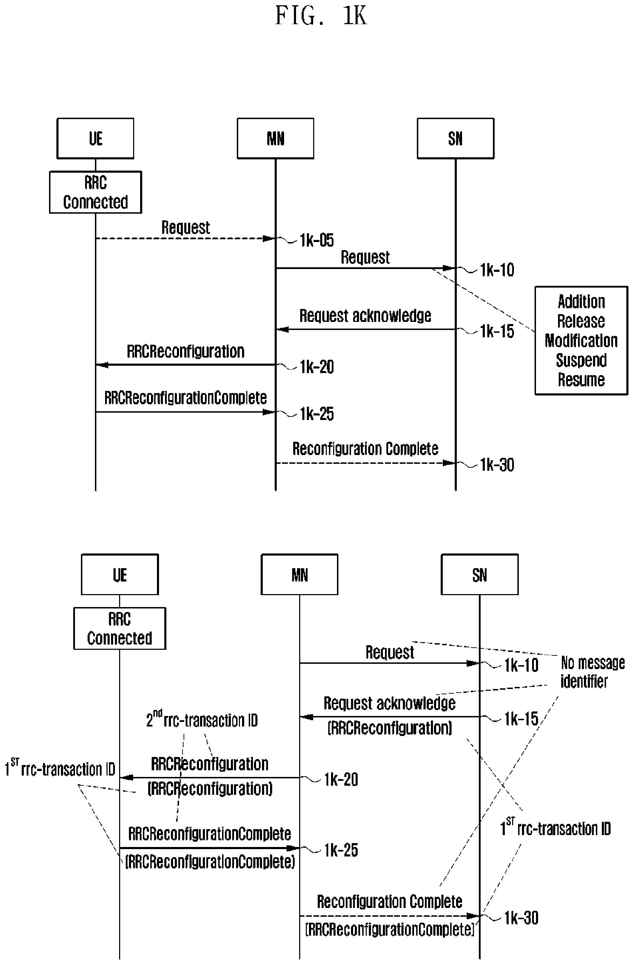

FIG. 1K is a diagram illustrating a first signaling procedure for configuring or releasing dual connectivity, or activating or resuming or suspending or deactivating a secondary cell group configured with dual connectivity in a next-generation mobile communication system to which the disclosure is applicable.

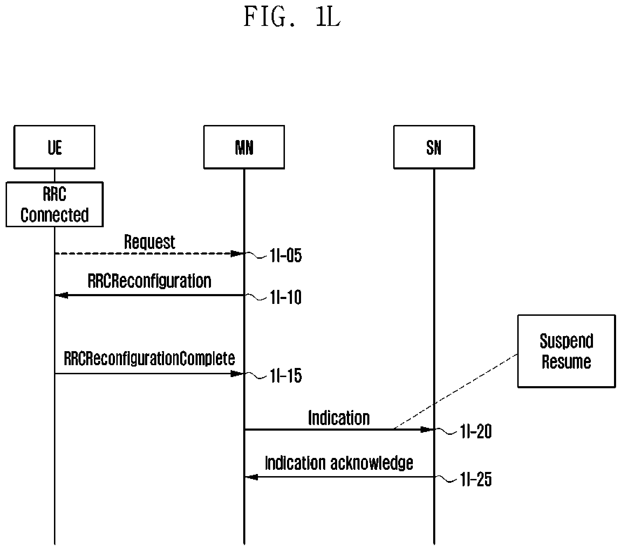

FIG. 1L is a diagram illustrating a second signaling procedure for configuring or releasing dual connectivity, or configuring or releasing or activating or resuming or suspending or deactivating a secondary cell group configured with dual connectivity in a next-generation mobile communication system to which the disclosure is applicable.

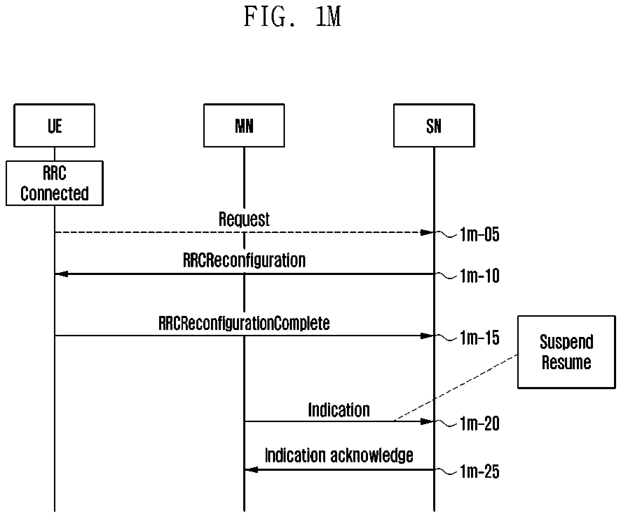

FIG. 1M is a diagram illustrating a third signaling procedure for configuring or releasing dual connectivity, or configuring or releasing or activating or resuming or suspending or deactivating a secondary cell group configured with dual connectivity in a next-generation mobile communication system to which the disclosure is applicable.

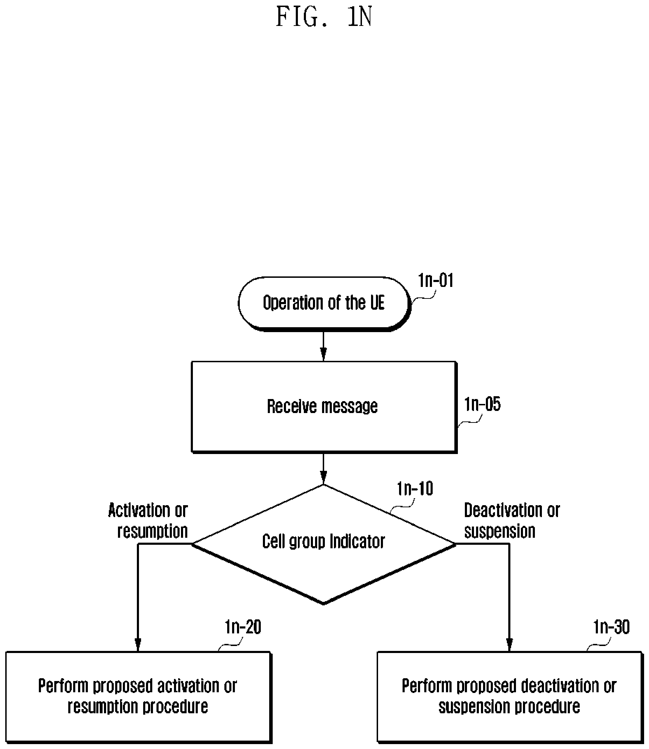

FIG. 1N is a diagram illustrating an operation of a UE proposed in the disclosure.

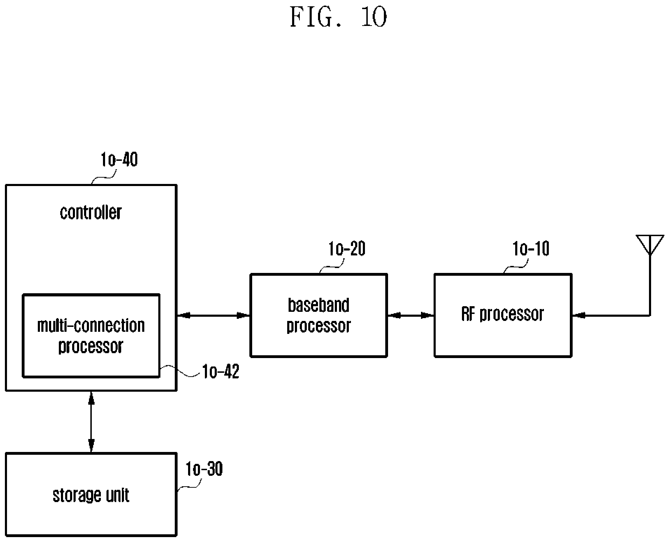

FIG. 1O is a diagram illustrating the structure of a UE to which an embodiment of the disclosure is applicable.

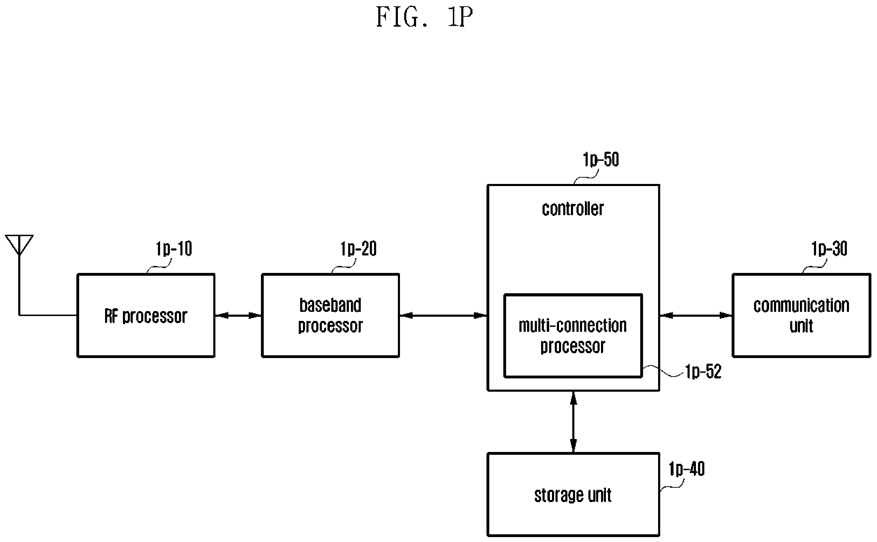

FIG. 1P is a diagram illustrating the structure of a base station (or transmission and reception point (TRP)) to which an embodiment of the disclosure is applicable.

### [Mode for the Invention]

Hereinafter, the principle of operation of the disclosure will be described in detail with reference to the accompanying drawings. In describing the disclosure, a detailed description of related known functions or constitutions will be omitted if it is determined that it obscures the gist of the disclosure in unnecessary detail. Further, terms to be described later are terms defined in consideration of their functions in the disclosure, and may differ depending on intentions of a user or an operator, or customs. Accordingly, they should be defined based on the contents of the whole description of the disclosure.

In describing the disclosure, a detailed description of related known functions or constitutions will be omitted if it is determined that it obscures the gist of the disclosure in unnecessary detail. Hereinafter, embodiments of the disclosure will be described with reference to the accompanying drawings.

In the following description, a term to identify an access node, a term to denote network entities, a term to denote messages, a term to denote an interface between network entities, and a term to denote a variety of types of identity information have been exemplified for convenience in explanation. Accordingly, the disclosure is not limited to the terms to be described later, and other terms to denote targets having equivalent technical meanings may be used.

For convenience in explanation, in the disclosure, terms and names defined in the 3rd Generation Partnership Project Long Term Evolution (3GPP LTE) standards are used. However, the disclosure is not restricted by the terms and names, and it may be equally applied to systems complying with other standards.

In the disclosure, for convenience in explanation, an eNB may be interchangeably used with a gNB. That is, a base station that is explained as an eNB may be represented as a gNB.

Further, in the disclosure, each of layers (e.g., service data adaptation protocol (SDAP), packet data convergence protocol (PDCP), radio link control (RLC), medium access control (MAC), and physical (PHY)) of the radio protocol structure may be referred to as a layer device or an entity. For example, in the disclosure, the MAC layer may also be referred to as a MAC layer device or a MAC entity.

FIG. 1A is a diagram illustrating the structure of an LTE system to which the disclosure is applicable.

With reference to FIG. 1A, a radio access network of an LTE system is composed of evolved node base station (hereinafter referred to as "ENBs", "node base station", or "base stations") 1a-05, 1a-10, 1a-15, and 1a-20, a mobility management entity (MME) 1a-25, and a serving-gateway (S-GW) 1a-30. A user equipment (hereinafter referred to as "UE" or "terminal") 1a-35 accesses an external network through the ENBs 1a-05 to 1a-20 and the S-GW 1a-30.

In FIG. 1A, the ENBs 1a-05 to 1a-20 correspond to an existing node B of a UMTS system. The ENB is connected to the UE 1a-35 on a radio channel, and plays a more complicated role than that of the existing node B. In the LTE system, since all user traffics including a real-time service, such as a voice over IP (VoIP) through an Internet protocol, are serviced on shared channels, entities that perform scheduling through gathering of state information, such as a buffer state, an available transmission power state, and a channel state of UEs, are necessary, and the ENBs 1a-05 to 1a-20 take charge of this. In general, one ENB controls a plurality of cells. For example, in order to implement a transmission speed of 100 Mbps, the LTE system uses, for example, orthogonal frequency division multiplexing (hereinafter, referred to as "OFDM") as a radio access technology in a bandwidth of 20 MHz. Further, the LTE system adopts an adaptive modulation & coding (hereinafter, referred to as "AMC") scheme that determines a modulation scheme and a channel coding rate to match the channel state of the UE. The S-GW 1a-30 is an entity that provides a data bearer, and generates or removes the data bearer under the control of the MME 1a-25. The MME is an entity that takes charge of not only a mobility management function for the UE but also various kinds of control functions, and is connected to the plurality of base stations.

FIG. 1B is a diagram illustrating a radio protocol structure in an LTE system to which the disclosure is applicable.

With reference to FIG. 1B, in a UE or an ENB, a radio protocol of an LTE system is composed of a packet data convergence protocol (PDCP) 1b-05 or 1b-40, a radio link control (RLC) 1b-10 or 1b-35, and a medium access control (MAC) 1b-15 or 1b-30. The packet data convergence protocol (PDCP) 1b-05 or 1b-40 takes charge of IP header compression/decompression operations. The main functions of the PDCP are summarized as follows.
- Header compression and decompression: ROHC only
- Transfer of user data
- In-sequence delivery of upper layer device PDUs at PDCP reestablishment procedure for RLC AM
- For split bearers in DC (only support for RLC AM): PDCP PDU routing for transmission and PDCP PDU reordering for reception
- Duplicate detection of lower layer device SDUs at PDCP reestablishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

A radio link control (hereinafter, referred to as "RLC") 1b-10 or 1b-35 performs an ARQ operation by reconfiguring a PDCP protocol data unit (PDCP PDU) or an RLC service data unit (RLC SDU) with a suitable size. Main functions of the RLC are summarized as follows.
- Transfer of upper layer device PDUs
- Error correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC reestablishment

The MAC 1b-15 or 1b-30 is connected to several RLC layer devices (or RLC layers or RLC entities) constituted in one UE, and performs multiplexing of RLC PDUs into a MAC PDU and demultiplexing of the RLC PDUs from the MAC PDU. The main functions of the MAC are summarized as follows.
- Mapping between logical channels and transmission channels
- Multiplexing/demultiplexing of MAC SDUs belonging to one or different logical channels into/from transmission blocks (TB) delivered to/from the physical layer device on transmission channels
- Scheduling information reporting
- Error correction through HARQ
- Priority handling between logical channels of one UE
- Priority handling between UEs by means of dynamic scheduling
- MBMS service identification
- Transmission format selection
- Padding

A physical layer device PHY 1b-20 or 1b-25 performs channel coding and modulation of upper layer device data, and makes and transmits OFDM symbols on a radio channel, or performs demodulation and channel decoding of the OFDM symbols received on the radio channel and transfers the OFDM symbols to an upper layer device.

FIG. 1C is a diagram illustrating the structure of a next-generation mobile communication system to which the disclosure is applicable.

With reference to FIG. 1C, a radio access network of a next-generation mobile communication system (hereinafter, NR or 5G) is composed of a new radio node B (hereinafter, NR gNB or NR base station) 1c-10, and a new radio core network (NR CN) 1c-05. A new radio user equipment (hereinafter, NR UE or UE) 1c-15 accesses an external network through the NR gNB 1c-10 and the NR CN 1c-05.

In FIG. 1C, the NR gNB 1c-10 corresponds to an evolved Node B (eNB) of the existing LTE system. The NR gNB 1c-10 is connected to the NR UE 1c-15 on a radio channel, and can provide a more superior service than the service of the existing Node B. In the next-generation mobile communication system, all user traffics are serviced on shared channels, and thus there is a need for a device that performs scheduling through consolidation of state information, such as a buffer state, an available transmission power state, and a channel state of UEs, and the NR gNB 1c-10 takes charge of this. In general, one NR gNB controls a plurality of cells. In order to implement ultrahigh-speed data transmission as compared with that of the existing LTE, a bandwidth that is equal to or higher than the existing maximum bandwidth may be applied, and a beamforming technology may be additionally grafted in consideration of the orthogonal frequency division multiplexing (hereinafter, referred to as "OFDM") as the radio access technology. Further, the NR gNB 1c-10 adopts an adaptive modulation & coding (hereinafter, referred to as "AMC") scheme that determines the modulation scheme and the channel coding rate to match the channel state of the UE. The NR CN 1c-05 performs functions of mobility support, bearer setup, and quality of service (QoS) setup. The NR CN is a device that takes charge of not only a mobility management function for the UE but also various kinds of control functions, and is connected to a plurality of base stations. Further, the next-generation mobile communication system may interwork with the existing LTE system, and the NR CN is connected to the MME 1c-25 through a network interface. The MME is connected to the eNB 1c-30 that is the existing base station.

FIG. 1D is a diagram illustrating a radio protocol structure of a next-generation mobile communication system to which the disclosure is applicable.

With reference to FIG. 1D, in the UE or NR base station, the radio protocol of the next-generation mobile communication system is composed of an NR service data adaptation protocol (SDAP) 1d-01 or 1d-45, an NR PDCP 1d-05 or 1d-40, an NR RLC 1d-10 or 1d-35, and an NR MAC 1d-15 or 1d-30.

The main functions of the NR SDAP 1d-01 or 1d-45 may include some of the following functions.
- Transfer of user plane data
- Mapping between a QoS flow and a DRB for both downlink and uplink
- Marking QoS flow ID in both downlink and uplink packets
- Reflective QoS flow to DRB mapping for the uplink SDAP PDUs

With respect to the SDAP layer device, the UE may be configured whether to use a header of the SDAP layer device or whether to use the function of the SDAP layer device for each PDCP layer device, bearer, or logical channel through an RRC message. If the SDAP header is configured, the UE may indicate that the UE can update or reconfigure mapping information on the uplink and downlink QoS flow and the data bearer through a NAS QoS reflective configuration 1-bit indicator (NAS reflective QoS) and an AS QoS reflective configuration 1-bit indicator (AS reflective QoS) of the SDAP header. The SDAP header may include QoS flow ID information representing the QoS. The QoS information may be used as a data processing priority for supporting a smooth service and scheduling information.

The main functions of the NR PDCP 1d-05 or 1d-40 may include some of the following functions.
- Header compression and decompression: ROHC only
- Transfer of user data
- In-sequence delivery of upper layer device PDUs
- Out-of-sequence delivery of upper layer device PDUs
- PDCP PDU reordering for reception
- Duplicate detection of lower layer device SDUs
- Retransmission of PDCP SDUs
- Ciphering and deciphering
- Integrity protection and verification
- Timer-based SDU discard in an uplink

As described above, reordering of the NR PDCP device may mean reordering of PDCP PDUs received from a lower layer device based on PDCP sequence numbers (SNs), and may include transferring of data to an upper layer device in the order of reordering. Further, the reordering may include immediate transferring of the data without considering the order, recording of lost PDCP PDUs through reordering, reporting of the status for the lost PDCP PDUs to a transmission side, and requesting for retransmission for the lost PDCP PDUs.

The main functions of the NR RLC 1d-10 or 1d-35 may include some of the following functions.
- Transfer of upper layer device PDUs
- In-order delivery of upper layer device PDUs
- Out-of-order delivery of upper layer device PDUs
- Error correction through an ARQ
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC reestablishment

As described above, the in-sequence delivery of the NR RLC device may mean the in-sequence delivery of RLC SDUs received from a lower layer device to an upper layer device, and in case that one original RLC SDU is segmented into several RLC SDUs to be received, the in-sequence delivery of the NR RLC device may include reassembly and delivery of the RLC SDUs and reordering of the received RLC PDUs based on an RLC sequence number (SN) or a PDCP sequence number (SN). The in-sequence delivery of the NR RLC device may include recording of lost RLC PDUs through reordering, status report for the lost RLC PDUs to the transmission side, and retransmission request for the lost RLC PDUs. The in-sequence delivery of the NR RLC device may include in-sequence delivery of only RLC SDUs just before the lost RLC SDU to an upper layer device if there is the lost RLC SDU, in-sequence delivery of all RLC SDUs received before a specific timer starts its operation to an upper layer device if the specific timer has expired although there is the lost RLC SDU, or in-sequence delivery of all RLC SDUs received up to now to an upper layer device if the specific timer has expired although there is the lost RLC SDU. Further, the NR RLC device may process the RLC PDUs in the order of their reception (in the order of arrival, regardless of the order of a serial number or sequence number), and may transfer the processed RLC PDUs to the PDCP device in an out-of-sequence delivery manner, and in case of receiving segments, the NR RLC device may receive the segments stored in a buffer or to be received later, reconfigure and process them as one complete RLC PDU, and then transfer the reconfigured RLC PDU to the PDCP device. The NR RLC layer device may not include a concatenation function, and the function may be performed by an NR MAC layer device or may be replaced by a multiplexing function of the NR MAC layer device. As described above, it may be configured through an RRC message whether to perform the in-order delivery or the out-of-order delivery.

As described above, the out-of-sequence delivery of the NR RLC device may mean a function of transferring the RLC SDUs received from a lower layer device directly to an upper layer device regardless of their order, and if one original RLC SDU is segmented into several RLC SDUs to be received, the out-of-sequence delivery of the NR RLC device may include reassembly and delivery of the RLC SDUs. Further, the out-of-sequence delivery of the NR RLC device may include functions of storing and ordering the RLC SNs or PDCP SNs of the received RLC PDUs and recording the lost RLC PDUs.

The NR MAC 1d-15 or 1d-30 may be connected to several NR RLC layer devices constituted in one UE, and the main functions of the NR MAC may include some of the following functions.
- Mapping between logical channels and transmission channels
- Multiplexing/demultiplexing of MAC SDUs
- Scheduling information reporting
- HARQ function (error correction through HARQ)
- Priority handling between logical channels of one UE
- Priority handling between UEs by means of dynamic scheduling
- MBMS service identification
- Transmission format selection
- Padding

The NR PHY layer device 1d-20 or 1d-25 may perform channel coding and modulation of upper layer data to make and transmit OFDM symbols on a radio channel, or may perform demodulation and channel decoding of the OFDM symbols received on the radio channel to transfer the demodulated and channel-decoded symbols to an upper layer.

On the other hand, since the next-generation mobile communication system may use a very high frequency band, the frequency bandwidth may also be very wide. However, supporting all very wide bandwidths in UE implementation requires high implementation complexity and incurs high cost. Therefore, the concept of a bandwidth part (BWP) may be introduced in the next-generation mobile communication system, and a plurality of bandwidth parts (BWPs) may be configured in one cell (Spcell or Scell) and data may be transmitted/received in one or a plurality of bandwidth parts according to an indication of a base station.

The disclosure is featured to propose a state transition method or a BWP switching method and a specific operation considering the state of the Scell and a plurality of BWPs configured in the Scell when introducing a dormant BWP proposed in the disclosure. Further, a method of managing a dormant mode by BWP-level and making a state transition or a BWP switching method is proposed, and a specific BWP operation according to the state of each SCell or the state or mode (active or inactive or dormant) of each BWP is proposed. Further, in order to make the cell (SCell) or the BWP be quickly activated, first channel measurement configuration information for the cell or the BWP may be configured in an RRC message or a MAC CE, and the cell or the BWP may be quickly activated in a manner that the UE is indicated to apply and use (activate) the first channel measurement configuration information, so that the UE may quickly measure a channel signal (e.g., a reference signal) for the cell or the BWP, and may quickly report the measurement result to the base station. As described above, to activate the cell or the BWP may mean procedures in which the UE monitors a physical downlink control channel (PDCCH) in the cell or the BWP, or the base station transmits the PDCCH to the UE, or the base station transmits downlink data (e.g., on a physical downlink shared channel (PDSCH)) to the UE, or the UE transmits uplink data (e.g., on a physical uplink shared channel (PUSCH)), or the UE transmits, on a physical uplink control channel (PUCCH), the measurement result or hybrid automatic repeat request (HARQ) acknowledgement (ACK) or negative-ACK (NACK), or the UE transmits a sounding reference signal (SRS), or the UE measures a channel measurement signal (synchronization signal block (SSB) or channel state information reference signal (CSI-RS) or reference signal (RS)) transmitted by the base station, or the UE measures the channel measurement signal transmitted by the base station and reports the measurement result thereof. As described above, the first channel measurement configuration information may include configuration information by the base station about the channel measurement signal for a specific UE (or UEs) in the cell or the BWP. For example, the first channel measurement configuration information may include a period of the channel measurement signal, the number of signals being transmitted, a time period in which a signal is transmitted, an offset about the time in which the signal is transmitted, a time length between signals being transmitted, a list of a plurality of transmittable channel measurement signals, a time transmission resource (or frequency transmission resource) indicating a location of a signal being transmitted, a transmission resource (a time transmission resource or frequency transmission resource) on which the measurement result is to be reported, or a period in which the measurement result is to be reported. Further, the first channel measurement configuration information configured by an RRC message may include a plurality of pieces of channel measurement signal information, and any one of the plurality of pieces of channel measurement signal information configured as above or beam configuration information may be indicated by an RRC message or MAC CE or DCI, so that the UE may perform the channel measurement or channel measurement report by applying the indicated channel measurement signal information or beam configuration information or by using the indicated channel measurement signal information or beam configuration information. As another method, the UE may be made to perform the channel measurement or channel measurement report by applying or using the configured (or indicated) channel measurement signal information through configuring or indicating the channel measurement signal information by the RRC message or the MAC CE. Further, the first channel measurement configuration information may be differently configured for each cell or each BWP with respect to a plurality of cells or a plurality of BWPs configured by the RRC message, and beam related configuration information (transmission configuration indication (TCI) state or quasi co-location (QCL)) such as a beam direction or a beam number or a beam location may be configured together so as to support that the UE can easily measure a transmission resource for channel measurement. Further, with the first channel measurement configuration information, a timing advance (TA) value (or offset value) for synchronization of a downlink signal of the base station or synchronization of an uplink signal of the base station, or a timer (time alignment timer (TAT)) indicating validity of the TA value, or a timer value (TAT value) may be configured, so that the UE may correctly perform the channel measurement or channel measurement report.

The first channel measurement configuration information proposed in the disclosure may be featured so that it can be configured only for downlink BWP configuration information of each cell. That is, the first channel measurement configuration information proposed in the disclosure may not be configured for the uplink BWP configuration information of each cell. This is because, only after the UE first measures a channel for the downlink, the UE may report the measurement result for the channel or the cell, and then may correctly receive the PDCCH so as to follow the indication for the base station.

The first channel measurement configuration information proposed in the disclosure may be initially deactivated when configured by the RRC message or after handover, and then may be activated by MAC control information or DCI information of the PDCCH or the RRC message, which is proposed in the disclosure. In case of being configured by the RRC message, an initial state should be an inactive state so that the base station can easily manage a cell state or a channel measurement performing procedure of the UE and can correctly perform timing as to when and how the UE is to perform the channel measurement, without a processing delay problem with respect to the RRC message.

Further, in the disclosure, a plurality of BWPs may be configured for one cell (Spcell, Pcell, Pscell or Scell) with respect to each downlink (DL) or uplink (UL), and through BWP switching, an active BWP (active downlink or uplink BWP), a dormant BWP (dormant uplink BWP or dormant downlink BWP), or an inactive BWP (inactive or deactivated DL/UL BWP) may be configured and operated. That is, a data rate may be increased in a way similar to a carrier aggregation technology by transitioning a downlink or uplink BWP for the one cell to an activate state, and further, battery power consumption may be reduced by allowing the UE not to perform PDCCH monitoring on the cell by transitioning or switching the downlink BWP to a dormant BWP, and fast activation of the cell or the BWP may be supported later by allowing the UE to perform the channel measurement on the downlink BWP and report the result of the channel measurement. Further, the battery power consumption of the UE may be reduced by transitioning the downlink (or uplink) BWP for the one cell to an inactive state. As described above, a BWP state transition indication or a BWP switching indication for each cell may be configured and indicated by the RRC message, the MAC CE, or the downlink control information (DCI) of the PDCCH.

The dormant BWP may also be extended and applied to dual connectivity, and for example, to a PSCell of a secondary cell group (SCG). As another method, the dormant BWP may be extended to the concept of cell group suspension or cell group deactivation, and to indicate the cell group suspension or deactivation to one cell group (e.g., secondary cell group) of the UE for which the dual connectivity is configured, such that, with respect to the indicated cell group, the UE may suspend data transmission or reception, may suspend PDCCH monitoring, or may intermittently perform PDCCH monitoring with a very long period, thereby reducing power consumption of the UE. Further, if the UE receives the indication of the cell group suspension or deactivation, the UE may perform a channel measurement procedure in the cell group for which the cell group suspension or deactivation is indicated, and may report the channel measurement result to a network (e.g., to a master cell group or a secondary cell group), thereby supporting fast activation of the dual connectivity. As described above, with respect to the cell group for which the cell group suspension or deactivation is indicated, the UE may perform the channel measurement procedure, or may maintain and store the cell group configuration information without discarding or releasing the cell group configuration information, or may recover the cell group configuration information according to a cell group activation or resumption indication by a network. For example, the UE may changelessly store or maintain the cell group configuration information (e.g., configuration information of each PDCP, RLC, or MAC layer device or bearer configuration information) or configuration information of each cell, which is configured for the UE. However, if the cell group is suspended or deactivated, the UE may suspend the bearers or an RLC bearer of bearers, or may suspend transmission (e.g., SCG transmission) in the cell group. If the UE receives a cell group resumption or activation indication with respect to the cell group for which the cell group suspension or deactivation is indicated, the UE may resume or recover or reapply the cell group configuration information, and may resume the transmission (e.g., SCG transmission) for the bearer, RLC bearer, or the cell group (e.g., SCG transmission), or may restart the data transmission or reception, or may restart the PDCCH monitoring, or may perform the channel measurement reporting, or may periodically reactivate the configured transmission resource.

As described above, in case that the cell group is suspended or deactivated, to suspend a bearer (a bearer using an RLC unacknowledged mode (UM mode) or a bearer using an RLC acknowledged mode (AM mode)) may mean to suspend a PDCP layer device or an RLC layer device (or to suspend data transmission or data reception or data processing) and not to transmit (or receive), by the MAC layer device, data with respect to the bearer (or data with respect to a logical channel identifier corresponding to the bearer) (or not to select, as a target, the logical channel identifier in a logical channel prioritization (LCP) procedure). The procedure for suspending the PDCP layer device may be applied to embodiments of the disclosure proposed in detail below.

As described above, in case that the cell group is suspended or deactivated, to suspend an RLC bearer (RLC bearer using an RLC UM mode or an RLC bearer using an RLC AM mode) may mean to suspend an RLC layer device (or to suspend data transmission or data reception or data processing) and not to transmit (or receive), by the MAC layer device, data with respect to the bearer (or data with respect to a logical channel identifier corresponding to the bearer) (or not to select, as a target, a logical channel identifier in a logical channel prioritization (LCP) procedure). As described above, to suspend the RLC bearer may mean that a PDCP layer device connected to the RLC layer device may continuously perform the data processing. For example, the PDCP layer device connected to the suspended RLC bearer may process and transmit data or may receive and process data through another RLC bearer (e.g., an RLC bearer that belongs to a cell group (e.g., MCG) different from the cell group (e.g., SCG)).

In case that the cell group is suspended or deactivated, to suspend transmission for the cell group (e.g., SCG transmission) may mean that the MAC layer device does not transmit (or receive) data with respect to a bearer (or data with respect to a logical channel identifier corresponding to the bearer) (a bearer using an RLC UM mode or a bearer using an RLC AM mode) belonging to the cell group (or a logical channel identifier is not selected as a target in a logical channel prioritization (LCP) procedure). However, to suspend the transmission for the cell group (e.g., SCG transmission) may mean that the PDCP layer device or the RLC layer device can perform data processing or data preprocessing. For example, data (or uplink data) of the upper layer device is not transmitted in the cell group, but the PDCP layer device or the RLC layer device or the MAC layer device may be enabled to perform data preprocessing for transmission.

In case that the cell group is resumed or activated, to resume the bearer (the bearer using an RLC UM mode or the bearer using an RLC AM mode) may mean to resume the PDCP layer device or the RLC layer device (or to resume data transmission or data reception or data processing) and to transmit (or receive), by the MAC layer device, data with respect to the bearer (or data with respect to a logical channel identifier corresponding to the bearer) (or to select, as a target, a logical channel identifier in a logical channel prioritization (LCP) procedure).

In case that the cell group is resumed or activated, to resume the RLC bearer (the RLC bearer using an RLC UM mode or the RLC bearer using an RLC AM mode) may mean to resume the RLC layer device (or to resume data transmission or data reception or data processing) and to transmit (or receive), by the MAC layer device, data with respect to the bearer (or data with respect to a logical channel identifier corresponding to the bearer) (or to select, as a target, a logical channel identifier in a logical channel prioritization (LCP) procedure). As described above, to resume the RLC bearer may mean that data is transferred to the PDCP layer device connected to the RLC layer device or data is received from the PDCP layer device.

In case that the cell group is resumed or activated, to resume transmission for the cell group (e.g., SCG transmission) may mean that the MAC layer device transmits (or receives) data with respect to the bearer (the bearer using an RLC UM mode or the bearer using an RLC AM mode) belonging to the cell group (or data with respect to a logical channel identifier corresponding to the bearer) (or a logical channel identifier is selected as a target in a logical channel prioritization (LCP) procedure). However, to resume the transmission for the cell group (e.g., SCG transmission) may mean that the PDCP layer device or the RLC layer device can perform data processing or data preprocessing. For example, data of an upper layer device (or uplink data) may be transmitted from the cell group, and the PDCP layer device or the RLC layer device or the MAC layer device may be enabled to perform data preprocessing for transmission.

As another method, in case that the cell group is suspended or deactivated, the bearer (or the RLC bearer) using an RLC UM mode may be suspended and thus the PDCP layer device or the RLC layer device is suspended, so that data transmission or reception may be suspended or data processing may be suspended, and as another method, the MAC layer device may be enabled to suspend data transmission or reception. However, transmission for the cell group may be suspended with respect to the bearer using an RLC AM mode (or the RLC bearer), data processing may be continuously performed in the PDCP layer device or the RLC layer device, or data transmission or reception in the MAC layer device may be suspended. This is because, in case that a security key is modified, a PDCP reestablishment procedure includes a retransmission (or regeneration) procedure for the RLC AM bearer (therefore, in case that the security key is not modified, data processing speed may be decreased. Further, this is because, in case that the security key is modified, data loss does not occur due to the retransmission (or regeneration) procedure), but the PDCP reestablishment procedure does not include a retransmission (or regeneration) procedure for the RLC UM bearer, and thus, if the RLC UM bearer pre-performs a data processing procedure, data loss may occur in the UE (in case that a security key is not modified, the data processing speed may be decreased. However, in case that the security key is modified, there is no retransmission (or regeneration) procedure, and since data is discarded in all in a reestablishment procedure of a PDCP layer device and an RLC layer device, the data loss occurs). Therefore, different procedures may be applied to the bearer (or the RLC bearer) using an RLC AM mode and the bearer (or the RLC bearer) using an RLC UM mode. As described above, the procedure for suspending the PDCP layer device may apply embodiments of the disclosure proposed in detail below.

First channel measurement configuration information for quick activation of a cell group or a cell (SpCell (Pcell or PSCell) or SCell) may be configured and included in cell group configuration information, cell (SpCell (Pcell or PSCell) or SCell) configuration information, preconfigured cell group configuration information or cell (SpCell (Pcell or PSCell) or SCell) configuration information, or a message (e.g., an RRC message or RRCReconfiguration or MAC control information or downlink control information (DCI) of PDCCH) indicating activation or resumption of a cell group or cell (SpCell (Pcell or PSCell) or SCell). In order for a base station to temporarily, much, or frequently transmit a channel measurement signal so as to quickly activate a cell group or to quickly perform channel measurement on the cell, the first channel measurement configuration information may include, in configuration information of the cell (e.g., PCell or PSCell or SCell) of the cell group, configuration information about a period of a frequent channel measurement signal (e.g., radio resource or reference signal or temporary reference signal (TRS) or synchronization signal block (SSB) or channel state information reference signal (CSI-RS) or reference signal (RS)) or information about transmission resource being transmitted (a frequency or time transmission resource on which the frequent channel measurement signal is transmitted) or a duration or a count (the number of times the frequent channel measurement signal is transmitted) or a timer value (a time in which the frequent channel measurement signal is transmitted) or a time duration (e.g., duration (e.g., offset such as a time unit (slot or subframe or symbol, etc.)) in which the frequent channel measurement signal is transmitted) or a transmission resource or period or timing or offset on which the UE should report the measurement result. As described above, the first channel measurement configuration information may be featured so that the base station may configure a short reporting period (or transmission resource) for the UE to report the channel measurement result, or may configure a transmission resource for channel measurement so that the base station can transmit much or frequently many channel measurement signals (or transmission resources (e.g., radio resource or reference signal or temporary reference signal (TRS) to support quick channel measurement or many signal measurement by the UE. As described above, the first channel measurement configuration information may include configuration information about a channel measurement signal for a specific UE (or UEs) on a cell or a BWP. For example, the first channel measurement configuration information may include a period of a channel measurement signal, a count of a signal being transmitted, a time period in which a signal is transmitted, offset about a time in which a signal is transmitted, a time length between signals being transmitted, a list of a plurality of transmittable channel measurement signals, a time transmission resource (or frequency transmission resource) indicating a location of a signal being transmitted, a transmission resource (time transmission resource or frequency transmission resource) on which the measurement result is to be reported, or a period in which the measurement result is to be reported. Further, the first channel measurement configuration information may be differently configured for each cell or each BWP with respect to a plurality of cells or a plurality of BWPs configured by an RRC message, and beam related configuration information (transmission configuration indication (TCI) state or quasi co-location (QCL)) such as a beam direction or a beam number or a beam location may be configured together in order to support that the UE can easily measure a transmission resource for channel measurement. Further, with the first channel measurement configuration information, the base station may configure a timing advance (TA) value (or offset value) for synchronization of a downlink signal of the base station or synchronization of an uplink signal of the base station, a timer (time alignment timer (TAT)) indicating validity of the TA value, or a TAT value, so that the UE can correctly perform channel measurement or channel measurement reporting. Further, the first channel measurement configuration information configured by an RRC message may include a plurality of pieces of channel measurement signal information, and the base station may indicate certain channel measurement signal information among the plurality of pieces of channel measurement signal information configured by the RRC message, MAC CE, or DCI, or beam configuration information, so that the UE can perform channel measurement or channel measurement reporting by applying or using the indicated channel measurement signal information or the indicated beam configuration information. The above indication method may be performed by defining mapping between each configured channel measurement signal information and each of a bitmap, an index, and an identifier, and then by performing the indication based on the mapping. As another method, the base station configures or indicates channel measurement signal information by an RRC message or a MAC CE, so that the UE can perform channel measurement or channel measurement reporting by applying or using the configured (or indicated) channel measurement signal information.

The first channel measurement configuration information proposed in the disclosure may be initially deactivated when configured by an RRC message or after handover, and then may be activated by MAC control information or DCI information of a PDCCH or an RRC message, which is proposed in the disclosure. In case of being configured by the RRC message as described above, an initial state has to be an inactive state, so that the base station can easily manage a cell state of the UE or a channel measurement performing procedure of the UE, and can correctly perform timing as to when and how the UE is to perform channel measurement, without a processing delay problem with respect to the RRC message.

The first channel measurement configuration information proposed in the disclosure can be configured only for downlink BWP configuration information of each cell. That is, the first channel measurement configuration information proposed in the disclosure may not be configured for uplink BWP configuration information of each cell. This is because, only after the UE first measures a channel for a downlink, the UE can report the measurement result of the channel or the cell and then can correctly receive a PDCCH so as to follow the indication from the base station.

Further, a message (e.g., an RRC message or RRCReconfiguration or MAC control information or downlink control information (DCI) of PDCCH) indicating activation or resumption of a cell group or cell (SpCell (Pcell or PSCell) or SCell) may include second channel measurement configuration information for measurement of a signal of a cell (PSCell or PCell or SCell) of a cell group. The second channel measurement configuration information may include general channel measurement configuration information such as a transmission resource or period or time duration or count of a channel measurement signal or a transmission resource or period or time duration for channel measurement reporting.

In the disclosure, the UE may measure a channel by applying the first channel measurement configuration information or the second channel measurement configuration information of the UE according to conditions below, and may report the measurement result to the base station.
- 1> If the UE receives a message (e.g., PDCCH indicator or MAC control information or RRC message) indicating to activate (or resume) a cell (PCell or PSCell or SCell) or a cell group,
   ■ 2> if the first channel measurement configuration information is configured for the UE,
      ◆ 3> The UE may identify that the base station is to frequently transmit many channel measurement signals according to the first channel measurement configuration information, and may measure, according to the first channel measurement configuration information, many or frequent channel measurement signals temporarily (e.g., up to time duration (e.g., subframe or slot or symbol) configured for the first channel measurement configuration information or during a predefined (or predetermined) time duration in consideration of an offset or during a certain period of time (e.g., while a timer is driven)) or until a first condition is satisfied. Further, according to a period or a transmission resource configured in the first channel measurement configuration information, the UE may report the channel measurement result up to time duration configured in the first channel measurement configuration information (e.g., subframe or slot or symbol), or during a predefined (or predetermined) time duration in consideration of an offset or during a certain period of time (e.g., while a timer is driven) or until a first condition is satisfied. Accordingly, since the UE can quickly measure a frequent channel measurement signal and can quickly report the result, the UE may quickly activate (or resume) the cell (PCell or SCell or PSCell) or the cell group or may quickly receive an indication of scheduling information. If the second channel measurement configuration information is configured for the UE after a time duration configured in the first channel measurement configuration information (e.g., subframe or slot or symbol) or after predefined (or predetermined) time duration or after a certain period of time (e.g., if a timer expires) or after a first condition is satisfied, the UE may suspend or release application of the first channel measurement configuration information and may measure a channel measurement signal according to the second channel measurement configuration information. For example, the UE may fall back from the first channel measurement configuration information to the second channel measurement information, or may apply the second channel information instead of the first channel measurement configuration information. Further, the UE may report the channel measurement result according to a period or a transmission resource configured in the second channel measurement configuration information. If the second channel measurement configuration information is not configured, the UE may not perform the channel measurement.
   ■ 2> Otherwise (if the first channel measurement configuration information is not configured for the UE),
      ◆ 3> if the second channel measurement configuration information is configured for the UE, the UE can measure a channel measurement signal according to the second channel measurement configuration information. Further, the UE may report the channel measurement result according to a period or a transmission resource configured in the second channel measurement configuration information. As described above, if the second channel measurement configuration information is not configured, the UE may not perform channel measurement.

In the disclosure, as described above, the first condition may be one of conditions below. In the disclosure, when a cell is activated on the first condition or when a cell group is activated or is resumed or when a UE in an RRC inactive mode resumes connection in an RRC connection resume procedure, efficient conditions under which the base station does not need to transmit unnecessarily many transmission resources or frequently transmission resources are proposed. For example, the UE may apply the first channel measurement configuration information and may perform a channel measurement procedure or a channel measurement reporting procedure until one of conditions below is satisfied.
- When the UE successfully completes a random access procedure (a 4-step random access procedure or a 2-step random access procedure) in the cell (e.g., PCell or SCell or PSCell) or the cell (e.g., PSCell or SCell) of the cell group or when the UE successfully completes a random access procedure and is allocated with a first uplink transmission resource or when an uplink transmission resource is first indicated to the UE, the UE may determine that the first condition is satisfied.
   ■ For example, more specifically, if the UE performs a contention-free random access (CFRA) procedure (e.g., if a pre-designated preamble or a UE cell identifier (e.g., C-RNTI) is allocated),
      ◆ when the UE transmits the pre-designated preamble to the cell and receives a random access response (RAR) message or when the UE receives an indication of the PDCCH in response to the RAR, it may be determined that the random access procedure is successfully completed and thus the UE may determine that the first condition is satisfied. As another method, when an uplink transmission resource is first received after RAR reception, the UE may determine that the first condition is satisfied.
   ■ If the UE performs a contention-based random access (CBRA) procedure (e.g., when a pre-designated preamble or a UE cell identifier (e.g., C-RNTI) is not allocated),
      ◆ if the UE transmits a preamble (e.g., arbitrary preamble) to the cell, receives an RAR message, transmits a message 3 (e.g., handover completion message) by using an uplink transmission resource allocated, included, or indicated in the RAR message, and receives a MAC CE (contention resolution MAC CE) indicating that contention has been resolved through a message 4 from the target base station or if the UE receives an uplink transmission resource on the PDCCH corresponding to the C-RNTI of the UE, it may be determined that the random access procedure to a target base station is successfully completed and thus the UE may determine that the first condition is satisfied. As another method, if the size of the uplink transmission resource allocated in the RAR message is sufficient and thus the message 3 can be transmitted and the UE can additionally transmit uplink data, the UE may determine that the uplink transmission resource is first received and the first condition is satisfied. That is, when the UE receives the RAR, the UE may determine that the uplink transmission resource is first received and may determine that the first condition is satisfied.
- 1> In case that a 2-step random access procedure is configured or indicated for the UE and thus the UE performs the procedure,
- 1> or in case that the 2-step random access procedure is not configured or indicated in the message but the UE supports the 2-step random access procedure in UE capability, the 2-step random access procedure is supported in system information of the cell, and information for the 2-step random access procedure is broadcasted in the system information (e.g., random access resource or threshold value for determining whether or not to perform 2-step random access), or in case that the UE receives the system information and the strength of a signal is better or greater than the threshold value broadcasted in the system information and thus the UE performs the 2-step random access procedure on the cell.
   ■ 2> When the 2-step random access procedure is successfully completed, the UE may determine that the first condition is satisfied.
   ■ 2> The 2-step random access procedure may be specifically performed by using one of a CBRA method or a CFRA method.
      ◆ 3> In case that the UE performs the CBRA-based 2-step random access procedure,
         • 4> the UE may transmit a preamble in a transmission resource for 2-step random access (e.g., PRACH occasion, transmission resource configured by the RRC message by the base station, or transmission resource broadcasted in the system information), and may transmit data (e.g., MsgA MAC PDU) on a transmission resource for data transmission (e.g., PUSCH occasion). The data may include MAC control information (C-RNTI MAC CE) including a UE identifier (C-RNTI), or an RRC message (RRCReconfigurationComplete message or handover completion message).
         • 4> The UE may monitor the PDCCH scrambled by the UE identifier (C-RNTI) or a first identifier (MsgB-RNTI) derived by the time or the frequency where a preamble is transmitted.
         • 4> If the UE receives the PDCCH scrambled by the UE identifier, or is allocated with a downlink transmission resource on the PDCCH, or receives MAC control information (timing advance command MAC CE) for timing adjustment on the downlink transmission resource,
            ■ 5> the UE may determine that the 2-step random access procedure is successfully completed, and may determine that the first condition is satisfied.
         • 4> If the UE receives the PDCCH scrambled by the first identifier (MsgB-RNTI), or is allocated with a downlink transmission resource on the PDCCH, or receives a fallback random access response (RAR) on a preamble transmitted by the UE on the downlink transmission resource (i.e., the fallback RAR indicating to transmit MsgA on another transmission resource in case that the base station receives the preamble, but is unable to receive MsgA),
            ■ 5> the UE may transmit data (MsgA MAC PDU) in a transmission resource indicated in the fallback RAR.
            ■ 5> The UE may monitor the PDCCH scrambled by the UE identifier (C-RNTI).
            ■ 5> If the UE receives the PDCCH scrambled by the UE identifier or is allocated with an uplink transmission resource on the PDCCH, the UE may determine that the 2-step random access procedure is successfully completed and may determine that the first condition is satisfied.
      ◆ 3> If the UE performs the CFRA-based 2-step random access procedure,
         • 4> the UE may transmit a preamble in a transmission resource for 2-step random access (e.g., PRACH occasion or transmission resource designated through the RRC message by the base station), and may transmit data (e.g., MsgA MAC PDU) in a transmission resource for data transmission (e.g., PUSCH occasion). The data may include the MAC control information (C-RNTI MAC CE) including the UE identifier (C-RNTI) or the RRC message (RRCReconfigurationComplete message or handover completion message).
         • 4> The UE may monitor the PDCCH scrambled by the UE identifier (C-RNTI) or the first identifier (MsgB-RNTI) derived by a time or a frequency where a preamble is transmitted.
         • 4> If the UE receives the PDCCH scrambled by the UE identifier or is allocated with a downlink transmission resource on the PDCCH or receives the MAC control information (timing advance command MAC CE) for timing adjustment on the downlink transmission resource,
            ■ 5> the UE may determine that the 2-step random access procedure is successfully completed, and may determine that the first condition is satisfied.
         • 4> If the UE receives the PDCCH scrambled by the first identifier (MsgB-RNTI) or is allocated with a downlink transmission resource on the PDCCH or receives a fallback random access response with respect to a preamble transmitted by the UE on the downlink transmission resource (i.e., the fallback RAR indicating to transmit MsgA on another transmission resource in case that the base station receives the preamble, but is unable to receive MsgA),
            ■ 5> the UE may determine that the 2-step random access procedure is successfully completed, and may determine that the first condition is satisfied.
            ■ 5> The UE may transmit data (MsgA MAC PDU) on a transmission resource indicated in the fallback random access response.
- 1> The UE may determine that the first condition is satisfied when the random access procedure starts or a preamble for the random access procedure is transmitted.
- 1> As another method, if the 2-step random access procedure is configured or is indicated for the UE in the message, the UE may determine that the first condition is satisfied. For example, as described above, the UE may determine that the first condition is satisfied before the 2-step random access procedure starts.
- 1> As another method, if the 2-step random access procedure is configured or is indicated for the UE in the message and a transmission resource (PUSCH) configured for data transmission in the 2-step random access procedure is greater than a first threshold value, or if a configuration value for timing adjustment (timing advance value) is included in the RRC message, the UE may determine that the first condition is satisfied. The first threshold value may be configured by the RRC message (e.g., RRCReconfiguration) by the base station, may be broadcasted in the system information, or may be configured with a size of data which the UE has to transmit. For example, in the above case, the UE may determine that the first condition is satisfied before the 2-step random access procedure starts. As another method, if the configuration value for timing adjustment (timing advance value) is included or the 2-step random access procedure is configured by the RRC message, the UE may not transmit a preamble and may directly transmit data on a configured transmission resource (e.g., transmission resource configured by the RRC message or transmission resource indicated on the PDCCH of a target base station monitored by the UE). Accordingly, in the above case, before the 2-step random access procedure starts or when the data is transmitted or before the data is transmitted, the UE may determine that the first condition is satisfied. As another method, if the configuration value for timing adjustment (timing advance value) is included or the 2-step random access procedure is configured by the RRC message, the UE may not transmit a preamble, and may directly transmit data in a configured transmission resource (PUSCH) (e.g., transmission resource configured by the RRC message or transmission resource indicated on the PDCCH of the target base station monitored by the UE). In the above case, if the configured transmission resource (PUSCH) (e.g., transmission resource configured by the RRC message or transmission resource indicated on the PDCCH of the target base station monitored by the UE) is greater than the first threshold value, or if the configuration value for timing adjustment (timing advance value) is included in the RRC message, before the 2-step random access procedure starts or when the data is transmitted or before the data is transmitted, the UE may determine that the first condition is satisfied.
- 1> In case that the UE in the RRC inactive mode transmits an RRCResumeRequest message and then receives an RRCResume message (or RRCSetup message) as a response thereto, the UE may determine that the first condition is satisfied.
- 1> In case that a timer indicating a time period for the channel measurement expires when the UE performs channel measurement based on the first channel measurement configuration information configured by the RRC message,
- 1> In case that a time duration indicating a time period for the channel measurement has elapsed (or expires) or time duration has all been used (or applied) when the UE performs channel measurement based on the first channel measurement configuration information configured by the RRC message,
- 1> In case that signals for the channel measurement are all measured by a predetermined number of times (or channel measurement is completed) or a signal is received by a predetermined number of times when the UE performs channel measurement based on the first channel measurement configuration information configured by the RRC message,
- 1> In case that the channel measurement based on the configuration information is completed (the channel measurement is expired) or channel measurement reporting is completed (or channel measurement reporting is expired) when the UE performs channel measurement based on the first channel measurement configuration information configured by the RRC message,

If the first condition is satisfied as described above, an upper layer device (e.g., RRC layer device) may indicate as an indicator with respect to a lower layer device (e.g., PDCP layer device or RLC layer device or MAC layer device or PHY layer device), or the lower layer device (e.g., PDCP layer device or RLC layer device or MAC layer device or PHY layer device) may indicate with respect to the upper layer device (e.g., RRC layer device).

The methods for configuring or applying the first channel measurement configuration information proposed in the disclosure may be extended, configured, and used when a cell group (e.g., PSCell)) is activated or resumed or SCell is activated or RRC connection is resumed (e.g., RRCResume message is used) in an RRC deactivation mode or a handover procedure is performed (e.g., RRCReconfiguration message is used).

In the disclosure, the term "bandwidth part (BWP)" may be used without being distinguished between an uplink and a downlink, and may mean to indicate each of an uplink BWP and a downlink BWP according to the context.

In the disclosure, the term "link" may be used without being distinguished between the uplink and the downlink, and may mean to indicate each of the uplink and the downlink according to the context.

In the disclosure, the term "cell" may indicate a PCell or a SCell (e.g., SCell configured in a master cell group (MCG)) or a PSCell (e.g., PCell of a secondary cell group (SCG) or a SCell (e.g., SCell configured in the secondary cell group (SCG)). In the disclosure, a dormant BWP may be configured or introduced for the SCell or the PSCell of the UE that performs carrier aggregation or dual connectivity, and battery power consumption of the UE may be reduced by not monitoring the PDCCH on the dormant BWP. Further, in case that the channel measurement is performed and reported in the dormant BWP (e.g., channel state information (CSI) or channel quality information (CQI) measurement or reporting) or beam measurement or beam tracking or beam operation is performed on the dormant BWP, and in case that data transmission is required, the data transmission may quickly start in a normal BWP by switching or activating in the normal BWP. The dormant BWP may not be configured or applied with respect to the SpCell (PCell of the MCG or PCell (or PSCell) of the SCG) or the SCell configured with a PUCCH, in which a signal should be continuously monitored or a feedback should be transmitted or received or synchronization should be identified and maintained.

If the UE is indicated to switch or activate in the dormant BWP for the SCell of the master cell group through the PCell as described above, the UE may perform a channel measurement procedure in the dormant BWP of the SCell, and may report the measured channel measurement result on a transmission resource of the PCell of the master cell group (MCG) (e.g., on a physical uplink control channel (PUCCH) transmission resource of the PCell) or a transmission resource of the SCell configured with the PUCCH of the master cell group (e.g., on a physical uplink control channel (PUCCH) transmission resource). Which cell or on which transmission resource (e.g., PUCCH or PUSCH) of which cell the channel measurement result of a BWP of which cell is reported may be configured for the UE through the RRC message for each cell or for each BWP.

If the UE is indicated to switch or activate in the dormant BWP with respect to the SCell of the secondary cell group through the PSCell, the UE may perform a channel measurement procedure on the dormant BWP of the SCell, and may report the measured channel measurement result on a transmission resource of the PSCell of the secondary cell group (SCG) (e.g., on a physical uplink control channel (PUCCH) transmission resource of the PSCell) or on a transmission resource of the SCell configured with the PUCCH of the secondary cell group (SCG) (e.g., on a physical uplink control channel (PUCCH) transmission resource). As described above, which cell or on which transmission resource (e.g., PUCCH or PUSCH) of which cell the channel measurement result of a BWP of which cell is reported may be configured for the UE through the RRC message for each cell or for each BWP.

If the UE is indicated to switch or activate to the dormant BWP for the PSCell or the SCell of the SCG through the PCell or is indicated to suspend a cell group for the SCG (or PSCell) (SCG suspension or cell group suspension), the UE may perform a channel measurement procedure on a BWP of the PSCell or the SCell (BWP configured by the RRC message or last activated BWP) or the dormant BWP, and may report the channel measurement result on a transmission resource of the PCell of the master cell group (MCG) (e.g., on a physical uplink control channel (PUCCH) transmission resource of the PCell), or on a transmission resource of the SCell configured with the PUCCH of the master cell group (MCG) (e.g., on a physical uplink control channel (PUCCH) transmission resource), or on a transmission resource of the PSCell of the secondary cell group (SCG) (e.g., on a physical uplink control channel (PUCCH) transmission resource of the PSCell). Which cell or on which transmission resource (e.g., PUCCH or PUSCH) of which cell the channel measurement result of a BWP of which cell is reported may be configured for the UE through the RRC message for each cell or each BWP.

The disclosure proposes several embodiments of operating based on the DCI of the PDCCH or the MAC CE or the RRC message, in order to operate the dormant BWP proposed as above or cell group suspension state for the SCell (SCell of the master cell group when carrier aggregation is configured or SCell of the secondary cell group when dual connectivity is configured) or the PSCell (PCell of the secondary cell group when dual connectivity is configured) of the UE.

The network or the base station may configure Spcell (Pcell and PScell) and a plurality of Scells in the UE. When the UE communicates with one base station, the Spcell may indicate the Pcell, and when the UE communicates with two base stations (master base station and secondary base station), the Spcell may indicate the Pcell of the master base station or the PScell of the secondary base station. The Pcell or the Pscell may be a main cell used when the UE and the base station communicate with each other in respective MAC layer devices, and may mean a cell that performs timing for synchronization, performs random access, transmits an HARQ ACK/NACK feedback on a PUCCH transmission resource, and transmits and receives most control signals. Technology by which the base station increases transmission resources and increases uplink or downlink data transmission resources by operating a plurality of Scells along with the Spcell is referred to as carrier aggregation or dual connectivity.

In the disclosure, a PCell may mean a master cell group (MCG), and a PSCell may mean a secondary cell group (SCG). Further, the MCG may include a PCell and SCells configured for the MCG, and the SCG may include a PSCell and SCells configured for the SCG. Further, a cell may indicate a cell group, or a cell group may indicate a cell.

When the UE is configured with the Spcell and the plurality of Scells through the RRC message, the UE may be configured with a state or a mode of each cell (PCell or PSCell or SCell), or each Scell or a BWP of each SCell or cell group through the RRC message or the MAC CE or the DCI of the PDCCH. The state or mode of the cell may be configured as an active (activated) mode or an active (activated) state, and an inactive (deactivated) mode or an inactive (deactivated) state. In case that the cell is in the active mode or the active state, it may mean that the UE may transmit and receive uplink or downlink data to and from the base station in a BWP other than an activated BWP or an activated normal BWP or an activated dormant BWP of the cell in the active mode or in the activated cell, may monitor the PDCCH to identify the indication by the base station, may perform channel measurement on the downlink of the cell in the active mode or the active state (or the BWP other than the activated BWP or the activated normal BWP or the activated dormant BWP of the cell), may periodically report measurement information to the base station, and may periodically transmit a pilot signal (sounding reference signal (SRS)) to the base station so that the base station can perform the uplink channel measurement. Alternatively, the UE may activate the BWP as the dormant BWP or may switch the BWP to the dormant BWP according to the indication by the base station for the activated cell (e.g., the PDCCH or the MAC CE or the RRC message), and if the dormant BWP is activated in the activated cell, the UE may perform channel measurement reporting and may perform a procedure for reporting the channel measurement result, without performing PDCCH monitoring in the cell.

As another method, if the cell in which the dormant BWP is activated is the SCell, the UE may not monitor the PDCCH or may not receive downlink data or may perform channel measurement or measurement result reporting or may suspend a configured periodic transmission resource (e.g., type 1 periodic transmission resource (configured uplink grant type 1)) or may release or initialize a configured periodic transmission resource (e.g., type 2 periodic transmission resource (configured uplink grant type 2)) or may not transmit a sounding reference signal (SRS) or may not transmit uplink data or may not transmit the PUCCH (e.g., scheduling request (SR) or preamble for random access). However, if the cell in which the dormant BWP is activated or cell group suspension is indicated is the PSCell, the UE may not monitor the PDCCH or may perform PDCCH monitoring with a very long period or may not receive downlink data or may perform channel measurement or measurement result reporting or may suspend the configured periodic transmission resource (e.g., type 1 periodic transmission resource) (configured uplink grant type 1)) or may release or initialize the configured periodic transmission resource (e.g., type 2 periodic transmission resource (configured uplink grant type 2)) or may transmit a sounding reference signal (SRS) or may not transmit uplink data or may transmit the PUCCH (e.g., scheduling request (SR) or preamble for random access) or may perform a random access procedure.

As described above, if the cell in which the BWP other than the dormant BWP is activated is the SCell, the UE may monitor the PDCCH or may receive downlink data or may perform channel measurement or measurement result reporting or may resume the configured periodic transmission resource (e.g., type 1 periodic transmission resource (configured uplink grant type 1)) or may configure or activate the configured periodic transmission resource (e.g., type 2 periodic transmission resource (configured uplink grant type 2)) or may transmit a sounding reference signal (SRS) or may transmit uplink data or may transmit the PUCCH (e.g., scheduling request (SR) or preamble for random access) or may perform a random access procedure.

As described above, if the cell in which the BWP other than the dormant BWP is activated or cell group resumption (SCG resumption) is indicated is the PSCell, the UE may perform PDCCH monitoring or may receive downlink data or may perform channel measurement or measurement result reporting or may resume the configured periodic transmission resource (e.g., type 1 periodic transmission resource (configured uplink grant type 1)) or may configure or activate the configured periodic transmission resource (e.g., type 2 periodic transmission resource (configured uplink grant type 2)) or may transmit a sounding reference signal (SRS) or may transmit uplink data or may transmit the PUCCH (e.g., scheduling request (SR) or preamble for random access) or may perform a random access procedure.

However, in case that the cell is in the inactive mode or the inactive state, it may mean that since the UE is in a state where BWPs configured in the cell are deactivated or the configured BWPs are not activated or there is no activated BWP among the configured BWPs, the UE is unable to transmit and receive data to and from the base station, the UE does not monitor the PDCCH to identify the indication by the base station, does not perform channel measurement, does not perform measurement reporting, and does not transmit a pilot signal.

Accordingly, in order to activate the cells in the inactive mode, the base station may first configure frequency measurement configuration information for the UE through the RRC message, and the UE may perform cell or frequency measurement based on the frequency measurement configuration information. Further, the base station may receive a cell or frequency measurement report of the UE, and then may activate the deactivated cells based on frequency/channel measurement information. Accordingly, long latency occurs in case that the base station activates carrier aggregation or dual connectivity and starts data transmission or reception to or from the UE.

The disclosure proposes a dormant BWP or a dormant state for a BWP of each activated cell (e.g., activated Scell or activated PSCell) to reduce battery power consumption of the UE and to quickly start data transmission or reception, and proposes the configuration or introduction of a dormant bandwidth part (BWP) for each activated cell. Further, the disclosure proposes the configuration or introduction of a state of a cell group for each cell group as an active state, a dormant state, a suspended state, an inactive state, or a resumed state, when the dual connectivity is configured for the UE, and proposes a method for performing a cell group suspension (SCG suspension or cell group suspension) or cell group resumption (SCG resumption or cell group resumption) indication for indicating cell group state transition, and a corresponding UE operation.

In a bandwidth part (BWP) or a dormant BWP that is a dormant mode of the activated cell (dormant BWP in activated SCell), or when the dormant BWP is activated, the UE may not transmit and receive data to and from the base station, or may not monitor the PDCCH to identify the indication by the base station, or may not transmit a pilot signal but may perform channel measurement, and may report the measurement result for the measured frequency/cell/channel according to the base station configuration periodically or when an event occurs. Accordingly, since the UE does not monitor the PDCCH and does not transmit a pilot signal in the dormant BWP of the activated cell, the battery power consumption can be reduced as compared to a normal BWP of the activated cell (or BWP other than the dormant BWP) or as compared to the case where the normal BWP of the activated cell (or BWP other than the dormant BWP) is activated, and unlike a case where the cell is deactivated, since the UE performs channel measurement reporting, the base station may quickly activate the normal BWP of the activated cell based on the measurement report or the measurement report of the dormant BWP of the activated cell, and thus can make carrier aggregation be quickly used, thereby decreasing the transmission latency.

Accordingly, in the disclosure, in case that the cell is in the active mode or the active state, it may mean that the UE may transmit and receive uplink or downlink data to and from the base station in the BWP other than the activated BWP or the activated normal BWP or the activated dormant BWP of the cell in the activated mode or on the activated cell, may monitor the PDCCH to identify an indication by the base station, may perform channel measurement on the downlink of the cell of the active mode or the active state (or the BWP other than the activated BWP or the activated normal BWP or the activated dormant BWP of the cell), may periodically report measurement information to the base station, and may periodically transmit a pilot signal (sounding reference signal (SRS)) to the base station so that the base station can perform uplink channel measurement. Further, in the disclosure, in case that the cell is in the active mode or the active state, it may mean that the UE is unable to transmit and receive uplink or downlink data to and from the base station in the activated dormant BWP of the cell in the active mode or in the activated cell, or may not monitor the PDCCH to identify the indication by the base station, but may perform channel measurement on the downlink of the activated dormant BWP of the cell in the active mode or the active state, and may periodically report the measurement information to the base station.

As described above, if the cell in which the dormant BWP is activated or cell group suspension is indicated is the PSCell, the UE may not monitor the PDCCH or may perform PDCCH monitoring with a very long period or may not receive downlink data or may perform channel measurement or measurement result reporting or may suspend the configured periodic transmission resource (e.g., type 1 periodic transmission resource (configured uplink grant type 1)) or may release or initialize the configured periodic transmission resource (e.g., type 2 periodic transmission resource (configured uplink grant type 2)) or may transmit a sounding reference signal (SRS) or may not transmit uplink data or may transmit the PUCCH (e.g., scheduling request (SR) or preamble for random access) or may perform a random access procedure.

As another method, if the cell for which cell group deactivation (or suspension) is indicated is the PSCell (or the SCG), the UE may not monitor the PDCCH or may perform PDCCH monitoring with a very long period or may not receive downlink data or may not perform channel measurement or measurement result reporting or may suspend the configured periodic transmission resource (e.g., type 1 periodic transmission resource (configured uplink grant type 1)) or may release or initialize the configured periodic transmission resource (e.g., type 2 periodic transmission resource (configured uplink grant type 2)) or may not transmit a sounding reference signal (SRS) or may not transmit uplink data or may not transmit the PUCCH (e.g., scheduling request (SR) or preamble for random access). However, when the cell group deactivation (or suspension) is indicated, radio resource management may be performed based on frequency measurement configuration information configured by the base station in an RRC message indicating the cell group deactivation (or suspension) or in case that radio link monitoring (RLM) configuration information is configured, if an indication indicating that the signal is not synchronized is received from an RLM procedure (lower layer device (PHY layer device) based on a timer (e.g., T310), the timer (e.g., T310) is driven, and if the timer (e.g., T310) expires, a radio link failure is declared. If the indication indicating that the signal is synchronized is received, the driven timer (e.g., T310) may be stopped. Further, if the beam related configuration information is configured to perform a beam failure detection procedure in the RRC message in which the cell group deactivation (or suspension) is indicated when the cell group deactivation (or suspension) is indicated as described above, the UE may perform the beam failure detection procedure.

Further, in the disclosure, a dormant BWP may represent the state of the BWP or may be used as a name of the logical concept indicating a specific BWP. Accordingly, the dormant BWP may be activated or deactivated or may be switched. For example, an indication to switch a second BWP activated in a first cell to a dormant BWP or an indication to transition the first cell to a hibernation or dormant mode or an indication to activate the dormant BWP of the first cell may be interpreted as the same meaning.

Further, in the disclosure, a normal BWP may represent BWPs other than a dormant BWP among BWPs configured for each cell of the UE through an RRC message. In the normal BWP, the UE may transmit and receive uplink or downlink data to and from the base station, may monitor the PDCCH to identify an indication by the base station, may perform channel measurement on the downlink, may periodically report measurement information to the base station, and may periodically transmit a pilot signal (sounding reference signal (SRS)) to the base station so that the base station can perform uplink channel measurement. Further, the normal BWP may represent a first active BWP or a default BWP or a first active BWP activated from hibernation or initial BWP.

Further, among BWPs configured for each cell of the UE, only one dormant BWP may be configured for the downlink. As another method, among BWPs configured for each cell of the UE, only one dormant BWP may be configured for the uplink or downlink.

Further, in the disclosure, the state of the cell group may be configured as an active state or a suspended state or an inactive state. The state of the cell group may be indicated by a bitmap or an indicator of the DCI of the PDCCH or may be indicated by the MAC control information or may be indicated by an indicator of the RRC message. In case that the state of the cell group is indicated as the active state, the UE may store configuration information of the cell group configured or indicated by the RRC message (e.g., RRCReconfiguration message or RRCSetup message or RRCResume message) and may apply, recover, or resume the configuration information, or may monitor the PDCCH according to the configuration of the RRC message in the PCell or PSCell or configured SCell of the cell group, or may receive downlink data or may perform channel measurement or measurement result reporting, or may resume the configured periodic transmission resource (e.g., type 1 periodic transmission resource (configured uplink grant type 1)) or may configure or activate a configured periodic transmission resource (e.g., type 2 periodic transmission resource (configured uplink grant type 2)), or may transmit a sounding reference signal (SRS) or may transmit uplink data, or may transmit the PUCCH (e.g., scheduling request (SR) or preamble for random access), or may perform a random access procedure.

Further, in case that the state of the cell group is indicated as the suspended state or the inactive state, the UE may store or may not discard but may suspend applying the configuration information of the cell group configured or indicated by the RRC message (e.g., RRCReconfiguration message or RRCSetup message or RRCResume message), or may not monitor the PDCCH or perform PDCCH monitoring with a very long period according to the configuration of the RRC message in the PCell or PSCell or configured SCell of the cell group, or may not receive downlink data, or perform channel measurement or measurement result reporting, or may suspend the configured periodic transmission resource (e.g., type 1 periodic transmission resource (configured uplink grant type 1)), or may release or initialize the configured periodic transmission resource (e.g., type 2 periodic transmission resource (configured uplink grant type 2)), or may transmit a sounding reference signal (SRS), or may not transmit uplink data, or may transmit the PUCCH (e.g., scheduling request (SR) or preamble for random access), or may perform a random access procedure.

Further, in case that the state of the cell group is indicated as the inactive state or the release of cell group configuration information is indicated, the UE may release or discard the configuration information of the cell group configured or indicated by the RRC message (e.g., RRCReconfiguration message or RRCSetup message or RRCResume message).

FIG. 1E is a diagram illustrating a procedure of providing a service to a U E by efficiently using a very wide frequency bandwidth in a next-generation mobile communication system to which the disclosure is applicable.

In FIG. 1E, it is described how the next-generation mobile communication system efficiently uses a very wide frequency bandwidth to provide services to UEs having different abilities (capabilities or categories) and to save battery power.

One cell that the base station provides services may service a very wide frequency band such as 1e-05. However, in order to provide a service to UEs having different capabilities, the wide frequency band may be divided into a plurality of bandwidth parts and managed as one cell.

First, the UE initially powered on may search the entire frequency band provided by the operator public land mobile network (PLMN) in a predetermined resource block unit (for example, in 12 resource block (RB) units). That is, the UE may start to search the entire system bandwidth for a primary synchronization sequence (PSS) / secondary synchronization sequence (SSS) in units of the resource block (1e-10). If the signals are detected while searching for PSS/SSS 1e-01 or 1e-02 in units of the resource block, the signals may be read and interpreted (decoded) to identify boundaries between a subframe and a radio frame. Accordingly, subframes may be distinguished in units of 1 ms, and the UE synchronizes the downlink signal with the base station. As described above, a resource block (RB) may be defined as a two-dimensional unit with the size of a predetermined frequency resource and a predetermined time resource. For example, it may be defined as 1 ms unit as a time resource and 12 subcarriers (1 carrier×15 kHz = 180 kHz) as a frequency resource. As described above, when the UE completes synchronization, the UE may identify the master system information block (MIB) or minimum system information (MSI) to identify the information of the control resource set (CORESEST) and identify the initial access bandwidth part (BWP) information (1e-15 and 1e-20). As described above, the CORESET information refers to a location of a time/frequency transmission resource through which a control signal is transmitted from the base station, and, for example, indicates a resource location through which a PDCCH channel is transmitted. That is, the CORESET information is information indicating where the first system information (system information block 1, SIB1) is transmitted, and indicates from which frequency/time resource the PDCCH is transmitted. As described above, when the UE reads the first system information, the UE may identify information on the initial bandwidth part (initial BWP). As described above, when the UE completes synchronization of the downlink signal with the base station and is ready to receive the control signal, the UE may perform a random access procedure in the initial bandwidth part (initial BWP) of the cell on which the UE camps, request RRC connection configuration, and receive an RRC message to perform RRC connection configuration.

In the RRC connection configuration, a plurality of bandwidth parts may be configured for each cell (Pcell or Pscell or Spcell or Scell). A plurality of bandwidth parts may be configured for downlink in one cell, and a plurality of bandwidth parts may be configured for uplink separately.

The plurality of bandwidth parts may be indicated and configured as a BWP identifier to be used as an initial BWP, default BWP, first active BWP, dormant BWP, or first active BWP from dormant.

As described above, the initial BWP may be used as the bandwidth part determined by the cell-specific level at which one exists per cell, and the UE accessing the cell for the first time may configure a connection to the cell through a random access procedure, or the initial BWP may be used as a bandwidth part in which the UE that has configured the connection may perform synchronization. In addition, the base station may configure the initial downlink BWP to be used in the downlink and the initial uplink BWP to be used in the uplink for each cell, respectively. In addition, the configuration information for the initial bandwidth part may be broadcasted in the first system information (system information 1, SIB1) indicated by CORESET, and the base station may reconfigure the BWP by the RRC message to the UE that has accessed the connection. In addition, the initial BWP may be used by designating 0 of the bandwidth part identifier in the uplink and downlink, respectively. That is, all UEs accessing the same cell may use the same initial bandwidth part by designating the bandwidth part with the same bandwidth part identifier 0. This is because when performing the random access procedure, the base station may transmit a random access response (RAR) message to the initial bandwidth part that all UEs may read, so there may be an advantage in facilitating the contention-based random access procedure.

As described above, the first active BWP may be configured differently for each UE (UE specific), and may be indicated by designating a bandwidth part identifier among a plurality of bandwidth parts. The first active bandwidth part may be configured for downlink and uplink, respectively, and may be configured as first active downlink BWP and first active uplink BWP, respectively, as a bandwidth part identifier. The first active bandwidth part may be used to indicate which bandwidth part is to be initially activated and used when a plurality of bandwidth parts are configured in one cell. For example, when a Pcell or Pscell and a plurality of Scells are configured in the UE and a plurality of bandwidth parts are configured in each Pcell, Pscell or Scell, and if the Pcell, Pscell, or Scell is activated, the UE may activate and use the first active BWP among a plurality of bandwidth parts configured in the Pcell, Pscell or Scell. For example, the first active downlink BWP may be activated and used for the downlink and the first active uplink BWP may be activated and used for the uplink.

As described above, the UE's operation of switching the current or activated downlink bandwidth part for the cell and activating the downlink bandwidth part as the first activated downlink bandwidth part (or the bandwidth part configured or indicated by the RRC message) or switching the current or activated uplink bandwidth part for the cell and activating the uplink bandwidth part as the first active uplink bandwidth part (or the bandwidth part configured or indicated by the RRC message) may be performed when the cell or the bandwidth part is in an inactive state and the UE receives an instruction to activate the cell or the bandwidth part through an RRC message, MAC control information, or DCI. In addition, it may be performed when the UE receives an instruction to transition the cell or bandwidth part to the dormant state an indication to activate the BWP to the dormant BWP through an RRC message, MAC control information, or DCI. This is because when activating the cell or bandwidth part, the current or activated downlink bandwidth part is switched to activate the first active downlink bandwidth part (or the bandwidth part configured or indicated by the RRC message) or the uplink bandwidth part is switched to activate the first active uplink bandwidth part (or the bandwidth part configured or indicated by the RRC message), so that the base station can effectively use the carrier aggregation only when the frequency/channel is measured and reported for the first active downlink/uplink bandwidth part even when the channel measurement report is performed in the dormant state. As described above, the default BWP may be configured differently for each UE (UE specific), and may be indicated by designating a bandwidth part identifier among a plurality of bandwidth parts. It may be featured in that the default bandwidth part is configured only for the downlink. The default bandwidth part may be used as a bandwidth part to which an activated bandwidth part among a plurality of downlink bandwidth parts may fall back after a predetermined time. For example, BWP inactivity timer may be configured for each cell or for each bandwidth part with an RRC message, and the timer is started or restarted when data transmission/reception occurs in an activated bandwidth part other than the default bandwidth part, or may be started or restarted when the activated bandwidth part is switched to another bandwidth part. When the timer expires, the UE may fall back or switch the downlink bandwidth part activated in the cell to the default bandwidth. As described above, switching may refer to a procedure of inactivating a currently activated bandwidth part and activating a bandwidth part instructed to be switched, and the switching may be triggered by an RRC message, a MAC control element, or L1 signaling (downlink control information (DCI) of PDCCH). As described above, the switching may be triggered to indicate a bandwidth part to be switched or activated, and the bandwidth part may be indicated by a bandwidth part identifier (e.g., 0, 1, 2, 3, or 4).

The reason why the default bandwidth part is applied and used only for downlink is that the base station may facilitate scheduling of the base station by causing the UE to fall back to the default bandwidth part after a predetermined time has elapsed for each cell to receive an instruction (e.g., DCI of PDCCH) from the base station. For example, if the base station configures the default bandwidth part of UEs accessing one cell as the initial bandwidth part, the base station may continue to perform the scheduling instruction only in the initial bandwidth part after a certain period of time. If the default bandwidth part is not configured in the RRC message, the initial bandwidth part may be regarded as a default bandwidth part, and may fall back to the initial bandwidth part when the bandwidth part deactivation timer expires.

As another method, in order to increase the implementation freedom of the base station, a default bandwidth part for the uplink may be defined and configured, and used like the default bandwidth part of the downlink.

As described above, the dormant BWP may mean a bandwidth part that is in a dormant mode of an activated cell or a dormant BWP in activated Scell. When the dormant bandwidth part is activated, the UE may not transmit and receive data with the base station, or does not monitor the PDCCH to identify the instruction of the base station, or does not transmit a pilot signal, but performs channel measurements, and reports the measurement results for the measured frequency/cell/channel periodically or when an event occurs according to the base station configuration. Therefore, since the UE does not monitor the PDCCH in the dormant BWP of the activated cell and does not transmit a pilot signal, battery power may be saved compared to the normal bandwidth part (or the bandwidth part that is not the dormant bandwidth part) of the activated cell or when the normal bandwidth part (or the bandwidth part that is not the dormant bandwidth part) of the activated cell is activated. In addition, since the UE performs the channel measurement report unlike when the cell is deactivated, the base station may quickly activate the normal bandwidth part of the activated cell based on the measurement report or the measurement report of the dormant bandwidth part of the activated cell so that the carrier aggregation technology may be used quickly, thereby reducing the transmission delay.

The first active bandwidth part (or the first active non-dormant bandwidth part or the bandwidth part configured or indicated by the RRC message) activated in the dormant state or by being switched from the dormant bandwidth part may be a bandwidth part that needs to be activated by switching the current or activated bandwidth part of the cell activated by the UE according to a corresponding indication, or a bandwidth part that needs to be activated from a dormant state set in an RRC message when the UE is operating the bandwidth part of one activated cell as the dormant bandwidth part, when the activated bandwidth part in the activated cell is the dormant bandwidth part, when switched to the dormant bandwidth part in the cell, when the UE is instructed to switch the bandwidth part of the activated cell from the dormant bandwidth part to the normal bandwidth part (or the bandwidth part other than the dormant bandwidth part) by the DCI or MAC CE or RRC message of the PDCCH from the base station, when the UE is instructed to switch or convert the activated bandwidth part to the normal bandwidth part in the dormant bandwidth part, or when instructed to switch or convert or activate the active bandwidth part to the normal bandwidth part (e.g., the first active bandwidth part that is activated from dormancy) in the dormant bandwidth part.

FIG. 1F is a diagram illustrating a procedure in which a UE is switched from an RRC idle mode to an RRC connected mode and a procedure in which beare r configuration information or cell group or cell configuration information or channel estimation configuration information for connection to the UE in a next-generation mobile communication system to which the disclosure is applicable.

One cell, in which the base station provides a service, may service a very wide frequency band. First, the UE may search the entire frequency band provided by the operator (PLMN) in units of a certain resource block (e.g., in units of 12 RBs). That is, the UE may start searching the entire system bandwidth for a primary synchronization sequence (PSS)/secondary synchronization sequence (SSS) in units of the resource blocks. If the signals are detected while searching for the PSS/SSS in units of the resource blocks, the boundaries between a subframe and a radio transmission resource frame may be identified by reading and analyzing (decoding) the signals. As described above, when the synchronization is completed, the UE may read system information of the cell currently camped on. That is, the initial bandwidth part (BWP) information may be identified by identifying the master system information block (MIB) or minimum system information (MSI) to identify the information of the control resource set (CORESEST) and by reading the system information (1f-01 and 1f-05). As described above, the CORESET information refers to a location of a time/frequency transmission resource through which a control signal is transmitted from a base station, and, for example, indicates a resource location through which a PDCCH channel is transmitted.

As described above, when the UE completes synchronization of the downlink signal with the base station and is ready to receive the control signal, the UE may perform a random access procedure in the initial bandwidth part, receive a random access response, request RRC connection establishment, and receive an RRC message to perform RRC connection configuration (1f-10, 1f-15, 1f-20, 1f-25, and 1f-30).

When the basic RRC connection configuration is completed as described above, the base station may transmit an RRC message inquiring about the UE capability to the UE to identify the UE capability (UECapabilityEnquiry, 1f-35). In another method, the base station may ask the MME or AMF about the UE capability to identify the UE capability. This is because the MME or AMF may have stored the capability information of the UE if the MME or AMF has previously accessed the UE. If there is no UE capability information desired by the base station, the base station may request UE capability from the UE. When the UE reports a UE capability, the UE may report, to the base station, as a UE capability, whether the UE supports a dormant BWP for an SCell of each cell group (master cell group or secondary cell group) or whether the UE supports first embodiment or second embodiment or third embodiment or fourth embodiment of the disclosure or whether the UE supports a dormant BWP for a PSCell of each cell group or whether the UE supports a cell group suspension or resume procedure for a PSCell of each cell group or the number of supported cell groups. Also, the UE may report, to the base station, as a UE capability through an RRCResume message in an RRC connection resume procedure, whether the UE is able to store and recover configuration information of the SCell of the master cell group or the SCell of the SCG or the PSCell of the SCG or whether the UE is able to discard the configuration information or whether the UE is able to reconfigure part of the configuration information or whether the UE is able to activate the configuration information.

The reason why the base station transmits the RRC message to the UE to identify the UE capability is to identify the capability of the UE and, for example, to determine what frequency band the UE may read or the frequency band area that the UE may read. In addition, after identifying the capability of the UE, the base station may configure an appropriate bandwidth part (BWP) to the UE. When the UE receives the RRC message inquiring about the UE capability as described above, in response to this, the UE may indicate the range of the bandwidth supported by the UE or the range to which the bandwidth is supported from the current system bandwidth as an offset from the reference center frequency, may directly indicate the start point and the end point of the supported frequency bandwidth, or may indicate as the center frequency and the bandwidth (1f-40).

As described above, the bandwidth part may be configured with an RRCSetup message, an RRCResume message 1f-25, or an RRCReconfiguration message 1f-45 and 1f-70 of RRC connection setup. The RRC message may include configuration information for a Pcell, Pscell, or a plurality of cells, and a plurality of bandwidth parts may be configured for each cell (PCell, Pscell, or Scell). When configuring a plurality of bandwidth parts for each cell, a plurality of bandwidth parts to be used in the downlink of each cell may be configured, in the case of the FDD system, a plurality of bandwidth parts to be used in the uplink of each cell may be configured separately from the downlink bandwidth parts, and in the case of the TDD system, a plurality of bandwidth parts to be commonly used in the downlink and the uplink of each cell may be configured.

Cell configuration information or information for configuring a BWP of each cell (PCell or Pscell or Scell) may include some of a plurality of pieces of information below.
- Cell identifier (SCell index)
- Cell configuration information
   ▪ First channel measurement configuration information for each cell or each BWP
   ▪ Second channel measurement configuration information for each cell or each BWP
- Downlink BWP configuration information of cell
   ▪ Initial downlink BWP configuration information
   ▪ A plurality of pieces of BWP configuration information and BWP identifiers (IDs) corresponding to BWPs, respectively
   ▪ Initial state configuration information of cell or downlink BWP (e.g., active state or dormant state or inactive state)
   a BWP identifier indicating first active downlink BWP
   a BWP identifier indicating default BWP
   a Configuration information for PDCCH monitoring for each BWP. For example, CORESET information or search space resource information or PDCCH transmission resource, period, subframe number information, or the like.
   a BWP identifier indicating dormant BWP
   a BWP identifier indicating first active BWP activated from dormancy
   ▪ BWP inactivity timer configuration and timer value
   ▪ First channel measurement configuration information for each cell or each BWP
   ▪ Second channel measurement configuration information for each cell or each BWP
- Uplink BWP configuration information of cell
   ▪ Initial uplink BWP configuration information
   ▪ A plurality of pieces of BWP configuration information and BWP IDs corresponding to BWPs, respectively
   ▪ Initial state configuration information of cell or downlink BWP (e.g., active state or dormant state or inactive state)
   ▪ BWP identifier indicating first active uplink BWP
- Configuration information about transmission resource for performing channel measurement and reporting the measurement result in dormant BWP or BWP other than dormant BWP (e.g., PUCCH transmission resource information of PCell or PUCCH SCell or PSCell)

In order for a base station to temporarily, much, or frequently transmit a channel measurement signal so as to quickly activate a cell group or to quickly perform channel measurement on the cell, the first channel measurement configuration information that may be included and configured in the RRC message (RRCReconfiguration or RRCResume) may configuration information of the cell (e.g., PCell or PSCell or SCell) of the cell group, configuration information about a period of a frequent channel measurement signal (e.g., radio resource or reference signal or temporary reference signal (TRS) or synchronization signal block (SSB) or channel state information reference signal (CSI-RS) or reference signal (RS)) or information about transmission resource being transmitted (a frequency or time transmission resource on which the frequent channel measurement signal is transmitted) or a duration or a count (the number of times the frequent channel measurement signal is transmitted) or a timer value (a time in which the frequent channel measurement signal is transmitted) or a time duration (e.g., duration (e.g., offset such as a time unit (slot or subframe or symbol, etc.)) in which the frequent channel measurement signal is transmitted) or a transmission resource or period or section or timing or offset on which the UE should report the measurement result. As described above, the first channel measurement configuration information may be featured so that the base station may configure a short reporting period (or transmission resource) for the UE to report the channel measurement result, or may configure a transmission resource for channel measurement so that the base station can frequently transmit many channel measurement signals (or transmission resources (e.g., radio resource or reference signal or temporary reference signal (TRS) to support quick channel measurement or many signal measurement by the UE. As described above, the first channel measurement configuration information may include configuration information about a channel measurement signal for a specific UE (or UEs) on a cell or a BWP. For example, the first channel measurement configuration information may include a period of a channel measurement signal, a count of a signal being transmitted, a time period in which a signal is transmitted, offset about a time in which a signal is transmitted, a time length between signals being transmitted, a list of a plurality of transmittable channel measurement signals, a time transmission resource (or frequency transmission resource) indicating a location of a signal being transmitted, a transmission resource (time transmission resource or frequency transmission resource) on which the measurement result is to be reported, or a period in which the measurement result is to be reported. Further, the first channel measurement configuration information may be differently configured for each cell or each BWP with respect to a plurality of cells or a plurality of BWPs configured by an RRC message, and beam related configuration information (transmission configuration indication (TCI) state or quasi co-location (QCL)) such as a beam direction or a beam number or a beam location may be configured together so as to support that the UE can easily measure a transmission resource for channel measurement. Further, with the first channel measurement configuration information, the base station may configure a timing advance (TA) value (or offset value) for synchronization of a downlink signal of the base station or synchronization of an uplink signal of the base station, a timer (time alignment timer (TAT)) indicating validity of the TA value, or a TAT value, so that the UE can correctly perform channel measurement or channel measurement reporting. Further, the first channel measurement configuration information configured by an RRC message may include a plurality of pieces of channel measurement signal information, and the base station may indicate certain channel measurement signal information among the plurality of pieces of channel measurement signal information configured by the RRC message, MAC CE, or DCI, or beam configuration information, so that the UE can perform channel measurement or channel measurement reporting by applying or using the indicated channel measurement signal information or the indicated beam configuration information. The above indication method may be performed by defining mapping between each configured channel measurement signal information and each of a bitmap, an index, and an identifier, and then by performing the indication based on the mapping. As another method, the base station configures or indicates channel measurement signal information by an RRC message or a MAC CE, so that the UE can perform channel measurement or channel measurement reporting by applying or using the configured (or indicated) channel measurement signal information.

The first channel measurement configuration information proposed in the disclosure may be initially deactivated when configured by an RRC message or after handover, and then may be activated by MAC control information or DCI information of a PDCCH or an RRC message, which is proposed in the disclosure. In case of being configured by the RRC message as described above, an initial state has to be an inactive state, so that the base station can easily manage a cell state of the UE or a channel measurement performing procedure of the UE, and can correctly perform timing as to when and how the UE is to perform channel measurement, without a processing delay problem with respect to the RRC message.

Further, an RRC message (RRCReconfiguration or RRCResume) may include or configure second channel measurement configuration information. The second channel measurement configuration information may include general channel measurement configuration information such as a transmission resource or period or time duration or count of a channel measurement signal or a transmission resource or period or time duration for channel measurement reporting.

The configured initial BWP or default BWP or first active BWP may be used for the following purposes, and may operate as follows to suit the purposes.

As described above, the initial BWP may be used as the bandwidth part determined by the cell-specific level that exists one per cell, and the UE accessing the cell for the first time may configure a connection to the cell through a random access procedure, or the initial BWP may be used as a bandwidth part in which the UE that has configured the connection may perform synchronization. In addition, the base station may configure the initial downlink BWP to be used in the downlink and the initial uplink BWP to be used in the uplink for each cell, respectively. In addition, the configuration information for the initial BWP may be broadcasted in the first system information (system information 1, SIB1) indicated by CORESET, and the base station may reconfigure the RRC message for the UE that has accessed the connection. In addition, the initial BWP may be used by designating 0 of the bandwidth part identifier in the uplink and downlink, respectively. All UEs accessing the same cell may use the same initial bandwidth part by designating the same bandwidth part identifier 0 This is because when performing the random access procedure, the base station may transmit a random access response (RAR) message to the initial bandwidth part that all UEs may read, so there may be an advantage in facilitating the contention-based random access procedure.

As described above, the first active BWP may be configured differently for each UE (UE specific), and may be indicated by designating a bandwidth part identifier among a plurality of bandwidth parts. The first active bandwidth part may be configured for downlink and uplink, respectively, and may be configured as first active downlink BWP and first active uplink BWP, respectively, as a bandwidth part identifier. The first active bandwidth part may be used to indicate which bandwidth part is to be initially activated and used when a plurality of bandwidth parts are configured in one cell. For example, when a Pcell or Pscell and a plurality of Scells are configured in the UE and a plurality of bandwidth parts are configured in each Pcell, Pscell or Scell, and if the Pcell, Pscell, or Scell is activated, the UE may activate and use the first active BWP among a plurality of bandwidth parts configured in the Pcell, Pscell or Scell. That is, the first active downlink BWP may be activated and used for the downlink and the first active uplink BWP may be activated and used for the uplink.

The operation in which the UE switches the current or activated downlink bandwidth part for the cell and activates it as the first active downlink bandwidth part (or the bandwidth part configured or indicated by the RRC message) or switches the current or activated uplink bandwidth part and activates the first active uplink bandwidth part (or the bandwidth part configured or indicated by the RRC message) may be performed when a certain cell or a certain active cell BWP in an inactive or dormant state receives an indication to be activated, or when an indication to switch or activate from the inactive or dormant BWP to the normal BWP is received through an RRC message, MAC control information, or DCI of PDCCH. In addition, when the UE receives an instruction to transition the activated cell or bandwidth part to the dormant state or to switch or activate the dormant bandwidth part through an RRC message, MAC control information, or DCI of PDCCH, the UE may switch the bandwidth part to the dormant bandwidth part or activate the bandwidth part or make the bandwidth part dormant.

As described above, switching to the dormant or dormant bandwidth part or activation of the dormant bandwidth part may refer to performing the operation proposed in the dormant state in the disclosure. For example, it is possible to measure and report the channel for the downlink bandwidth part (or dormant bandwidth part) to the base station without performing PDCCH monitoring. As another method, when the activated Scell or bandwidth part is activated or switched to the normal bandwidth part, since the downlink bandwidth part is switched to be activated as the first activated downlink bandwidth part and the uplink bandwidth part is switched to be activated as the first activated uplink bandwidth part, the dormant bandwidth part may be configured as the first active downlink or uplink bandwidth part or a default bandwidth part. As described above, the default BWP may be configured differently for each UE (UE specific), and may be indicated by designating a bandwidth part identifier among a plurality of bandwidth parts. The default bandwidth part may be configured only for downlink. The default bandwidth part may be used as a bandwidth part to which an activated bandwidth part among a plurality of downlink bandwidth parts may fall back after a predetermined time. For example, a BWP inactivity timer may be configured for each cell or for each bandwidth part with an RRC message, and the timer is started or restarted when data transmission/reception occurs in an activated bandwidth part other than the default bandwidth part, or may be started or restarted when the activated bandwidth part is switched to another bandwidth part. When the timer expires, the UE may fall back or switch the downlink bandwidth part activated in the cell to the default bandwidth. As described above, switching may refer to a procedure of inactivating a currently activated bandwidth part and activating a bandwidth part indicated to be switched. The switching may be triggered by an RRC message, a MAC control element, or L1 signaling (DCI of PDCCH). As described above, the switching may be triggered to indicate a bandwidth part to be switched or activated, and the bandwidth part may be indicated by a bandwidth part identifier (e.g., 0, 1, 2, 3, or 4).

The reason why the default bandwidth part is applied and used only for downlink is that the base station may facilitate scheduling of the base station by causing the UE to fall back to the default bandwidth part after a predetermined time has elapsed for each cell to receive an instruction (e.g., DCI of PDCCH) from the base station. For example, if the base station configures the default bandwidth part of UEs accessing one cell as the initial bandwidth part, the base station may continue to perform the scheduling instruction only in the initial bandwidth part after a certain period of time. If the default bandwidth part is not configured in the RRC message, the initial bandwidth part may be regarded as a default bandwidth part, and fall back to the initial bandwidth part when the bandwidth part deactivation timer expires.

As another method, in order to increase the implementation freedom of the base station, a default bandwidth part even for the uplink may be defined and configured, and used like the default bandwidth part of the downlink.

As described above, the dormant BWP may mean a bandwidth part that is a dormant mode of an activated cell or a dormant BWP in an activated Scell, or when the dormant bandwidth part is activated, the UE may not transmit and receive data with the base station. As another method, the UE does not monitor the PDCCH to identify the indication of the base station, or does not transmit a pilot signal, but performs channel measurements, and may report the measurement results for the measured frequency/cell/channel periodically or when an event occurs according to the base station configuration. Therefore, since the UE does not monitor the PDCCH in the dormant BWP of the activated cell and does not transmit a pilot signal, battery life may be saved compared to the normal bandwidth part (or the bandwidth part that is not the dormant bandwidth part) of the activated cell or when the normal bandwidth part (or the bandwidth part that is not the dormant bandwidth part) of the activated cell is activated. In addition, since the UE performs the channel measurement report unlike when the cell is deactivated, the base station may quickly activate the normal bandwidth part of the activated cell based on the measurement report or the measurement report of the dormant bandwidth part of the activated cell so that the carrier aggregation technology may be used quickly, thereby reducing the transmission delay.

As described above, when the UE is indicated by the base station to switch the bandwidth part of the activated cell from the dormant bandwidth part to the normal bandwidth part (or the bandwidth part that is not the dormant bandwidth part) in a DCI of the PDCCH or MAC CE or RRC message when the bandwidth part of one activated cell of the UE is operated as the dormant bandwidth part or when the activated bandwidth part in the activated cell is the dormant bandwidth part or when the cell switches to the dormant bandwidth part, or when the UE is indicated to switch or convert the active bandwidth part to the normal bandwidth part in the dormant bandwidth part, or when the UE is instructed to switch or convert or activate the active bandwidth part to the normal bandwidth part (e.g., the first active bandwidth part that is activated from dormancy) in the dormant bandwidth part, the first active bandwidth part (or first active non-dormant bandwidth part) that is activated from the dormant state may be the first active bandwidth part being activated from dormancy configured in the RRC message.

In the disclosure, the meaning of switching the first bandwidth part to the second bandwidth part may be interpreted as the meaning of activating the second bandwidth part, or may be interpreted as meaning that the activated first bandwidth part is deactivated and the second bandwidth part is activated.

In addition, as described above, in the RRCSetup message for RRC connection setup, RRCResume message 1f-25, or RRCReconfiguration message 1f-45, a state transition timer may be configured so that the UE itself can perform the state transition even without receiving an indication through the RRC message, MAC control information, or the DCI on the PDCCH from the base station. For example, if the cell deactivation timer (ScellDeactivationTimer) is configured for each cell and the cell deactivation timer expires, the cell may be transitioned to a deactivate state.

In addition, as described above, in the RRCSetup message, the RRCResume message 1f-25, or the RRCReconfiguration message 1f-45 for RRC connection setup, frequency measurement configuration information and frequency measurement gap configuration information may be configured and frequency measurement object information may be included. In addition, as described above, in the RRCSetup message, the RRCResume message 1f-25, or the RRCReconfiguration message 1f-45 for the RRC connection setup, the power saving mode of the UE may be configured with the function of reducing power consumption, configuration information such as discontinuous reception (DRX) cycle, offset, on-duration period (a period in which the UE needs to monitor the PDCCH) or time information, or time information or short time period information on when monitoring or detecting the PDCCH from the base station before the on-duration period in the DRX cycle may be configured together with a function for reducing the power consumption. If the function for reducing the power consumption of the UE is configured as described above, the UE may set the DRX cycle and detect a wake-up signal (WUS) in the period configured to monitor the PDCCH of the base station before the on-duration period as described above, and with the DCI of the PDCCH of the WUS signal, the base station may indicate to the UE whether to skip (or not perform) or perform PDCCH monitoring in the immediately following on-duration period. Although the UE may always monitor the PDCCH in the on-duration period, the base station with the WUS signal as described above may instruct the UE not to monitor the PDCCH in the on-duration period to save battery consumption of the UE.

If the RRC connection configuration is completed as described above, the UE may configure a plurality of bandwidth parts according to the instruction configured with the RRC message. In addition, in order to save battery life, one or a small number of bandwidths among the plurality of configured bandwidth parts may be activated. For example, one bandwidth part to be activated may be indicated. In addition, the base station may instruct the switch to a new bandwidth part from the initial access bandwidth part by instructing activation of the bandwidth part with an RRC message or with MAC control information (MAC CE) or L1 signaling (PHY layer device control signal such as DCI of PDCCH). As another method, it is possible to define new bitmap information in the DCI of the PDCCH and indicate whether the normal bandwidth part (or bandwidth part that is not the dormant bandwidth part) is activated or whether the dormant bandwidth part is activated or whether the bandwidth part is deactivated. As another method, the bitmap may indicate whether to activate the normal bandwidth part (e.g., the first activation bandwidth part to be activated from dormancy) or the dormant bandwidth part or whether to switch to the dormant bandwidth part or switch the bandwidth part. Since there may be many other newly accessing users in the initial access bandwidth, it may be more advantageous to allocate a new bandwidth part and separately manage the connected users in terms of scheduling. This is because the initial access bandwidth part is not configured for each UE, but may be shared and used by all UEs. In addition, in order to reduce signaling overhead, a default bandwidth part may be dynamically indicated by the MAC control information, L1 signaling, or system information.

As described above, the RRC message (RRCSetup message or RRCResume message 1f-25 or RRCReconfiguration message 1f-70) may include configuration information for a cell group. The configuration information for the cell group may include some or a plurality of pieces information among pieces of information below, or may indicate, for the cell group, a state or a procedure or configuration information application or release for each cell group.
- Cell group identifier indicating cell group (e.g., cell group identifier or index)
- Indicator indicating state of cell group (e.g., active state or suspended state or inactive state)
- Indicator indicating state of cell group (e.g., indicator to suspend (or deactivate) cell group (e.g., Cellgroup (SCG) suspension indicator) or indicator to resume (or activate) cell group (e.g., Cellgroup (SCG) resumption indicator))
- Indicator (e.g., PDCP reestablishment indicator or PDCP data recovery indicator or indicator triggering new procedure or RLC reestablishment indicator or MAC layer device reset indicator or MAC layer device partial reset indicator) triggering procedure of corresponding protocol layer device (e.g., SDAP layer device or PDCP layer device or RLC layer device or MAC layer device) according to indicator indicating state of the cell group.
- In case that an indicator to suspend (or deactivate) the state of the cell group is included, second DRX configuration information (e.g., monitoring interval or active period (on-duration) length or period or offset) may be configured to perform PDCCH monitoring with a very long period in the PSCell of the cell group. For example, if the UE receives an indicator to suspend the cell group, the UE may perform PDCCH monitoring with a very long period by applying the second DRX configuration information, thereby reducing power consumption of the UE. As another method, if the UE receives an indicator to suspend the cell group, the UE may activate or switch the downlink BWP to the dormant BWP of the PSCell of the cell group by applying BWP configuration information of the PSCell of the cell group, and may perform a UE operation on the cell in which the dormant BWP is activated according to the disclosure. Further, if the UE receives an indicator to suspend the cell group, the UE may deactivate all SCells configured in the cell group. As another method, if the UE receives an indicator to suspend the cell group, the UE may activate or switch the downlink BWP to the dormant BWP for the SCell in which the dormant BWP is configured from among SCells configured in the cell group, and may perform a UE operation in the cell in which the dormant BWP is activated according to the disclosure, or may deactivate the SCell in which the dormant BWP is not configured. As another method, if the UE receives an indicator to suspend the cell group in the RRC message, the UE may perform activation, deactivation, hibernation, or dormant BWP activation on each SCell according to an indicator or configuration information for each SCell of the cell group included in the RRC message, or, alternatively, before or after the UE receives an indicator to suspend the cell group, the UE may perform activation or deactivation or hibernation or dormant BWP activation in each SCell of the cell group through the indicator (e.g., bitmap) of the PDCCH or the MAC control information or the RRC message.
- Configuration information about transmission resource for performing channel measurement and reporting a measurement result in dormant BWP or BWP other than dormant BWP (e.g., PUCCH transmission resource information of PCell or PUCCH SCell or PSCell).
- In case that an indicator to resume (or activate) the state of the cell group is included, first DRX configuration information (e.g., monitoring duration or active period (on-duration) length or period or offset) may be configured to re-perform PDCCH monitoring in the PSCell of the cell group. Further, the UE may recover and apply the first DRX configuration information that is stored for the cell group. For example, if the UE receives an indicator to resume the cell group, the UE may perform PDCCH monitoring by applying the first DRX configuration information that is received from the RRC message or that is stored to resume data transmission or reception. As another method, if the UE receives an indicator to resume the cell group, the UE may activate or switch the downlink BWP of the PSCell of the cell group to the BWP other than the dormant BWP (e.g., BWP configured by the RRC message) by applying BWP configuration information of the PSCell of the cell group, and may perform a UE operation in the cell in which the normal BWP (BWP other than the dormant BWP) is activated proposed in the disclosure. Further, if the UE receives an indicator to resume the cell group, the UE may trigger a random access procedure in the PSCell of the cell group by applying random access configuration information (random access transmission resource information for preamble transmission (time or frequency transmission resource) or designated preamble information) that is received from the RRC message or that is stored. As another method, when the UE receives an indicator to resume the cell group, if random access configuration information (random access transmission resource information for preamble transmission (time or frequency transmission resource) or designated preamble information) is included in the RRC message, the UE may trigger a random access procedure (e.g., contention-free random access procedure) in the PSCell of the cell group by applying the random access configuration information, and if random access configuration information (random access transmission resource information for preamble transmission (time or frequency transmission resource) or designated preamble information) is not included in the RRC message indicating to resume or activate the cell group, the UE may trigger a random access procedure (e.g., contention-based random access procedure) in the PSCell of the cell group, or may trigger a random access procedure (contention-based random access or 2-step random access) based on system information. If there is random access configuration information (random access transmission resource information for preamble transmission (time or frequency transmission resource) or designated preamble information) that is stored in the UE before an indicator to resume the cell group is received, the UE may release or discard the random access configuration information. As another method, the UE may perform PDCCH monitoring in the indicated or configured cell group or cell, and may trigger and perform a random access procedure according to an indication indicated in the PDCCH.
- In case that an indicator to resume (or activate) the state of the cell group is included, or if the UE receives an indicator to resume the cell group, the UE may activate all SCells configured in the cell group. As another method, if the UE receives an indicator to resume the cell group, the UE may activate or switch the downlink BWP to the BWP other than the dormant BWP (e.g., BWP configured by the RRC message or the first active BWP) for the SCell in which the dormant BWP is configured among SCells configured in the cell group, and may perform a UE operation in the cell in which the BWP other than the dormant BWP is activated proposed in the disclosure, or may activate the SCell in which the dormant BWP is not configured. As another method, if the UE receives an indicator to resume the cell group in the RRC message, the UE may perform activation or deactivation or hibernation or dormant BWP activation in each SCell according to an indicator or configuration information for each SCell of the cell group included in the RRC message, and alternatively, before or after the UE receives an indicator to resume the cell group, the UE may perform activation or deactivation or hibernation or dormant BWP activation on each SCell of the cell group through the indicator (e.g., bitmap) of the PDCCH or the MAC control information or the RRC message.
- Indicator to add cell group configuration
- Indicator to release cell group configuration
- Security configuration information (security key information or security key information for cell group or additional information (e.g., sk-counter))
- Indicator indicating handover or cell group addition or cell group modification (e.g., ReconfigurationWithSync indicator or mobilitycontrolInfo indicator)
- First channel measurement configuration information for each cell or each BWP
- Second channel measurement configuration information for each cell or each BWP
- Indicator indicating addition of cell group configuration or an indicator (ReconfigurationWithSync) indicating cell group modification or an indicator (ReconfigurationWithSync or newly defined indicator) indicating a random access procedure
- Indicator (ReconfigurationWithSync or newly defined indicator) indicating whether to activate a cell group by performing a random access procedure or to activate the cell group without the random access procedure when the cell group is activated
- Radio resource management (RRM) configuration information or frequency measurement configuration information or separate radio resource management (RRM) configuration information to be applied or performed when a cell group is deactivated or frequency measurement configuration information (e.g., frequency measurement configuration information (reduced or relaxed RRM configuration information simplified for reduction of battery power consumption))
- Configuration information for radio link monitoring (RLM) or configuration information for RLM to be applied or performed when a cell group is deactivated. For example, the configuration information for RLM or the configuration information for RLM to be applied or performed may correspond to configuration information of a beam for each cell or each BWP, which should be measured by the UE when the cell group is deactivated, and may include beam related configuration information (transmission configuration information (TCI) state or quasi co-location (QCL)), or may include a timing advance (TA) value (or offset value) for synchronization of a downlink signal of the base station or synchronization of an uplink signal of the base station or a timer (time alignment timer (TAT) indicating validity of the TA value or a timer value (TAT value), or may include synchronization signal block (SSB) configuration information or channel state information reference signal (CSI-RS) configuration information or reference signal (RS) configuration information to be measured or transmission resource information (e.g., PUCCH configuration information (e.g., scheduling request (SR) information or specific transmission resource) or frequency transmission resource or time transmission resource) on which the result can be reported when a beam failure occurs. Further, the configuration information may include BWP configuration information (e.g., which may be indicated as a BWP identifier) indicating in what BWP an RLM procedure is to be performed. As another method, when a cell group is in an inactivate state, the UE may perform the RLM procedure in a first active BWP (or first active downlink BWP, firstActiveDownlinkBWP-ID) configured by the RRC message, so that the first active BWP to be activated when the cell group is activated is made to be early monitored and thus cell group activation latency is minimized. As another method, in case that the cell group state is configured as an inactive state (or active state), the UE may perform the RLM procedure in the BWP that was last (or previously) activated before the cell group is deactivated, so that the connected state with the cell group may be continuously maintained (e.g., in case that the BWP configuration information indicating in what BWP the RLM procedure is to be performed is not configured), or when the UE activates the cell group, the UE may perform an activation procedure in the first active BWP (or first active downlink BWP, firstActiveDownlinkBWP-ID) configured by the RRC message. If the BWP related configuration information indicating in what BWP the RLM procedure is to be performed is not configured when the cell group is activated, the UE may perform the RLM procedure in the BWP that was last (or previously) activated. Further, the configuration information may include beam related configuration information (e.g., which may be indicated as a BWP identifier or TCI state or QCL configuration information) indicating in what beam the RLM procedure is to be performed. As another method, when the cell group is in an inactive state, the UE may perform the RLM procedure on a beam (e.g., TCI state or QCL configuration information) configured by the RRC message or may perform the RLM procedure by activating the beam, and may early monitor the beam to be activated when the cell group is activated, so that cell group activation latency can be minimized. As another method, in case that the cell group state is configured as an inactive state (or an active state), the UE may perform the RLM procedure on a beam that was last (or previously) activated before the cell group is deactivated, so that the connected state with the cell group may be continuously maintained (e.g., in case that the beam related configuration information indicating on what beam the RLM procedure is to be performed is not configured), or when the UE activates the cell group, the UE may perform an activation procedure on the beam configured by the RRC message. If the beam related configuration information indicating on what beam the RLM procedure is to be performed is not configured when the cell group is activated, the UE may perform the RLM procedure on the beam that was last (or previously) activated.
- Configuration information for a beam failure detection (BFD) procedure or BFD or configuration information for BFD to be applied or performed to deactivate a cell group. For example, the configuration information for BFD or the configuration information for BFD to be applied or performed may correspond to configuration information of a beam for each cell or each BWP, which should be measured by the UE when the cell group is deactivated, and may include beam related configuration information (transmission configuration information (TCI) state or quasi co-location (QCL)), or may include a timing advance (TA) value (or offset value) for synchronization of a downlink signal of the base station or synchronization of an uplink signal of the base station or a timer (time alignment timer (TAT) indicating validity of the TA value or a timer value (TAT value), or may include synchronization signal block (SSB) configuration information or channel state information reference signal (CSI-RS) configuration information or reference signal (RS) configuration information to be measured or transmission resource information (e.g., PUCCH configuration information (e.g., scheduling request (SR) information or specific transmission resource) or frequency transmission resource or time transmission resource) on which the result can be reported when a beam failure occurs. Further, the configuration information may include BWP configuration information (e.g., which may be indicated as a BWP identifier) indicating in what BWP a beam failure detection procedure is to be performed. As another method, when a cell group is in an inactivate state, the UE may perform the Beam failure detection procedure in a first active BWP (or first active downlink BWP, firstActiveDownlinkBWP-ID) configured by the RRC message, so that the first active BWP to be activated when the cell group is activated is made to be early monitored and thus cell group activation latency is minimized. As another method, in case that the cell group state is configured as an inactive state (or active state), the UE may perform the Beam failure detection procedure in the BWP that was last (or previously) activated before the cell group is deactivated, so that the connected state with the cell group may be continuously maintained (e.g., in case that the BWP configuration information indicating in what BWP the Beam failure detection procedure is to be performed is not configured), or when the UE activates the cell group, the UE may perform an activation procedure in the first active BWP (or first active downlink BWP, firstActiveDownlinkBWP-ID) configured by the RRC message. If the BWP related configuration information indicating in what BWP the Beam failure detection procedure is to be performed is not configured when the cell group is activated, the UE may perform the Beam failure detection procedure in the BWP that was last (or previously) activated. Further, the configuration information may include beam related configuration information (e.g., which may be indicated as a BWP identifier or TCI state or QCL configuration information) indicating in what beam the Beam failure detection procedure is to be performed. As another method, when the cell group is in an inactive state, the UE may perform the Beam failure detection procedure on a beam (e.g., TCI state or QCL configuration information) configured by the RRC message, and may early monitor the beam to be activated when the cell group is activated, so that cell group activation latency can be minimized. As another method, in case that the cell group state is configured as an inactive state (or an active state), the UE may perform the Beam failure detection procedure on a beam that was last (or previously) activated before the cell group is deactivated, so that the connected state with the cell group may be continuously maintained (e.g., in case that the beam related configuration information indicating on what beam the Beam failure detection procedure is to be performed is not configured), or when the UE activates the cell group, the UE may perform an activation procedure on the beam configured by the RRC message. If the beam related configuration information indicating on what beam the Beam failure detection procedure is to be performed is not configured when the cell group is activated, the UE may perform the Beam failure detection procedure on the beam that was last (or previously) activated.
- In order to efficiently perform a dual connectivity configuration procedure (or an SCG configuration procedure) or a handover procedure, a first timer (e.g., T304) or a second timer (e.g., T310) or a third timer (e.g., T312) or a fourth timer (e.g., timer for fallback) may be introduced and configured in the message. It is proposed that the timers are driven and applied in the dual connectivity configuration procedure or the handover procedure. The first timer (e.g., T304) is a timer for determining whether the dual connectivity configuration procedure or the handover procedure is successfully performed, the second timer (e.g., T310) is a timer for determining whether radio link is valid, and the third timer (e.g., T312) is an auxiliary timer for determining whether the radio link is valid and is a timer for triggering a frequency measurement procedure and reporting the frequency measurement result. In case that the activation of the cell group (or SCG or PSCell) without a random access procedure proposed in the disclosure has failed (i.e., in case that the timer is expired), the fourth timer (e.g., timer for fallback) is introduced to attempt the activation of the cell group by performing a fallback procedure as a random access procedure (normal random access procedure (4-step random access procedure or 2-step random access procedure)). The fourth timer may be the first timer, and the first timer may be used as the timer for fallback.

It is proposed that, in case that the RRC message (e.g., RRCReconfiguration message) includes an indicator for suspending (or deactivating) the cell group, an indicator indicating handover or cell group addition or cell group modification (e.g., ReconfigurationWithSync indicator or mobilitycontrolInfo indicator) is not included, and in case that the RRC message includes an indicator for resuming the cell group or configuration information for configuration, an indicator indicating handover or cell group addition or cell group modification (e.g., ReconfigurationWithSync indicator or mobilitycontrolInfo indicator) is included. This is because, in case of resuming the cell group, a connection to the cell group should be re-performed, and thus synchronization should be performed or system information should be received, or a random access procedure should be performed if necessary. For example, in case that the base station configures, by the RRC message, the cell group of the UE to be in an inactive state, the base station may allow the UE not to perform unnecessary synchronization procedure or connection procedure or random access procedure by restricting from configuring a cell group addition indicator or a cell group modification indicator or an indicator indicating a random access procedure or a ReconfigurationWithSync indicator together.

Hereinafter, a dormant BWP in a next-generation mobile communication system is newly proposed, and a UE operation in each BWP when each BWP is transitioned or switched will now be proposed in detail.

FIG. 1G is a diagram illustrating a state transition for each bandwidth part or a bandwidth part switching procedure proposed in the disclosure.

With reference to FIG. 1G, a BWP of each cell (e.g., SCell or PSCell) of each cell group of a UE may be activated to a normal BWP 1g-01 or may be activated to a dormant BWP 1g-02 or may be deactivated 1g-03, and the normal BWP or the dormant BWP may be activated or deactivated by an indication according to configuration information of an RRC message or MAC control information or DCI of PDCCH.

As proposed in the disclosure, a state transition operation (activation or deactivation or hibernation) for each BWP of the cell or an operation of activating the normal BWP or activating the dormant BWP or activating the first active BWP being activated from dormancy or deactivating the normal BWP or the dormant BWP may be performed through an indication or configuration of one of the following cases.
- If the BWP state of the cell is configured by the RRC message, or if the BWP of each cell is configured by the RRC message and the dormant BWP is configured in the cell, or if the first active BWP is configured as the dormant BWP, the UE may start the cell by switching the cell with the dormant BWP or activating the dormant BWP, and may perform an operation in the dormant BWP.
- In case that the cell activation or deactivation or hibernation MAC CE is received,
- In case that the MAC CE indicating to activate or deactivate the normal BWP or the first active BWP activated from dormancy or the dormant BWP is received,
- In case that the DCI of the PDCCH indicating to activate or deactivate or switch the normal BWP or the first active BWP activated from dormancy or the dormant BWP is received,
- In case that a cell hibernation timer is not configured in the active cell and a configured cell deactivation timer expires,
- In case that the BWP hibernation timer is not configured in the active BWP and a configured BWP state inactivity timer (e.g., bwpInactivityTimer) expires,

The state transition operation or a dormant BWP operation method proposed in the disclosure may have the following characteristics.
- The dormant BWP is unable to be configured in the Spcell (Pcell or Pscell) (or downlink BWP or uplink BWP of the cell), and only the normal BWP may be configured to be always activated. As the Spcell synchronizes and transmits and receives a main control signal, the Spcell should always be maintained in the active state because a connection with a base station is disconnected if the BWP of the Spcell is hibernated or deactivated or is operated as the dormant BWP.
- If a PUCCH is configured for the Scell or for the BWP of the SCell, the dormant state or the dormant BWP is unable to be configured. Because there may be another cell to which a feedback, such as HARQ ACK/NACK, should be transmitted on the PUCCH, the active state or the normal BWP should be activated and used.
- Due to such characteristics, a cell deactivation timer (ScellDeactivationTimer) or the BWP hibernation timer may not be applied to the Spcell or the BWP of the Spcell, or the Scell or the BWP of the SCell for which the PUCCH is configured, and may be driven only for other SCells.
- A cell or BWP hibernation timer (ScellHibernationTimer) may be prioritized over a cell or BWP state deactivation timer (ScellDeactivationTimer). Further, if one value is set by the RRC message as a timer value, the same value may be applied to all the cells. As another method, the base station may set a different timer value for each SCell or each BWP in consideration of the characteristics for each SCell or for each BWP.

Basically, the cell or the BWP may initially operate in the inactive state if it is not indicated as active or dormant in the RRC message.

In the disclosure, an uplink may indicate an uplink BWP, and a downlink may indicate a downlink BWP. This is because only one activated or hibernated BWP can operate for each uplink or each downlink.

In the disclosure, when an active state or an inactive state or a dormant state is operated and a cell or BWP transition or switching is performed, it may be performed in the unit of BWP, and when the state transition or switching occurs in the unit of BWP, a BWP (downlink BWP or uplink BWP) in which a state transition or switching is indicated may perform the state transition or switching according to a state transition or switching indication. For example, if the BWP (downlink BWP or uplink BWP) is transitioned from the active state to the dormant state or is switched (or activated) to the dormant BWP, the BWP may be transitioned to the dormant state, or may be switched (or activated) to the dormant BWP.

In the disclosure, "BWP switching" may mean that if switching is indicated by a BWP identifier while allocating a downlink assignment when the BWP switching is indicated by the DCI of the PDCCH, the downlink BWP is switched to the BWP indicated by the BWP identifier, and if the switching is indicated by the BWP identifier while allocating an uplink grant when the BWP switching is indicated by the DCI of the PDCCH, the uplink BWP is switched to the BWP indicated by the BWP identifier. Further, because the DCI format of the PDCCH varies between the format for downlink assignment (format1) and the format for uplink grant (format0), the UE may operate according to the DCI format even though the uplink and the downlink are not separately described.

The method for operating the state transition in the unit of a bandwidth part (BWP) level and a BWP operation according to each state, being proposed in the disclosure, may be extended and applied to various embodiments. Hereinafter, embodiments to which the contents proposed in the disclosure are extended and applied will now be described.

FIG. 1H is a diagram illustrating a method for configuring or operating discontinuous reception (DRX) for reduction of battery power consumption of a UE proposed in the disclosure.

In FIG. 1H, a base station may configure, by an RRC message for the UE, a DRX mode, such as a DRX cycle or start point or offset or on-duration (active time), for a PCell or an SCell or a PSCell as shown in FIG. 1F. In the disclosure, it is considered that the DRX mode is configured for the PCell or the SpCell or the PSCell.

If the DRX mode is configured for the PCell (or the SpCell or the PSCell) as described above, the UE may apply the DRX mode in consideration of a DRX cycle 1h-03 or a DRX start time or offset. When the DRX mode is applied as described above, the UE may monitor a PDCCH or DCI of the PDCCH which can be received on the PCell from the base station only in on-duration (or active time) 1h-01 of the DRX. Further, in an outside active time 1h-02 of the DRX mode, the UE does not monitor the PDCCH or the DCI of the PDCCH, and thus can reduce battery power consumption.

In FIG. 1F, in order to further improve reduction of the battery power consumption of the UE, the base station may configure, by an RRC message, a power saving mode for the UE. If the power saving mode is configured together with the DRX mode, the UE monitors the PDCCH in the outside active time 1h-02 during a short time duration 1h-04 configured by the RRC message before the active time 1h-01 in which the UE is to monitor the PDCCH in the DRX mode, and in the outside active time 1h-02, the UE monitors and receives a wakeup signal (WUS). With a bit of the DCI of the PDCCH of the WUS, the base station may indicate whether the UE has to perform PDCCH monitoring or does not have to perform the PDCCH monitoring in the next active time 1h-05 or 1h-07.

That is, the UE configured with the power saving mode or the DRX mode may monitor the WUS during the short time duration 1h-04 configured by the RRC message for each active time 1h-05, and if the value of the bit of the DCI of the PDCCH which is related to the next on-duration 1h-05 or 1h-07 has 0 (or 1) in the received WUS, the UE may be indicated not to monitor the PDCCH in the next on-duration 1h-07, or may be indicated not to monitor the PDCCH by making a MAC layer device not drive a timer corresponding to the next on-duration. If the value of the bit of the DCI of the PDCCH which is related to the next on-duration 1h-05 or 1h-07 has 1 (or 0) in the received WUS signal, the UE may be indicated to monitor the PDCCH in the next on-duration 1h-05 or may be indicated to monitor the PDCCH by making the MAC layer device drive the timer corresponding to the next on-duration.

Further, the UE may not monitor the WUS or the PDCCH for detecting the WUS in the on-duration.

Further, when the UE configured with the power saving mode or the DRX mode monitors the WUS during the short time duration 1h-04 configured by the RRC message before every on-duration 1h-05, the UE may detect a signal by identifying the PDCCH by a first RNTI identifier (e.g., PS-RNTI). The first RNTI identifier (e.g., PS-RNTI) may be configured for a plurality of UEs, and the base station may simultaneously indicate, by using the first RNTI identifier (e.g., PS-RNTI), whether or not the plurality of UEs perform monitoring of the PDCCH in the next on-duration.

Further, when the UE configured with the power saving mode or the DRX mode monitors and detects the PDCCH in the on-duration 1h-05, the UE may detect a signal based on a second RNTI (e.g., C-RNTI) or a third RNTI (e.g., MCS-C-RNTI) or a fourth RNTI (SPS-C-RNTI or CS-RNTI), being uniquely configured for the UE by the RRC message. The second RNTI (e.g., C-RNTI) may be used to indicate normal scheduling for the UE, the third RNTI (e.g., MCS-C-RNTI) may be used to indicate a modulation and coding scheme of the UE, and the fourth RNTI (SPS-C-RNTI or CS-RNTI) may be used to indicate a periodic transmission resource of the UE.

Based on the method proposed with reference to FIG. 1H, the base station may indicate, by the DCI of the PDCCH, to activate or deactivate or hibernate the state of the cell or the cell group of the UE in the on-duration 1h-05 or the short time duration 1h-04 which is configured by the RRC message. Further, the UE may perform a PDCCH monitoring procedure to receive an indication of the state of the cell or the cell group in the on-duration 1h-05 or the short time duration 1h-04, being configured by the RRC message. If dual connectivity is configured for the UE, the UE may monitor the PDCCH on the PCell of the master cell group during the on-duration 1h-05 or the short time duration 1h-04, being configured by the RRC message, and the DCI of the PDCCH may receive an indication indicating the state of activation or deactivation or hibernation with respect to the cell (SCell) of the master cell group or the PSCell (or SCell) of an SCG, and thus, the UE may perform an activation procedure or deactivation procedure or hibernation procedure or BWP switching procedure of the cell (or the BWP). That is, the base station may indicate, to the UE, the state of activation or deactivation or hibernation with respect to the cell (SCell) of the master cell group or the PSCell (or SCell) of the SCG by the DCI of the PDCCH in the PCell of the master cell group during the on-duration 1h-05 or the short time duration 1h-04 which is configured by the RRC message.

FIG. 1I is a diagram illustrating a method for operating a dormant bandwidth part in an activated SCell or PSCell proposed in the disclosure.

As illustrated in FIG. 1F, the base station may configure, by an RRC message, a plurality of SCells for carrier aggregation and may allocate respective SCell identifiers for the UE, and may configure a dormant BWP for each SCell or may configure a plurality of cell groups for dual connectivity and may allocate cell group identifiers, or may configure or indicate a cell group suspension indicator and configure a dormant BWP with respect to each cell group or a PSCell of each cell group. Further, the base station may configure the UE with a plurality of SCells included in each SCell group, and one SCell group may include a plurality of SCells. As described above, SCell group identifiers may be allocated to SCell groups, and the plurality of SCell identifiers may be configured to be included in or mapped onto the SCell group identifiers, respectively. An Scell identifier value or an SCell group identifier value may be allocated as a predetermined bit value and may have an integer value (or a natural value). Alternatively, a PSCell of each cell group may be indicated by a cell group identifier.

In FIG. 1I, the base station may define a new bitmap in DCI of a PDCCH to be transmitted in a PCell, and may perform mapping so that each bit value of the bitmap may indicate each SCell identifier value or each SCell group identifier value or cell group (or secondary cell group) identifier or a PSCell (or an SCell) of a cell group (or a secondary cell group), and the base station may indicate, by defining each bit value, whether to switch to a dormant BWP or activate a dormant BWP with respect to an SCell or SCells included in an SCell group or a cell group (or a secondary cell group) or a PSCell (or an SCell) of the cell group (or the secondary cell group) which corresponds to the bit or whether to suspend or resume the cell group. Further, the base station may indicate whether to switch the dormant BWP to a normal BWP (e.g., a first active BWP activated from hibernation) or to activate a normal BWP (e.g., a first active BWP activated from hibernation) with respect to an SCell or SCells included in an SCell group or a cell group (or secondary cell group) identifier or a PSCell (or an SCell) of the cell group (or the secondary cell group) which corresponds to the bit.

In FIG. 1I, after the UE receives the DCI of the PDCCH in a PCell 1i-01, the UE may detect, by reading the DCI, whether there is a bitmap including an indication (e.g., switching or activation to a dormant BWP or switching or activation to a normal BWP) about a BWP of an SCell or SCell groups or an indication of suspension or resumption of a cell group (or a secondary cell group) or a PSCell (or an SCell) of the cell group (or the secondary cell group), and if there is the bitmap, the UE may switch or activate a BWP or suspend or resume a cell group according to a bit value with respect to an SCell or SCells 1i-02 or 1i-03 included in an SCell group or a cell group (or a secondary cell group) or a PSCell (or an SCell) of the cell group (or the secondary cell group) which is indicated by each bit of the bitmap. For example, if the bit of the bitmap indicates a first SCell (or a first SCell identifier) 1i-02 or the cell group (or the secondary cell group) or the PSCell (or the SCell) of the cell group (or the secondary cell group) or if the bit indicates an SCell group (or an SCell group identifier) including the first SCell and has a value of 0 (or 1), the UE may activate a BWP 1i-21 to a dormant BWP 1i-22 or may switch a current BWP to the dormant BWP 1i-22 or in case that the current BWP is not a dormant BWP, the UE may switch or activate the currently activated BWP 1i-21 to the dormant BWP li-22 (1i-25), or may suspend or deactivate the cell group, with respect to the first SCell 1i-02 or the cell group (or the secondary cell group) or the PSCell (or the SCell) of the cell group (or the secondary cell group). As another method, the UE may changelessly maintain the BWP of the cell group (or the secondary cell group) or the PSCell (or the SCell) of the cell group (or the secondary cell group), may apply second DRX configuration information or second SRS configuration information which is proposed in the disclosure, and may perform PDCCH monitoring with a long period or may perform SRS transmission with a long period, thereby reducing power consumption of the UE.

In FIG. 1I, after the UE receives the DCI of the PDCCH in a PCell 1i-01, the UE may detect, by reading the DCI, whether there is a bitmap including an indication (e.g., switching or activation to a dormant BWP or switching or activation to a normal BWP) about a BWP of an SCell or SCell groups or an indication on the BWP of the PSCell (or SCell) of the cell group (or secondary cell group) or an indication to suspend or resume the cell group, and if there is the bitmap, the UE may switch or activate a BWP or suspend or resume a cell group according to a bit value with respect to an SCell or SCells 1i-02 or 1i-03 included in an SCell group or a cell group (or a secondary cell group) or a PSCell (or an SCell) of the cell group (or the secondary cell group) which is indicated by each bit of the bitmap. For example, if the bit of the bitmap indicates a second SCell (or a second SCell identifier) 1i-03 or indicates an SCell group (or an SCell group identifier) including the second SCell or the cell group (or the secondary cell group) or the PSCell (or the SCell) of the cell group (or the secondary cell group) and has a value of 1 (or 0), if a current-active BWP for the second SCell 1 i- 03 is a dormant BWP 1i-32 or the current-active BWP is not a normal BWP or a current BWP (or cell) is activated and the current BWP is activated as the dormant BWP 1i-32 (or is activated as a BWP other than a normal BWP), the UE may switch or activate a BWP of the second SCell 1i-03 to a BWP (e.g., a first active BWP 1i-33 activated from hibernation) configured by an RRC message (1i-35) or may resume or activate the cell group. As described above, in case that the bit value is 1 (or 0), and thus, the UE has to switch or activate to a non-dormant BWP or to resume a cell group with respect to an SCell or SCells included in an SCell group or the cell group (or a secondary cell group) or a PSCell (or an SCell) of the cell group (or the secondary cell group which is indicated by the bit, the UE may not apply or may ignore or may not read the bit value with respect to the SCell or each SCell included in the SCell group if a state of the Scell is an inactive state or if a state of the Scell is an active state and an activated BWP is not a dormant BWP (or is a normal BWP). Further, in case that the cell group (or the secondary cell group) or the PSCell (or the SCell) of the cell group (or the secondary cell group) is already in an active state or a resumed state, the UE may not apply or may ignore or may not read the bit value. Also, a bit value is 0 (or 1), and thus, the UE has to switch or activate to a dormant BWP or to suspend a cell group with respect to an SCell or SCells included in an SCell group or the cell group (or a secondary cell group) or a PSCell (or an SCell) of the cell group (or the secondary cell group which is indicated by the bit, the UE may not apply or may ignore or may not read the bit value with respect to the SCell or each SCell included in the SCell group if the state of the Scell is an active state and an activated BWP is a dormant BWP, or if the cell group (or the secondary cell group) or the PSCell (or the SCell) of the cell group (or the secondary cell group) is already in a suspended state or an inactive state, the UE may not apply or may ignore or may not read the bit value.

Hereinafter, methods of quickly activating a cell (SCell or PSCell or SCell) are proposed.

Specifically, the base station may configure first channel measurement configuration information for quickly measuring and reporting the channel when the UE activates the cell in the RRC message (RRCReconfiguraion or RRCResume). In order for the base station to transmit the channel measurement signal temporarily much or frequently so as to quickly perform the channel measurement in the cell through the configuration information of the cell (e.g., PCell or PSCell or SCell) of the cell group for quick activation of the cell or the cell group, the first channel measurement configuration information may include configuration information, such as periods for frequent channel measurement signals (e.g., radio resource, reference signal, temporary reference signal (TRS), synchronization signal block (SSB), channel state information reference signal (CSI-RS), or reference signal (RS)), transmission resource information being transmitted (frequency where the frequent channel measurement signals are transmitted or time transmission resource), an interval or a count (the number of times of transmission of the frequent channel measurement signals), a timer value (time for transmission of the frequent channel measurement signal), a time interval (interval at which the frequent channel measurement signals are transmitted (e.g., an offset of the time unit (slot or subframe or symbol))), or configuration information, such as a transmission resource, a period, an interval, the timing, or an offset, for which the UE should report the measurement result. As described above, the first channel measurement configuration information may be featured to shorten the report period (or transmission resource) in which the UE can report the channel measurement result and to configure the transmission resource for the channel measurement so that the base station can much or frequently transmit many channel measurement signals (or transmission resources (e.g., radio resources, reference signals, or temporary reference signals (TRS)) in order for the base station to support the quick channel measurement or many signal measurements of the UE. As described above, the first channel measurement configuration information may include configuration information about the channel measurement signal of the base station for a specific UE (or UEs) in the cell or the bandwidth part. Further, the first channel measurement configuration information may be differently configured for each cell or bandwidth part with respect to a plurality of cells or bandwidth parts being configured through the RRC message, and may be configured together with beam-related configuration information (e.g., transmission configuration indication (TCI) state or quasi co-location (QCL)), such as a beam direction, a beam number, or a beam location, in order to support the UE to easily measure the transmission resource for the channel measurement. Further, the first channel measurement configuration information may include a timing advance (TA) value (or an offset value) for synchronization with a downlink signal or an uplink signal of the base station, or a time alignment timer (TAT) indicating effectiveness of the TA value or a TAT value, and by configuring the above-described timer value (TAT value), the first channel measurement configuration information may enable the UE to correctly perform the channel measurement or the channel measurement report. For example, the first channel measurement configuration information may include a period of the channel measurement signal, the number of times of transmitted signals, a signal transmission period, an offset for a signal transmission time, a time duration between transmitted signals, a list of a plurality of channel measurement signals that can be transmitted, a time transmission resource (or frequency transmission resource) representing the location of the transmitted signal, a transmission resource (time transmission resource or frequency transmission resource) to report the measurement result, a period to report the measurement result, or beam-related configuration information (e.g., transmission configuration indication (TCI) state or quasi co-location (QCL)) for measurement of the channel measurement signals. Further, the first channel measurement configuration information configured through the RRC message as described above may include a plurality of pieces of channel measurement signal information, and the first channel measurement configuration information may enable the UE to perform the channel measurement or the channel measurement report by applying or using the indicated channel measurement signal information or beam configuration information through indication of one of the plurality of pieces of channel measurement signal information or the beam configuration information that is configured as above through the RRC message, the MAC CE, or the DCI. The above indication method may define mapping of a bitmap, an index, or an identifier onto the channel measurement signal information configured as above, and may indicate the same based on this. As another method, the UE may be enabled to perform the channel measurement or the channel measurement report by applying or using the configured (or indicated) channel measurement signal information through configuration or indication of the channel measurement signal information through the RRC message or the MAC CE.

As still another method, in case that the RRC message indicates to activate the cell through the RRC message through configuration of the cell in the activated state when the RRC message including the first channel measurement configuration information is configured to the UE, the cell may be quickly activated through quick measurement or report of the channel by applying or using the first channel measurement configuration information. For example, in case that the first channel measurement configuration information that can be applied when the RRC message indicates to activate the cell through the RRC message through configuration of the cell in the activated state, the channel measurement signal information, or the beam-related configuration information is configured as separate configuration information (default configuration) in the RRC message, or in case that channel measurement signal information (or beam-related configuration information) corresponding to identifier 0 or only one piece of channel measurement signal information (or beam-related configuration information) may be applied.

The first channel measurement configuration information proposed in the disclosure can be configured only with respect to the downlink bandwidth part configuration information of each cell. That is, the first channel measurement configuration information proposed in the disclosure may not be configured with respect to the uplink bandwidth part configuration information of each cell. This is because the UE should first measure the channel with respect to the downlink in order for the UE to correctly receive a PDCCH and to follow the indication of the base station after reporting the measurement result for the channel or the cell.

The first channel measurement configuration information proposed in the disclosure may be featured to be initially deactivated when being configured through the RRC message or after a handover, and thereafter, the first channel measurement configuration information may be activated by MAC control information proposed in the disclosure, DCI information of the PDCCH, or the RRC message. In case that the first channel measurement configuration information is configured through the RRC message, the initial state of the first channel measurement configuration information should be a deactivated state in order for the base station to easily manage the UE cell state or channel measurement performing procedure and to correctly determine the timing in which when and how the UE performs the channel measurement without the problem of the processing delay of the RRC message.

Further, second channel measurement configuration information may be included or configured in the RRC message (RRCReconfiguration or RRCResume). The second channel measurement configuration information may include general channel measurement configuration information, such as the transmission resource of the channel measurement signal, the period, the time interval, the number of times, the transmission resource for the channel measurement report, the period, or the time interval.

Hereinafter, as proposed above, the disclosure proposes a structure of a MAC control element or an indication method that can quickly measure the channel based on the first channel measurement configuration information while activating the cell when the first channel measurement configuration information or the second channel measurement configuration information is configured to the UE through the RRC message as proposed above, report the measurement result, or quickly activate the cell. For example, the MAC control element (or RRC message) proposed in the disclosure may indicate which cell is activated or deactivated among the plurality of cells (SCells) configured through the RRC, or in case of indicating which cell is activated, the MAC control element (or RRC message) may indicate which measurement signal information of the first channel measurement configuration information configured through the RRC message is applied, how the signal is measured (e.g., how many times the signal transmission resource is measured, how many signals are transmitted, at which time interval the measurement is performed, based on which offset the measurement time interval is determined, in which period the signal is measured, or on which transmission resource the signal is measured may be indicated), or how to report the measurement result (e.g., how many times the measurement result is reported, at which time interval the measurement result is reported, based on which offset the measurement result report transmission resource is determined, in which period the measurement result is reported, or on which transmission resource the measurement result is reported may be indicated), and thus can quickly activate the cell based on the first channel measurement configuration information configured through the RRC message.

FIG. 1J is a diagram illustrating an embodiment in which embodiments proposed in the disclosure are expanded and applied to a UE in an RRC deactivated mode.

In the disclosure, the cell group or the cell may indicate a PCell of a master cell group (MCG), an SCell of the MCG, a PSCell of a secondary cell group (SCG), or an SCell of the SCG.

In the embodiment, it is proposed that, even if the UE in an RRC connected mode is transitioned to an RRC inactive mode, the UE may not release or discard but may continuously store a plurality of pieces of SCell configuration information (e.g., a plurality of pieces of configuration information described or proposed with reference to FIG. 1F) or a plurality of pieces of PSCell (or SCell) configuration information of a cell group (e.g., secondary cell group) which are configured or stored for the proposed embodiments as in FIG. 1F. Further, it is proposed that, when an RRC connection resume procedure is performed, the UE in the RRC inactive mode may determine, by an indicator of an RRCResume message or an RRCReconfiguration message transmitted by a base station or through a reconfiguration procedure, whether to discard or release, or maintain and apply, or reconfigure the SCell configuration information (e.g., configuration information described or proposed with reference to FIG. 1F) or the PSCell (or SCell) configuration information of the cell group (e.g., secondary cell group) stored in the UE. Also, when the base station transmits, to the UE, an RRCRelease message including a configuration or an indicator to transition the UE to the RRC inactive mode, the base station may transmit, to the UE, the RRCRelease message including an indicator or configuration information indicating whether to discard or release, or maintain and apply, or reconfigure the SCell configuration information (e.g., configuration information described or proposed with reference to FIG. 1F) or the PSCell (or SCell) configuration information of the cell group (e.g., SCG) stored in the UE. Further, the UE in the RRC inactive mode may move, and when RAN notification area (RNA) updating is performed, through the RRCRelease message transmitted by the base station to the UE, the UE may receive and apply the indicator or the configuration information indicating whether to discard or release, or maintain and apply, or reconfigure the SCell configuration information (e.g., configuration information described or proposed with reference to FIG. 1F) or the PSCell (or SCell) configuration information of the cell group (e.g., SCG) stored in the UE.

In an embodiment proposed in the disclosure, in the SCell configuration information (e.g., configuration information described or proposed with reference to FIG. 1F) and the PSCell (or SCell) configuration information of the cell group (e.g., secondary cell group) of the RRC message, the base station may allow a first active BWP of downlink or uplink BWP configuration information of each cell to be configured as a dormant BWP, and when the UE activates each SCell, each cell group, or the PSCell of each cell group, the UE may directly operate a downlink BWP or an uplink BWP of each SCell or each cell group or the PSCell of each cell group as the dormant BWP, or may suspend or resume the cell group, thereby reducing battery power consumption of the UE.

As another method, in an embodiment proposed in the disclosure, in the SCell configuration information (e.g., configuration information described or proposed with reference to FIG. 1F) or the PSCell (or SCell) configuration information of the cell group (e.g., secondary cell group) of the RRC message, the base station may not configure the first active BWP of the downlink or uplink BWP configuration information of each cell as the dormant BWP, and when the UE activates or resumes each SCell, each cell group, or the PSCell of each cell group, the UE may always activate the downlink BWP or the uplink BWP of each SCell or each cell group or the PSCell of each cell group to the first active BWP, or may switch or activate the same to the dormant BWP in the embodiments proposed in the disclosure, or may suspend or resume the cell group, thereby reducing battery power consumption of the UE.

Further, the proposed embodiment of the disclosure may be extended and applied to each SCell configuration information or PSCell configuration information of a master cell group (MCG) or a secondary cell group (SCG) of the UE for which dual connectivity is configured. That is, the SCell configuration information or the PSCell configuration information of the SCG may also be stored when the UE is transitioned to the RRC inactive mode, and the base station may transmit, to the UE, the RRC message (e.g., RRCResume, RRCReconfiguration, or RRCRelease) including the indicator or the configuration information indicating whether to discard or release, or maintain and apply, or reconfigure the SCell configuration information (e.g., configuration information described with reference to FIG. 1F) or the PSCell configuration information of the MCG or SCG stored in the UE, when the base station performs the RRC connection resume procedure or transitions the UE to the RRC inactive mode.

In FIG. 1J, a UE 1j-01 may perform a network connection with a base station 1j-02 and may transmit and receive data (1j-05). If the base station needs to transition the UE to an RRC inactive mode for a certain reason, the base station may transmit an RRCRelease message (1j-20) to the UE and may transition the UE to the RRC inactive mode. The base station may transmit, to the UE, an RRC message (e.g., RRCRelease) including an indicator or configuration information indicating whether to discard or release, or maintain and apply, or reconfigure SCell configuration information of a MCG or an SCG (e.g., configuration information described or proposed with reference to FIG. 1F) or PSCell (or SCell) configuration information of the cell group (e.g., secondary cell group) stored in the UE. As described above, in case of the UE to which dual connectivity is applied, the base station may determine whether to suspend and resume a master cell group bearer configuration or RRC configuration information or SCell configuration information of the MCG or SCG, and may determine whether to suspend and resume a secondary cell group bearer configuration and RRC configuration by asking a secondary cell base station whether to suspend and resume the same and receiving a response from the secondary cell base station (1j-15). In the RRCRelease message, the base station may configure a frequency list to be measured in an RRC idle mode or an RRC inactive mode by the UE, or frequency measurement configuration information, or a frequency measurement period.

If the UE in the RRC inactive mode receives a paging message during moving (1j-25), needs to transmit uplink data, or needs to update a RAN indication area, the UE may perform an RRC connection resume procedure.

When the UE needs to configure a connection, the UE may perform a random access procedure, and when transmitting an RRCResumeRequest message to the base station, proposed UE operations related to the message transmission are as follows (1j-30).
1. The UE identifies system information, and if the system information indicates to transmit a complete UE connection resume identifier (I-RNTI or full resume ID), the UE prepares to transmit the message including the stored complete UE connection resume identifier (I-RNTI). If the system information indicates to transmit a truncated UE connection resume identifier (truncated I-RNTI or truncated resume ID), the UE configures a truncated UE connection resume identifier (truncated resume ID) from the stored complete UE connection resume identifier (I-RNTI) by using a certain method and prepares to transmit the message including the truncated UE connection resume identifier.
2. The UE recovers RRC connection configuration information and security context information from stored UE context.
3. Further, the UE updates a new KgNB security key corresponding to the master cell group based on the current KgNB security key, a next hop (NH) value, and an NCC value received in the RRCRelease message and stored.
4. Further, if the UE receives an SCG-counter value (or sk-counter) in the RRCRelease message, the UE updates the new SKgNB security key corresponding to the secondary cell group based on the KgNB security key and the SCG-counter value (or sk-counter).
5. Further, the UE derives new security keys (K RRCenc, K_RRC_int, K UPint, and K UPenc) to be used in an integrity protection and verification procedure and an encryption and decryption procedure, by using the newly updated KgNB security key.
6. Further, when the UE receives the SCG-counter value (or sk-counter) in the RRCRelease message, the UE derives new security keys (SK RRCenc, SK_RRC_int, SK_UPint, and SK UPenc) to be used in an integrity protection and verification procedure and an encryption and decryption procedure by using the newly updated SKgNB security key corresponding to the secondary cell group.
7. Further, the UE calculates a MAC-I and prepares to transmit the message including the MAC-I.
8. Further, the UE resumes an SRB 1 (the UE should resume the SRB 1 in advance because the UE will receive the RRCResume message through the SRB 1 in response to the RRCReseumeRequest message to be transmitted).
9. Further, the UE configures the RRCResumeRequest message to be transmitted to a lower layer device.
10. For all bearers except for an SRB 0 corresponding to the master cell group (MCG terminated RBs), an integrity protection and verification procedure is resumed by applying the updated security keys and a previously configured algorithm, and then the integrity verification and protection is applied to subsequently transmitted and received data (in order to improve the reliability and security of data subsequently transmitted and received from the SRB 1 or DRBs).
11. For all the bearers except for the SRB 0 corresponding to the master cell group (MCG terminated RBs), an encryption and decryption procedure is resumed by applying the updated security keys and the previously configured algorithm, and then the encryption and decryption is applied to subsequently transmitted and received data (in order to improve the reliability and security of data subsequently transmitted and received from the SRB 1 or DRBs).
12. If the UE receives the SCG-counter value (or sk-counter) in the RRCRelease message, the UE resumes an integrity protection and verification procedure by applying the updated security keys and the previously configured algorithm for all bearers (SCG terminated RBs) corresponding to the secondary cell group, and then applies the integrity verification and protection to subsequently transmitted and received data (in order to improve the reliability and security of data subsequently transmitted and received from the DRBs).
13. If the UE receives the SCG-counter value (or sk-counter) in the RRCRelease message, the UE resumes an encryption and decryption procedure by applying the updated security keys and the previously configured algorithm for all bearers (SCG terminated RBs) corresponding to the secondary cell group, and then applies the encryption and decryption to subsequently transmitted and received data (in order to improve the reliability and security of data subsequently transmitted and received from the DRBs).

As described above, the UE operations proposed when the UE needs to configure a connection and thus, performs a random access procedure, transmits the RRCResumeRequest message to the base station, and then receives the RRCResume message as a response thereto are as follows (1j-35). If the RRCResume message includes an indicator indicating the UE to report in case that there is a valid frequency measurement result in the RRC inactive mode, the UE may configure a frequency measurement result in an RRCResumeComplete message and may report the frequency measurement result. Further, the base station may transmit, to the UE, the RRC message (RRCResume) including the indicator or the configuration information indicating whether to discard or release, or maintain and apply, or reconfigure the SCell configuration information of the MCG or the SCG (e.g., configuration information described or proposed with reference to FIG. 1F) stored in the UE.
1. If receiving the message, the UE restores a PDCP state corresponding to the master cell group, resets a COUNT value, and reestablishes PDCP layer devices of an SRB 2 and all DRBs (MCG terminated RBs) corresponding to the master cell group.
2. If receiving the SCG-counter value (or sk-counter) in the message, the UE updates a new SKgNB security key corresponding to the secondary cell group based on a KgNB security key and the SCG-counter value (sk-counter). Then, the UE derives new security keys (SK RRCenc, SK_RRC_int, SK_UPint, and SK UPenc) to be used in an integrity protection and verification procedure and an encryption and decryption procedure by using the newly updated SKgNB security keys corresponding to the secondary cell group.
3. If the message includes master cell group (masterCellgroup) configuration information,
   A. the master cell group configuration information included in the message is performed and applied. The master cell group information may include configuration information about RLC layer devices belonging to the master cell group, a logical channel identifier, and a bearer identifier.
4. If the message includes bearer configuration information (radioBearerConfig),
   A. the bearer configuration information (radioBearerConfig) included in the message is performed and applied. The bearer configuration information (radioBearerConfig) may include configuration information about PDCP layer devices for each bearer, configuration information about SDAP layer devices, a logical channel identifier, and a bearer identifier.
5. If the message includes secondary cell group (masterCellgroup) configuration information,
   A. the secondary cell group configuration information included in the message is performed and applied. The secondary cell group information may include configuration information about RLC layer devices belonging to the secondary cell group, a logical channel identifier, and a bearer identifier.
6. If the message includes secondary bearer configuration information (radioBearerConfig),
   A. the secondary bearer configuration information (radioBearerConfig) included in the message is performed and applied. The secondary bearer configuration information (radioBearerConfig) may include configuration information about PDCP layer devices for each secondary bearer, configuration information about SDAP layer devices, a logical channel identifier, and a bearer identifier.
7. The UE resumes the SRB 2 and all the DRBs (MCG terminated RBs) corresponding to the master cell group.
8. If the message includes frequency measurement configuration information (measConfig),
   A. the frequency measurement configuration information included in the message is performed and applied. That is, frequency measurement may be performed according to the configuration.
9. The UE is transitioned to an RRC connected mode.
10. The UE indicates an upper layer device that a suspended RRC connection has been resumed.
11. Then, the UE configures and transmits the RRCResumeComplete message for transmission to a lower layer (1j-40).

In case that the UE has bearer configuration information and UE context information for a suspended secondary cell group, the UE may perform frequency measurement based on the system information or the frequency configuration information configured by the RRCRelease message or the RRCResume message, and in case that there is a valid result, in order to indicate that there is the valid result, the UE may transmit the RRCResumeComplete message including the indicator. Further, if the base station receives the indicator, in case that the carrier aggregation or dual connectivity needs to be resumed, the base station may indicate the UE to report the frequency measurement result (1j-45) and may receive the frequency measurement result, or may receive a report of the frequency measurement result in the RRCResumeComplete message (1j-50). If the base station receives the frequency measurement result, the base station may ask the secondary cell base station whether to resume the bearer information for the suspended secondary cell group, may perform the determination by receiving a response thereto, and may transmit an RRCReconfiguration message to the UE so as to indicate whether to resume or release bearers for the secondary cell group. Further, the base station may transmit, to the UE, the RRC message (e.g., RRCReconfiguration message) including the indicator or the configuration information indicating whether to discard or release, or maintain and apply, or reconfigure the SCell configuration information (e.g., configuration information described or proposed with reference to FIG. 1F) of the MCG or the SCG stored in the UE.

In an embodiment proposed with reference to FIG. 1J of the disclosure, in the SCell configuration information (e.g., configuration information described or proposed with reference to FIG. 1F) or the PSCell (or SCell) configuration information of the cell group (e.g., secondary cell group) of the RRC message (e.g., RRCRelease, RRCResume, or RRCReconfiguartion), the base station may allow a first active BWP of downlink or uplink BWP configuration information of each cell to be configured as a dormant BWP, and when the UE activates each SCell or the PSCell of each cell group (e.g., secondary cell group), the base station may directly operate a downlink BWP or an uplink BWP of each SCell or the PSCell as the dormant BWP, or may suspend or resume the cell group, thereby reducing battery power consumption of the UE. For example, for each SCell or each PSCell, in case that an SCell state is configured as the active state, or a cell group state is configured as the active state or the suspended state or the deactivated state or an indication to suspend or resume the cell group is configured in the SCell configuration information or the cell group configuration information of the RRC message (e.g., RRCRelease or RRCResume or RRCReconfiguartion), or in case that an indication to activate the SCell is received in MAC control information proposed in the disclosure, the SCell or the PSCell may be activated or resumed or suspended, and the downlink BWP or the uplink BWP of the SCell or the PSCell may be directly activated as a dormant BWP when the SCell or the PSCell is activated, so that a method for reducing battery power consumption of the UE may be operated.

Further, in case that the UE in the RRC inactive mode is transitioned to the RRC connected mode and recovers or applies or reconfigures the SCell configuration information or the PSCell (or SCell) configuration information of the cell group (e.g., secondary cell group) of the disclosure, according to embodiments proposed in the disclosure, switching or activation between BWPs or activation or application of a dormant BWP may be performed for each activated SCell or PSCell (or SCell) of the cell group. Further, embodiments of the disclosure may be extended and applied even when the handover is performed.

As described above, if the UE receives an indicator indicating to suspend or resume or activate or deactivate a cell or a cell group or a PSCell of the cell group, a PHY layer device or a MAC layer device having received the indication may transmit the indication to an upper layer device (e.g., MAC layer device or RLC layer device or PDCP layer device or RRC layer device). Further, if the upper layer device receives the indication (e.g., to suspend or resume or activate or deactivate the cell group) from the lower layer device, the upper layer device may perform a procedure of a protocol layer device for the corresponding cell group suspension or resumption or activation or deactivation. Further, as in embodiments of the disclosure, if an indicator indicating to suspend or resume or activate or deactivate a cell group or a PSCell of the cell group is received in an RRC message, an RRC layer device having received the indication may transmit the indication to a lower layer device (e.g., PHY layer device or MAC layer device or RLC layer device or PDCP layer device). As described above, if the lower layer device receives the indication (e.g., to suspend or activate or deactivate the cell group) from the upper layer device (e.g., RRC layer device), the lower layer device may perform a procedure of a protocol layer device for the corresponding cell group suspension or resumption or activation or deactivation.

Various embodiments may be configured and operated by combining or extending embodiments proposed in the disclosure.

FIG. 1K is a diagram illustrating a first signaling procedure for configuring or releasing dual connectivity, or activating or resuming or suspending or deactivating a secondary cell group configured with dual connectivity in a next-generation mobile communication system to which the disclosure is applicable.

In FIG. 1K, a first signaling procedure for configuring or releasing dual connectivity, or activating or resuming or suspending or deactivating a secondary cell group configured with dual connectivity is as follows.

In FIG. 1K, a UE may configure an RRC connection with a network or a base station as shown in FIG. 1F of the disclosure, and may perform data transmission or reception with the base station (e.g., master cell group (MCG), master node (MN), or cells (PCells or SCells) of the MCG).

As described above, the base station may configure dual connectivity for the UE for a predetermined reason (e.g., in case that a high data rate is required, or at a request of the UE (1k-05), or in case that high QoS requirements should be satisfied). For example, the UE may transmit, to the base station, a request to configure or release or activate or deactivate or resume or suspend dual connectivity, a cell group (e.g., secondary cell group), or a cell, and the request message may include a frequency (or channel) measurement result report or a cell group identifier or cell identifiers or measurement results (1k-05). As another method, the base station may determine whether to configure or release or add or deactivate or activate or resume or modify or reconfigure or suspend dual connectivity, a cell group (e.g., secondary cell group), or a cell in consideration of an amount of downlink (or uplink) data or an amount of a buffer.

As described above, the master base station (master node (MN) or master cell group (MCG)) may receive a frequency or channel measurement report for a frequency or a channel received from the UE, and may determine a secondary base station (secondary node (SN) or secondary cell group (SCG)) for configuring dual connectivity based on the measurement report. Further, the master base station may determine whether to configure or release or add or deactivate or activate or resume or modify or reconfigure or suspend dual connectivity or a cell group (e.g., secondary cell group) or a cell in consideration of the amount of downlink (or uplink) data or the amount of a buffer. In order to configure or release or add or deactivate or activate or resume or modify or reconfigure or suspend dual connectivity or a cell group (e.g., secondary cell group) or a cell to the determined secondary base station, the master base station may transmit, to the secondary base station, a request message for requesting to configure or add to the SCG of the UE through an Xn interface (e.g., interface between base stations) or an Sn interface (interface between a base station and an AMF or a UMF, or an interface between base stations) (1k-10). In order to configure or release or add or deactivate or activate or resume or modify or reconfigure or suspend dual connectivity or a cell group (e.g., secondary cell group) or a cell for the secondary base station, each separate new request message may be defined and used, and in another method, and a new indicator may be defined in an existing message (e.g., SN addition request message or SN modification request message or SN release request message) to indicate (or request) to configure or release or add or deactivate or activate or resume or modify or reconfigure or suspend a cell group (e.g., secondary cell group) or a cell. The request message may include information such as cell group configuration information (e.g., master cell group configuration information) currently configured for the UE or bearer configuration information or capability information of the UE or frequency (or channel) measurement result information of the UE, and with reference to the above information, the secondary base station may configure secondary cell group configuration information or bearer configuration information to correspond to UE capability or not to exceed UE capability or to match bearer configuration information of the master cell group when the secondary cell group is configured for the UE.

In case of rejecting the request message, the secondary base station (SCG) having received the request 1k-10 may configure a rejection message and may transmit the rejection message to the master base station through the Xn interface (e.g., interface between base stations) or the Sn interface (interface between a base station and an AMF or a UMF, or the interface between base stations) (1k-15). If the secondary base station accepts the request message, the secondary base station may transmit a request acceptance message including configuration information or an indicator for configuring or releasing or adding or deactivating or activating or resuming or modifying or reconfiguring or suspending dual connectivity or a cell group (e.g., secondary cell group) or a cell through the Xn interface (e.g., interface between base stations) or the Sn interface (interface between a base station and an AMF or a UMF, or interface between base stations) to the master base station (1k-15). The request acceptance message may include at least some of a plurality of pieces of information below.
- The same identifier as a message identifier included in the request message, or an indicator indicating that a request in the request message is accepted
- Configuration information or indicator (e.g., configuration information or indicator for master cell group) for configuring or releasing or adding or deactivating or activating or resuming or modifying or reconfiguring or suspending dual connectivity or a cell group (e.g., secondary cell group) or a cell.
- First RRC message (e.g., RRCReconfiguration message) including configuration information or an indicator for configuring or releasing or adding or deactivating or activating or resuming or modifying or reconfiguring or suspending dual connectivity or a cell group (e.g., secondary cell group) or a cell.
- The first RRC message may include some of a plurality of pieces of information below.
   ▪ First RRC message identifier (e.g., rrc-Transaction identifier) for identifying the first RRC message. Because the UE and the base station (e.g., secondary base station) transmit or receive a plurality of RRC messages with each other, an identifier for identifying each RRC message may be included in the RRC message. For example, the same first RRC message identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
   ▪ Configuration information or an indicator (e.g., configuration information or an indicator for the UE) for configuring or releasing or adding or deactivating or activating or resuming or modifying or reconfiguring or suspending dual connectivity or a cell group (e.g., secondary cell group) or a cell
   ▪ Indicator indicating a state of a cell group (e.g., active or inactive or suspended or resumed)
   ▪ Cell group identifier for identifying cell groups. The cell group identifier may be allocated by the master base station, or one of already promised identifiers may be allocated by the secondary base station.
   ▪ Cell group or cell configuration information
   ▪ Bearer configuration information. For example, indicator information indicating an operation of a protocol layer device (e.g., SDAP layer device or PDCP layer device or RLC layer device or MAC layer device) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
   ▪ In case that configuration information or an indicator for configuring or adding or activating or resuming or modifying or reconfiguring dual connectivity or a cell group (e.g., SCG) or a cell is included, a first indicator (e.g., mobilityControlInfor or ReconfigurationWithSync) may also be included. However, in case that configuration information or an indicator for releasing or deactivating or reconfiguring or suspending dual connectivity or a cell group (e.g., SCG) or a cell is included, the first indicator (e.g., mobilityControlInfor or ReconfigurationWithSync) may not be included. As described above, the first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell).
   ▪ In case that configuration information or an indicator for configuring or adding or activating or resuming or modifying or reconfiguring dual connectivity or a cell group (e.g., secondary cell group) or a cell is included, random access configuration information may also be included. However, in case that configuration information or an indicator for releasing or deactivating or reconfiguring or suspending dual connectivity or a cell group (e.g., secondary cell group) or a cell is included, the random access configuration information may not be included. The random access configuration information may include random access transmission resource information (time or frequency transmission resource) for preamble transmission for the cell group or the cell or designated preamble information for the cell group or cell.
   ▪ Time information indicating when to activate or resume or deactivate or suspend dual connectivity or a cell group (e.g., secondary cell group) or a cell (PSCell or SCG SCell) (e.g., information indicating timing (e.g., X), a time unit, a subframe, a time slot, or a symbol unit), for example, if the message is received in an n-th time unit, time information indicating whether to activate or resume or deactivate or suspend a cell in an (n+X)-th time unit)
   ■ First channel measurement configuration information for each cell or each BWP
   ■ Second channel measurement configuration information for each cell or each BWP
   ■ An indicator that adds the cell group configuration or an indicator (ReconfigurationWithSync) that indicates the cell group modification or an indicator (ReconfigurationWithSync or newly defined indicator) that indicates a random access procedure
   ■ An indicator (ReconfigurationWithSync or newly defined indicator) that indicates whether to activate the cell group by performing the random access procedure or to activate the cell group without the random access procedure when the cell group is activated
   ■ Separate radio resource management (RRM) configuration information or frequency measurement configuration information (e.g., frequency measurement configuration information (reduced or relaxed RRM configuration information) simplified for battery power saving) to be applied or performed when the radio resource management (RRM) configuration information or the frequency measurement configuration information or the cell group is deactivated
   ■ Configuration information for radio link monitoring (RLM) to be applied or performed when the configuration information for the RLM or the cell group is deactivated. For example, the configuration information for the RLM may be beam configuration information in the unit of a cell or beam configuration information for each bandwidth part to be measured by the UE when the cell group is deactivated, and may include beam-related configuration information (transmission configuration indication (TCI) state or quasi co-location (QCL)), and further, the configuration information may include a timing advance (TA) value (or an offset value) for synchronization with a downlink signal or an uplink signal of the base station, a time alignment timer (TAT) indicating effectiveness of the TA value or a TAT value. Further, the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when a beam failure occurs. Further, the configuration information may include the BWP configuration information (e.g., which may be indicated as a BWP identifier) indicating in what BWP the RLM procedure is to be performed. As another method, when the cell group is in the deactivated state, the UE may minimize a cell group activation delay by performing the RLM procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the RLM procedure is to be performed is not configured) by performing the RLM procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the RLM procedure is to be performed is not configured when the cell group is activated, the RLM procedure may be performed in the finally (or previously) activated bandwidth part. Further, the configuration information may include the beam-related configuration information (e.g., may be indicated as the bandwidth part identifier or TCI state or QCL configuration information) indicating in which beam the RLM procedure is to be performed. As still another method, when the cell group is in the deactivated state, the UE may minimize the cell group activation delay by performing the RLM procedure in the beam (e.g., TCI state or QCL configuration information) configured in the RRC message and by activating the beam, performing the RLM procedure, and early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the RLM procedure is to be performed is not configured) by performing the RLM procedure in the finally (or previously) activated beam before the cell group is deactivated, whereas in case that the cell group is activated, the UE may perform the activation procedure in the beam configured in the RRC message. If the beam-related configuration information indicating in which beam the RLM procedure is to be performed is not configured when the cell group is activated, the RLM procedure may be performed in the finally (or previously) activated beam.
   ■ Configuration information for a beam failure detection procedure or beam failure detection (BFD) or configuration information for the BFD that should be applied or performed when the cell group is deactivated. For example, the configuration information may be beam configuration information in the unit of a cell or beam configuration information for each bandwidth part that should be measured by the UE when the cell group is deactivated, and may include beam-related configuration information (e.g., transmission configuration indication (TCI) state or quasi co-location (QCL)). Further, the configuration information may include a timing advance (TA) value (or an offset value) for synchronization with a downlink signal or an uplink signal of the base station, a time alignment timer (TAT) indicating effectiveness of the TA value, or a TAT value, and further, the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when the beam failure occurs. Further, the configuration information may include the bandwidth part configuration information (e.g., may be indicated as a bandwidth part identifier) indicating in which bandwidth part the beam failure detection procedure is to be performed. As another method, when the cell group is in the deactivated state, the UE may minimize a cell group activation delay by performing the beam failure detection procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the beam failure detection procedure is to be performed is not configured) by performing the beam failure detection procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the beam failure detection procedure is to be performed is not configured when the cell group is activated, the beam failure detection procedure may be performed in the finally (or previously) activated bandwidth part. Further, the configuration information may include the beam-related configuration information (e.g., may be indicated as the bandwidth part identifier or TCI state or QCL configuration information) indicating in which beam the beam failure detection procedure is to be performed. As still another method, when the cell group is in the deactivated state, the UE may minimize the cell group activation delay by performing the beam failure detection procedure in the beam (e.g., TCI state or QCL configuration information) configured in the RRC message and by early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the beam failure detection procedure is to be performed is not configured) by performing the beam failure detection procedure in the finally (or previously) activated beam before the cell group is deactivated, whereas in case that the cell group is activated, the UE may perform the activation procedure in the beam configured in the RRC message. If the beam-related configuration information indicating in which beam the beam failure detection procedure is to be performed is not configured when the cell group is activated, the beam failure detection procedure may be performed in the finally (or previously) activated beam.

In case that the master cell group (MCG) receives a request acceptance message 1k-15, the master cell group may identify the request acceptance message, and may transmit, to the UE, a second RRC message (e.g., RRCReconfiguration) including information included in the request acceptance message (e.g., a first RRC message included in the request acceptance message 1k-15 (1k-20). The second RRC message may include some of pieces of information below.
- Second RRC message identifier (e.g., rrc-Transaction identifier) for identifying the second RRC message. Because the UE and the base station (e.g., master base station) transmit or receive a plurality of RRC messages with each other, an identifier for identifying each RRC message may be included in the RRC message. For example, the same second RRC message identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
- First RRC message included in the request acceptance message 1k-15
- Configuration information or an indicator (e.g., configuration information or an indicator for the UE) for configuring or releasing or adding or deactivating or activating or resuming or modifying or reconfiguring or suspending dual connectivity or a cell group (e.g., secondary cell group) or a cell
- Indicator indicating a state of a cell group (e.g., active or inactive or suspended or resumed)
- Cell group identifier for identifying cell groups. The cell group identifier may be allocated by the master base station, or one of already promised identifiers may be allocated by the secondary base station.
- Cell group or cell configuration information
- Bearer configuration information. For example, indicator information indicating an operation of a protocol layer device (e.g., SDAP layer device or PDCP layer device or RLC layer device or MAC layer device) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
- In case that configuration information or an indicator for configuring or adding or activating or resuming or modifying or reconfiguring dual connectivity or a cell group (e.g., SCG) or a cell is included, a first indicator (e.g., mobilityControlInfor or ReconfigurationWithSync) may also be included. However, in case that configuration information or an indicator for releasing or deactivating or reconfiguring or suspending dual connectivity or a cell group (e.g., SCG) or a cell is included, the first indicator (e.g., mobilityControlInfor or ReconfigurationWithSync) may not be included. As described above, the first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell). As another method, the UE may perform PDCCH monitoring in the indicated or configured cell group or cell, and may trigger and perform a random access procedure as indicated on the PDCCH. For example, an upper layer device (e.g., RRC layer device) may transmit an indicator to trigger the random access procedure to a lower layer device (e.g., MAC layer device).
- In case that configuration information or an indicator for configuring or adding or activating or resuming or modifying or reconfiguring dual connectivity or a cell group (e.g., secondary cell group) or a cell is included, random access configuration information may also be included. However, in case that configuration information or an indicator for releasing or deactivating or reconfiguring or suspending dual connectivity or a cell group (e.g., secondary cell group) or a cell is included, the random access configuration information may not be included. The random access configuration information may include random access transmission resource information (time or frequency transmission resource) for preamble transmission for the cell group or the cell or designated preamble information for the cell group or the cell.
- Time information indicating when to activate or resume or deactivate or suspend dual connectivity or a cell group (e.g., secondary cell group) or a cell (PSCell or SCG SCell) (e.g., information indicating timing (e.g., X), a time unit, a subframe, a time slot, or a symbol unit), for example, if the message is received in an n-th time unit, time information indicating whether to activate or resume or deactivate or suspend a cell in an (n+X)-th time unit)
- First channel measurement configuration information for each cell or bandwidth part
- Second channel measurement configuration information for each cell or bandwidth part
- An indicator that adds the cell group configuration or an indicator (ReconfigurationWithSync) that indicates the cell group modification or an indicator (ReconfigurationWithSync or newly defined indicator) that indicates a random access procedure
- An indicator (ReconfigurationWithSync or newly defined indicator) that indicates whether to activate the cell group by performing the random access procedure or to activate the cell group without the random access procedure when the cell group is activated
- Separate radio resource management (RRM) configuration information or frequency measurement configuration information (e.g., frequency measurement configuration information (reduced or relaxed RRM configuration information) simplified for battery saving) to be applied or performed when the radio resource management (RRM) configuration information or the frequency measurement configuration information or the cell group is deactivated
- Configuration information for radio link monitoring (RLM) to be applied or performed when the configuration information for the RLM or the cell group is deactivated. For example, the configuration information for the RLM may be beam configuration information in the unit of a cell or beam configuration information for each bandwidth part to be measured by the UE when the cell group is deactivated, and may include beam-related configuration information (transmission configuration indication (TCI) state or quasi co-location (QCL)), and further, the configuration information may include a timing advance (TA) value (or an offset value) for synchronization with a downlink signal or an uplink signal of the base station, and a time alignment timer (TAT) indicating effectiveness of the TA value or a TAT value. Further, the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when a beam failure occurs. Further, the configuration information may include the bandwidth part configuration information (e.g., may be indicated as a bandwidth part identifier) indicating in which bandwidth part the RLM procedure is to be performed. As another method, when the cell group is in the deactivated state, the UE may minimize a cell group activation delay by performing the RLM procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the RLM procedure is to be performed is not configured) by performing the RLM procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the RLM procedure is to be performed is not configured when the cell group is activated, the RLM procedure may be performed in the finally (or previously) activated bandwidth part. Further, the configuration information may include the beam-related configuration information (e.g., may be indicated as the bandwidth part identifier or TCI state or QCL configuration information) indicating in which beam the RLM procedure is to be performed. As still another method, when the cell group is in the deactivated state, the UE may minimize the cell group activation delay by performing the RLM procedure in the beam (e.g., TCI state or QCL configuration information) configured in the RRC message and by activating the beam, performing the RLM procedure, and early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the RLM procedure is to be performed is not configured) by performing the RLM procedure in the finally (or previously) activated beam before the cell group is deactivated, whereas in case that the cell group is activated, the UE may perform the activation procedure in the beam configured in the RRC message. If the beam-related configuration information indicating in which beam the RLM procedure is to be performed is not configured when the cell group is activated, the RLM procedure may be performed in the finally (or previously) activated beam.
- Configuration information for a beam failure detection procedure or beam failure detection (BFD) or configuration information for the BFD that should be applied or performed when the cell group is deactivated. For example, the configuration information may be beam configuration information in the unit of a cell or beam configuration information for each bandwidth part that should be measured by the UE when the cell group is deactivated, and may include beam-related configuration information (e.g., transmission configuration indication (TCI) state or quasi co-location (QCL)), or the configuration information may include a timing advance (TA) value (or an offset value) for synchronization with a downlink signal or an uplink signal of the base station, a time alignment timer (TAT) indicating effectiveness of the TA value, or a TAT value, or the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when the beam failure occurs. Further, the configuration information may include the bandwidth part configuration information (e.g., may be indicated as a bandwidth part identifier) indicating in which bandwidth part the beam failure detection procedure is to be performed. As another method, when the cell group is in the deactivated state, the UE may minimize a cell group activation delay by performing the beam failure detection procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the beam failure detection procedure is to be performed is not configured) by performing the beam failure detection procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the beam failure detection procedure is to be performed is not configured when the cell group is activated, the beam failure detection procedure may be performed in the finally (or previously) activated bandwidth part. Further, the configuration information may include the beam-related configuration information (e.g., may be indicated as the bandwidth part identifier or TCI state or QCL configuration information) indicating in which beam the beam failure detection procedure is to be performed. As still another method, when the cell group is in the deactivated state, the UE may minimize the cell group activation delay by performing the beam failure detection procedure in the beam (e.g., TCI state or QCL configuration information) configured in the RRC message and by early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the beam failure detection procedure is to be performed is not configured) by performing the beam failure detection procedure in the finally (or previously) activated beam before the cell group is deactivated, whereas in case that the cell group is activated, the UE may perform the activation procedure in the beam configured in the RRC message. If the beam-related configuration information indicating in which beam the beam failure detection procedure is to be performed is not configured when the cell group is activated, the beam failure detection procedure may be performed in the finally (or previously) activated beam.

In case that the UE receives a second RRC message 1k-20, the UE may read and identify the second RRC message or may read information (e.g., first RRC message included in the second RRC message) included in the second RRC message, and may configure or add or modify or resume or suspend or deactivate dual connectivity or a cell group (e.g., secondary cell group). Further, if a first indicator to trigger a random access procedure is included in the second RRC message or the first RRC message, the UE may trigger the random access procedure for the configured or indicated cell group or cell. When the random access procedure is performed, if there is random access information in the RRC message or if there is stored random access information, the UE may perform a random access procedure (e.g., contention-free random access procedure (e.g., 4-step random access or 2-step random access)) based on the stored random access information or the random access information received in the RRC message or system information. If there is no random access information in the RRC message, the UE may perform a random access procedure (e.g., contention-based random access procedure (e.g., 4-step random access or 2-step random access)). As another method, the UE may perform PDCCH monitoring in the cell group or cell indicated or configured as above, and may trigger and perform the random access procedure as indicated on the PDCCH. For example, an upper layer device (e.g., RRC layer device) may transmit an indicator to trigger the random access procedure to a lower layer device (e.g., MAC layer device).

Hereinafter, the disclosure proposes a first embodiment of a UE operation in consideration of dual connectivity configuration information when the RRC message (e.g., RRCReconfiguration message) is received. The embodiment proposes a procedure capable of activating a cell group without a random access procedure (RACH-less activation) when the UE activates, adds, or modifies the cell group.
- If the UE receives the RRCReconfiguration message, the UE may perform the following procedures.
- 1> If MCG (or master node (MN)) is configured to LTE (E-UTRA) and SCG (secondary node (SN)) is configured to NR (i.e., E-UTRA nr-SecondaryCellGroupConfig is configured) in the UE, or if the UE is configured to (NG)EN-DC (next generation E-UTRA NR - dual connectivity connected to 5GC),
   ■ 2> If the RRCReconfiguration message is received through an E-UTRA RRC message in a MobilityFromNRCommand message (message indicating a handover from NR to (NG)EN-DC),
      ◆ 3> If the reconfigurationWithSync configuration information is included in spCellConfig of the SCG in the message, or if the state of the cell group of the SCG is not configured to a deactivated state,
         • 4> The UE may perform (or trigger or start) a random access procedure with respect to SpCell (or SCG or PSCell).
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else if the cell group of the SCG is not configured to be in a deactivated state, or if a new indicator (e.g., RACH-less indication) is included in the message and is indicated not to perform the random access procedure, or if the reconfigurationWithSync configuration information is not included in the spCellConfig of the SCG in the message,
         • 4> the UE may not perform (or trigger or start) the random access procedure with respect to the SpCell (or SCG or PSCell).
         • 4> The UE may activate the SpCell without the random access procedure, or the UE may start PDCCH monitoring with respect to the SpCell, or the UE may start the PDSCH reception.
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else
         • 4> the UE ends the performing procedure.
- 1> If MCG (or master node (MN)) is configured to NR and SCG (secondary node (SN) is configured to NR (i.e., E-UTRA nr-SecondaryCellGroupConfig is configured) in the UE, or if the UE is configured to NR-DC (NR - dual connectivity connected to 5GC), or if the RRCReconfiguration message is received in nr-SCG of the mrdc-SecondaryCellGroup configuration information through SRB1, or if the mrdc-SecondaryCellGroup configuration information is received in the RRCReconfiguration or RRCResume message through the SRB1,
   ■ 2> If the reconfigurationWithSync configuration information is included in the spCellConfig of the nr-SCG in the message, or if the cell group of the SCG is not configured to be in the deactivated state,
      ◆ 3> The UE may perform (or trigger or start) the random access procedure with respect to the SpCell (or SCG or PSCell).
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else if the cell group of the SCG is not configured to be in the deactivated state, or if a new indicator (e.g., RACH-less indication) is included in the message and is indicated not to perform the random access procedure, or if the reconfigurationWithSync configuration information is not included in the spCellConfig of the SCG in the message,
      ◆ 3> the UE may not perform (or trigger or start) the random access procedure with respect to the SpCell (or SCG or PSCell).
      ◆ 3> The UE may activate the SpCell without the random access procedure, or the UE may start PDCCH monitoring with respect to the SpCell, or the UE may start the PDSCH reception.
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else
      ◆ 3> The UE may end the performing procedure.
- 1> If the reconfigurationWithSync configuration information is included in the spCellConfig of the MCG or SCG in the message, and if the MAC layer device of the NR cell group has successfully completed the random access procedure triggered as above,
   ■ 2> the first timer T304 for the cell group may be stopped (or if the timer is being driven).
   ■ 2> The second timer T310 for the cell group or the source SpCell may be stopped (or if the timer is being driven).
- The message includes the reconfigurationWithSync, and when the UE performs a reconfiguration procedure (reconfiguration with Sync) for synchronization, the following procedures may be performed.
- 1> If a dual active protocol stack (DAPS) bearer is not configured, or if the cell group (or SCG) is not configured to be in the deactivated state, or if RLM-related configuration for the deactivated cell group or beam failure detection related configuration information is not configured (if the cell group is configured to be in the deactivated state, quick cell group activation is supported by continuously driving the second timer and performing the RLM procedure), or if this procedure is not performed with respect to the deactivated cell group (or SCG),
   ■ 2> the second timer T310 for the cell group or the SpCell may be stopped (or if the timer is being driven).
- 1> The third timer T312 for the cell group or the SpCell may be stopped (or if the timer is being driven).
- 1> If the cell group (or SCG) is not configured to be in the deactivated state, or if this procedure is not performed with respect to the deactivated cell group (or SCG),
   ■ 2> The value of the first timer T304 included in the reconfigurationWithSync configuration information of the message is configured, and the first timer T304 for the SpCell (PCell of MCG or PSCell of SCG) may start.
- As proposed in the disclosure, if RLM-related configuration information or beam failure detection related configuration information is configured with respect to the deactivated cell group (or SCG) in an RRC message (e.g., RRCReconfiguration message), the UE may perform a radio link failure detection procedure as follows.
   ■ 1> If the cell group is configured to be in the deactivated state (or if the beam failure detection procedure or the RLM procedure is configured with respect to the deactivated cell group), or if an indication indicating asynchronous SpCell is received from a lower layer device as many as a specific number of times (e.g., value of N310),
      ◆ the second timer T310 for the SpCell may start. (When the cell group is activated, or when the cell group is configured to be activated, or when the cell group is not configured to be deactivated, or when the random access procedure for the SpCell starts or is performed, the second timer being driven may be stopped. Further, if the second timer expires, the occurrence of the radio link failure for the cell group may be declared).
   ■ 1> If a certain DAPS bearer is configured, or if an indication indicating asynchronous source SpCell is received from a lower layer device as many as a specific number of times (e.g., value of N310), or if the first timer is being driven,
      ◆ the second timer T310 for the source SpCell may start.
   ■ 1> If the indication indicating the asynchronous SpCell is received from the lower layer device as many as a specific number of times (e.g., value of N310), or if the first timer T304 or the fourth timer is not being driven,
      ◆ the second timer T310 for the source SpCell may start.

Hereinafter, the disclosure proposes a second embodiment of a UE operation in consideration of dual-connection technology configuration information when the RRC message (e.g., RRCReconfiguration message) is received. The embodiment proposes a procedure capable of activating a cell group without a random access procedure (RACH-less activation) when the UE activates, adds, or modifications the cell group.
- If the UE receives the RRCReconfiguration message, the UE may perform the following procedures.
- 1> If MCG (or master node (MN)) is configured to LTE (E-UTRA) and SCG (or secondary node (SN) is configured to NR (i.e., E-UTRA nr-SecondaryCellGroupConfig is configured) in the UE, or the UE is configured to (NG)EN-DC (next generation E-UTRA NR - dual connectivity connected to 5GC),
   ■ 2> If the RRCReconfiguration message is received through an E-UTRA RRC message in a MobilityFromNRCommand message (message indicating a handover from NR to (NG)EN-DC),
      ◆ 3> If the reconfigurationWithSync configuration information is included in the spCellConfig of the SCG in the message, or if the cell group of the SCG is not configured to be in the deactivated state, or if a TimeAlignmentTimer (TAT) timer being driven in the MAC layer device (timer that determines effectiveness of a timing advance (TA) value for synchronization between the UE and the base station) is not being driven (or if the TAT timer has expired or if an indication indicating the TAT timer expiration is received from a lower layer device), or if an indication indicating the beam failure detection is received from the lower layer device (or if beam failure has occurred), or if the beam failure detection procedure or the RLM procedure for the deactivated cell group is not configured, or if a radio link failure procedure is detected in the RLM procedure (or if the second timer T310 has expired or a radio link to the SCG is not valid),
         • 4> the UE may perform (or trigger or start) a random access procedure with respect to the SpCell (or SCG or PSCell).
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) timer connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else if the cell group of the SCG is not configured to be in the deactivated state, or if a new indicator (e.g., RACH-less indication) is included in the message and is indicated not to perform the random access procedure, or if the TimeAlignmentTimer (TAT) timer being driven in the MAC layer device (timer that determines effectiveness of a timing advance (TA) value for synchronization between the UE and the base station) is being driven (or if the TAT timer has not expired, or if an indication indicating the TAT timer expiration is not received from the lower layer device), or if an indication indicating the beam failure detection is not received from the lower layer device (or if the beam failure has not occurred), or if the beam failure detection procedure or the RLM procedure for the deactivated cell group is configured, or if a radio link failure procedure is not detected in the RLM procedure (or if the second timer T310 has not expired, or if the radio link to the SCG is valid), or if the reconfigurationWithSync configuration information is not included in the spCellConfig of the SCG in the message,
         • 4> The UE may not perform (or trigger or start) the random access procedure with respect to the SpCell (or SCG or PSCell).
         • 4> The UE may activate the SpCell without the random access procedure, or the UE may start PDCCH monitoring with respect to the SpCell, or the UE may start PDSCH reception.
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else if the cell group of the SCG is not configured to be in the deactivated state, or if a new indicator (e.g., RACH-less indication) is included in the message and is indicated not to perform the random access procedure, or if the TimeAlignmentTimer (TAT) timer being driven in the MAC layer device (timer that determines effectiveness of the timing advance (TA) value for synchronization between the UE and the base station) is not being driven (or if the TAT timer has expired, or if an indication indicating the TAT timer expiration is received from the lower layer device), or if an indication indicating the beam failure detection is received from the lower layer device (or if beam failure has occurred), or if the beam failure detection procedure or the RLM procedure for the deactivated cell group is not configured, or if the radio link failure procedure is detected in the RLM procedure (or if the second timer T310 has expired, or if the radio link to the SCG is not valid), or if the reconfigurationWithSync configuration information is not included in the spCellConfig of the SCG in the message,
         • 4> the UE may perform (or trigger or start) the random access procedure with respect to the SpCell (or SCG or PSCell).
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else
         • 4> the UE may end the performing procedure.
- 1> If MCG (or master node (MN)) is configured to NR and SCG (secondary node (SN) is configured to NR (i.e., E-UTRA nr-SecondaryCellGroupConfig is configured) in the UE, or if the UE is configured to NR-DC (NR - dual connectivity connected to 5GC), or if the RRCReconfiguration message is received in nr-SCG of the mrdc-SecondaryCellGroup configuration information through SRB1, or if the mrdc-SecondaryCellGroup configuration information is received in the RRCReconfiguration or RRCResume message through the SRB1,
   ■ 2> If the reconfigurationWithSync configuration information is included in the spCellConfig of the nr-SCG in the message, or if the cell group of the SCG is not configured to be in the deactivated state, or if the TimeAlignmentTimer (TAT) timer being driven in the MAC layer device (timer that determines effectiveness of the timing advance (TA) value for synchronization between the UE and the base station) is not being driven (or if the TAT timer has expired, or if an indication indicating the TAT timer expiration is received from the lower layer device), or if an indication indicating the beam failure detection is received from the lower layer device (or if the beam failure has occurred), or if the beam failure detection procedure or the RLM procedure for the deactivated cell group is not configured, or if the radio link failure procedure is detected in the RLM procedure (or if the second timer T310 has expired or the radio link to the SCG is not valid),
      ◆ 3> the UE may perform (or trigger or start) the random access procedure with respect to the SpCell (or SCG or PSCell).
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else if the cell group of the SCG is not configured to be in the deactivated state, or if a new indicator (e.g., RACH-less indication) is included in the message and is indicated not to perform the random access procedure, or if the TimeAlignmentTimer (TAT) timer being driven in the MAC layer device (timer that determines effectiveness of the timing advance (TA) value for synchronization between the UE and the base station) is being driven (or if the TAT timer has not expired, or if an indication indicating the TAT timer expiration is not received from the lower layer device), or if an indication indicating the beam failure detection is not received from the lower layer device (or if the beam failure has not occurred), or if the beam failure detection procedure or the RLM procedure for the deactivated cell group is configured, or if the reconfigurationWithSync configuration information is not included in the spCellConfig of the SCG in the message, or if the radio link failure procedure is not detected in the RLM procedure (or if the second timer T310 has not expired, or if the radio link to the SCG is valid),
      ◆ 3> the UE may not perform (or trigger or start) the random access procedure with respect to the SpCell (or SCG or PSCell).
      ◆ 3> The UE may activate the SpCell without the random access procedure, or the UE may start PDCCH monitoring with respect to the SpCell, or the UE may start the PDSCH reception.
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else if the cell group of the SCG is not configured to be in the deactivated state, or if a new indicator (e.g., RACH-less indication) is included in the message and is indicated not to perform the random access procedure, or if the TimeAlignmentTimer (TAT) timer being driven in the MAC layer device (timer that determines effectiveness of the timing advance (TA) value for synchronization between the UE and the base station) is not being driven (or if the TAT timer has expired, or if an indication indicating the TAT timer expiration is received from the lower layer device), or if an indication indicating the beam failure detection is received from the lower layer device (or if the beam failure has occurred), or if the beam failure detection procedure or the RLM procedure for the deactivated cell group is not configured, or if the radio link failure procedure is detected in the RLM procedure (or if the second timer T310 has expired, or if the radio link to the SCG is not valid), or if the reconfigurationWithSync configuration information is not included in the spCellConfig of the SCG in the message,
      ◆ 3> the UE may perform (or trigger or start) the random access procedure with respect to the SpCell (or SCG or PSCell).
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else
      ◆ 3> the UE may end the performing procedure.
- 1> If the reconfigurationWithSync configuration information is included in the spCellConfig of the MCG or SCG in the message, and if the MAC layer device of the NR cell group has successfully completed the random access procedure triggered as above,
   ■ 2> the first timer T304 for the cell group may be stopped (or if the timer is being driven).
   ■ 2> The second timer T310 for the cell group or the source SpCell may be stopped (or if the timer is being driven).
- The message includes the reconfigurationWithSync, and when the UE performs a reconfiguration procedure (reconfiguration with Sync) for synchronization, the following procedures may be performed.
- 1> If a dual active protocol stack (DAPS) bearer is not configured, or if the cell group (or SCG) is not configured to be in the deactivated state, or if RLM-related configuration for the deactivated cell group or beam failure detection related configuration information is not configured (if the cell group is configured to be in the deactivated state, quick cell group activation is supported by continuously driving the second timer and performing the RLM procedure), or if this procedure is not performed with respect to the deactivated cell group (or SCG),
   ■ 2> The second timer T310 for the cell group or the SpCell may be stopped (or if the timer is being driven).
- 1> The third timer T312 for the cell group or the SpCell may be stopped (or if the timer is being driven).
- 1> If the cell group (or SCG) is not configured to be in the deactivated state, or if this procedure is not performed with respect to the deactivated cell group (or SCG),
   ■ 2> The value of the first timer T304 included in the reconfigurationWithSync configuration information of the message is configured, and the first timer T304 for the SpCell (PCell of MCG or PSCell of SCG) may start.
- As proposed in the disclosure, if the RLM-related configuration information or the beam failure detection related configuration information is configured with respect to the deactivated cell group (or SCG) in the RRC message (e.g., RRCReconfiguration message), the UE may perform a radio link failure detection procedure as follows.
   ■ 1> If the cell group is configured to be in the deactivated state (or if the beam failure detection procedure or the RLM procedure is configured with respect to the deactivated cell group), or if an indication indicating asynchronous SpCell is received from the lower layer device as many as a specific number of times (e.g., value of N310),
      ◆ 2> The second timer T310 for the SpCell may start. (When the cell group is activated (or when the cell group is configured to be activated), or when the cell group is not configured to be deactivated, or when the random access procedure for the SpCell starts or is performed, or when the random access procedure is successfully completed, the second timer T310 being driven may be stopped. Further, if the second timer expires, the occurrence of the radio link failure for the cell group may be declared).
   ■ 1> If a certain DAPS bearer is configured, or if an indication indicating asynchronous source SpCell is received from the lower layer device as many as a specific number of times (e.g., value of N310), or if the first timer is being driven,
      ◆ 2> The second timer T310 for the source SpCell may start.
   ■ 1> If the indication indicating the asynchronous SpCell is received from the lower layer device as many as a specific number of times (e.g., value of N310), or if the first timer T304 or the fourth timer is not being driven,
      ◆ 2> The second timer T310 for the source SpCell may start.

Hereinafter, the disclosure proposes a third embodiment of a UE operation in consideration of dual-connection technology configuration information when the RRC message (e.g., RRCReconfiguration message) is received. The embodiment proposes a procedure capable of activating a cell group without a random access procedure (RACH-less activation) when the UE activates, adds, or modifications the cell group.
- If the UE receives the RRCReconfiguration message, the UE may perform the following procedures.
- 1> If MCG (or master node (MN)) is configured to LTE (E-UTRA) and SCG (or secondary node (SN) is configured to NR (i.e., E-UTRA nr-SecondaryCellGroupConfig is configured) in the UE, or the UE is configured to (NG)EN-DC (next generation E-UTRA NR - dual connectivity connected to 5GC),
   ■ 2> If the RRCReconfiguration message is received through an E-UTRA RRC message in a MobilityFromNRCommand message (message indicating a handover from NR to (NG)EN-DC),
      ◆ 3> If the reconfigurationWithSync configuration information is included in the spCellConfig of the SCG in the message, or if the cell group of the SCG is not configured to be in the deactivated state, or if a TimeAlignmentTimer (TAT) timer being driven in the MAC layer device (timer that determines effectiveness of a timing advance (TA) value for synchronization between the UE and the base station) is not being driven (or if the TAT timer has expired or if an indication indicating the TAT timer expiration is received from a lower layer device), or if an indication indicating the beam failure detection is received from the lower layer device (or if beam failure has occurred), or if the beam failure detection procedure or the RLM procedure for the deactivated cell group is not configured, or if a radio link failure procedure is detected in the RLM procedure (or if the second timer T310 has expired or a radio link to the SCG is not valid),
         • 4> The UE may perform (or trigger or start) a random access procedure with respect to the SpCell (or SCG or PSCell).
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else if the cell group state of the SCG is not configured to be in the deactivated state, or if a new indicator (e.g., RACH-less indication or the second reconfigurationWithSync) is included in the message and is indicated not to perform the random access procedure, or if the TimeAlignmentTimer (TAT) timer being driven in the MAC layer device (timer that determines effectiveness of a timing advance (TA) value for synchronization between the UE and the base station) is being driven (or if the TAT timer has not expired, or if an indication indicating the TAT timer expiration is not received from the lower layer device), or if an indication indicating the beam failure detection is not received from the lower layer device (or if the beam failure has not occurred), or if the beam failure detection procedure or the RLM procedure for the deactivated cell group is configured, or if a radio link failure procedure is not detected in the RLM procedure (or if the second timer T310 has not expired, or if the radio link to the SCG is valid), or if the reconfigurationWithSync configuration information is not included in the spCellConfig of the SCG in the message,
         • 4> The UE may not perform (or trigger or start) the random access procedure with respect to the SpCell (or SCG or PSCell).
         • 4> The UE may activate the SpCell without the random access procedure, or the UE may start PDCCH monitoring with respect to the SpCell, or the UE may start PDSCH reception.
         • 4> In order to identify whether the UE has successfully activated the SpCell without the random access procedure, a new fourth timer may be introduced. For example, when the above condition is satisfied, the fourth timer may start. The fourth timer may be stopped in case that the PDCCH or PDSCH is successfully received from the SpCell. If the fourth timer expires, the UE may trigger an SCG failure report procedure, and may report this through MCG. As another method, if the fourth timer expires, the UE may perform a random access procedure (e.g., contention based random access (CBRA) or contention free random access (CFRA)) or a 2-step random access procedure (2-step RACH) (i.e., a random access procedure as a fallback) based on configuration information (e.g., it may be configured as the second reconfigurationWithSync, or may be configured as preamble information, smtc information, or new UE identifier (RNTI value), or may be configured, stored, and used as a Need code of S) for a separate random access procedure, being configured in the RRC message or being broadcasted through the system information. As still another method, if a cell group activation procedure has failed (e.g., if the PDCCH or the PDSCH has not been successfully received for a predetermined time) without the random access procedure, the UE may perform a random access procedure (e.g., contention based random access (CBRA) or contention free random access (CFRA)) or a 2-step random access procedure (2-step RACH) (i.e., a random access procedure as a fallback) based on configuration information for a separate random access procedure, being configured in the RRC message or being broadcasted through the system information. The configuration information for the separate random access procedure may be configured when the indication to deactivate the cell group is transmitted to the UE through the RRC message, or may be configured when the indication (or reconfigurationWithSync) to activate the cell group is transmitted to the UE through the RRC message. As described above, whether to successfully activate the cell group without the random access procedure may be determined that the UE successfully receives the PDCCH from the base station, or receives transmission resources (uplink grant or downlink assignment), or receives the RRC message from the base station.
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else if the cell group of the SCG is not configured to be in the deactivated state, or if a new indicator (e.g., RACH-less indication) is included in the message and is indicated not to perform the random access procedure, or if the TimeAlignmentTimer (TAT) timer being driven in the MAC layer device (timer that determines effectiveness of the timing advance (TA) value for synchronization between the UE and the base station) is not being driven (or if the TAT timer has expired, or if an indication indicating the TAT timer expiration is received from the lower layer device), or if an indication indicating the beam failure detection is received from the lower layer device (or if beam failure has occurred), or if the beam failure detection procedure or the RLM procedure for the deactivated cell group is not configured, or if the radio link failure procedure is detected in the RLM procedure (or if the second timer T310 has expired, or if the radio link to the SCG is not valid), or if the reconfigurationWithSync configuration information is not included in the spCellConfig of the SCG in the message,
         • 4> The UE may perform (or trigger or start) the random access procedure with respect to the SpCell (or SCG or PSCell).
         • 4> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
      ◆ 3> Else
         • 4> the UE may end the performing procedure.
- 1> If MCG (or master node (MN)) is configured to NR and SCG (secondary node (SN) is configured to NR (i.e., E-UTRA nr-SecondaryCellGroupConfig is configured) in the UE, or if the UE is configured to NR-DC (NR - dual connectivity connected to 5GC), or if the RRCReconfiguration message is received in nr-SCG of the mrdc-SecondaryCellGroup configuration information through SRB1, or if the mrdc-SecondaryCellGroup configuration information is received in the RRCReconfiguration or RRCResume message through the SRB1,
   ■ 2> If the reconfigurationWithSync configuration information is included in the spCellConfig of the nr-SCG in the message, or if the cell group of the SCG is not configured to be in the deactivated state, or if the TimeAlignmentTimer (TAT) timer being driven in the MAC layer device (timer that determines effectiveness of the timing advance (TA) value for synchronization between the UE and the base station) is not being driven (or if the TAT timer has expired, or if an indication indicating the TAT timer expiration is received from the lower layer device), or if an indication indicating the beam failure detection is received from the lower layer device (or if the beam failure has occurred), or if the beam failure detection procedure or the RLM procedure for the deactivated cell group is not configured, or if the radio link failure procedure is detected in the RLM procedure (or if the second timer T310 has expired or the radio link to the SCG is not valid),
      ◆ 3> the UE may perform (or trigger or start) the random access procedure with respect to the SpCell (or SCG or PSCell).
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else if the cell group of the SCG is not configured to be in the deactivated state, or if a new indicator (e.g., RACH-less indication or the second reconfigurationWithSync) is included in the message and is indicated not to perform the random access procedure, or if the TimeAlignmentTimer (TAT) timer being driven in the MAC layer device (timer that determines effectiveness of the timing advance (TA) value for synchronization between the UE and the base station) is being driven (or if the TAT timer has not expired, or if an indication indicating the TAT timer expiration is not received from the lower layer device), or if an indication indicating the beam failure detection is not received from the lower layer device (or if the beam failure has not occurred), or if the beam failure detection procedure or the RLM procedure for the deactivated cell group is configured, or if the radio link failure procedure is not detected in the RLM procedure (or if the second timer T310 has not expired, or if the radio link to the SCG is valid), or if the reconfigurationWithSync configuration information is not included in the spCellConfig of the SCG in the message,
      ◆ 3> the UE may not perform (or trigger or start) the random access procedure with respect to the SpCell (or SCG or PSCell).
      ◆ 3> The UE may activate the SpCell without the random access procedure, or the UE may start PDCCH monitoring with respect to the SpCell, or the UE may start the PDSCH reception.
         3> In order to identify whether the UE has successfully activated the SpCell without the random access procedure, a new fourth timer may be introduced. For example, when the above condition is satisfied, the fourth timer may start. The fourth timer may be stopped in case that the PDCCH or PDSCH is successfully received from the SpCell. If the fourth timer expires, the UE may trigger an SCG failure report procedure, and may report this through MCG. As another method, if the fourth timer expires, the UE may perform a random access procedure (e.g., contention based random access (CBRA) or contention free random access (CFRA)) or a 2-step random access procedure (2-step RACH) (i.e., a random access procedure as a fallback) based on configuration information (e.g., it may be configured as the second reconfigurationWithSync, or may be configured as preamble information, smtc information, or new UE identifier (RNTI value), or may be configured, stored, and used as a Need code of S) for a separate random access procedure, being configured in the RRC message or being broadcasted through the system information. As still another method, if a cell group activation procedure has failed (e.g., if the PDCCH or the PDSCH has not been successfully received for a predetermined time) without the random access procedure, the UE may perform a random access procedure (e.g., contention based random access (CBRA) or contention free random access (CFRA)) or a 2-step random access procedure (2-step RACH) (i.e., a random access procedure as a fallback) based on configuration information for a separate random access procedure, being configured in the RRC message or being broadcasted through the system information. The configuration information for the separate random access procedure may be configured when the indication to deactivate the cell group is transmitted to the UE through the RRC message, or may be configured when the indication (or reconfigurationWithSync) to activate the cell group to the UE through the RRC message.
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else if the cell group of the SCG is not configured to be in the deactivated state, or if a new indicator (e.g., RACH-less indication) is included in the message and is indicated not to perform the random access procedure, or if the TimeAlignmentTimer (TAT) timer being driven in the MAC layer device (timer that determines effectiveness of the timing advance (TA) value for synchronization between the UE and the base station) is not being driven (or if the TAT timer has expired, or if an indication indicating the TAT timer expiration is received from the lower layer device), or if an indication indicating the beam failure detection is received from the lower layer device (or if the beam failure has occurred), or if the beam failure detection procedure or the RLM procedure for the deactivated cell group is not configured, or if the radio link failure procedure is detected in the RLM procedure (or if the second timer T310 has expired, or if the radio link to the SCG is not valid), or if the reconfigurationWithSync configuration information is not included in the spCellConfig of the SCG in the message,
      ◆ 3> the UE may perform (or trigger or start) the random access procedure with respect to the SpCell (or SCG or PSCell).
      ◆ 3> In case that it is configured (or indicated) to activate a cell group (e.g., a secondary cell group) (or if the state of the cell group is not configured to an inactive state), the UE may reset a MAC layer device (MAC reset). The MAC layer device reset (MAC reset) procedure may be performed after the UE determines whether to perform a random access procedure or after the UE triggers the random access procedure or when (or after) the UE successfully completes the random access procedure or when the UE activates the cell group without the random access procedure or when the UE successfully activates the cell group without the random access procedure (e.g., when a PDCCH is successfully received or a transmission resource is received). This is because if the MAC layer device is first reset when the cell group is activated, it is considered that a TimeAlignmentTimer (TAT) connected to PTAG (or PSCell) has expired, and thus a procedure for activating the cell group without the random access procedure proposed in the disclosure is unable to be performed (i.e., the cell group can be activated without the random access procedure only when the TAT timer is driven). As another method, instead of the MAC layer device reset procedure, a MAC layer device partial reset (partial MAC reset) procedure may be performed. Hereinafter, the MAC layer device reset procedure or the MAC layer device partial reset procedure according to the disclosure will be described in detail.
   ■ 2> Else
      ◆ 3> the UE may end the performing procedure.
- 1> If the reconfigurationWithSync configuration information is included in the spCellConfig of the MCG or SCG in the message, and if the MAC layer device of the NR cell group has successfully completed the random access procedure triggered as above,
   ■ 2> the first timer T304 for the cell group may be stopped (or if the timer is being driven).
   ■ 2> The second timer T310 for the cell group or the source SpCell may be stopped (or if the timer is being driven).
- The message includes the reconfigurationWithSync, and when the UE performs a reconfiguration procedure (reconfiguration with Sync) for synchronization, the following procedures may be performed.
- 1> If a dual active protocol stack (DAPS) bearer is not configured, or if the cell group (or SCG) is not configured to be in the deactivated state, or if RLM-related configuration for the deactivated cell group or beam failure detection related configuration information is not configured (if the cell group is configured to be in the deactivated state, quick cell group activation is supported by continuously driving the second timer and performing the RLM procedure), or if this procedure is not performed with respect to the deactivated cell group (or SCG),
   ■ 2> the second timer T310 for the cell group or the SpCell may be stopped (or if the timer is being driven).
- 1> The third timer T312 for the cell group or the SpCell may be stopped (or if the timer is being driven).
- 1> If the cell group (or SCG) is not configured to be in the deactivated state, or if this procedure is not performed with respect to the deactivated cell group (or SCG),
   ■ 2> the value of the first timer T304 included in the reconfigurationWithSync configuration information of the message is configured, and the first timer T304 for the SpCell (PCell of MCG or PSCell of SCG) may start.
- As proposed in the disclosure, if the RLM-related configuration information or the beam failure detection related configuration information is configured with respect to the deactivated cell group (or SCG) in the RRC message (e.g., RRCReconfiguration message), the UE may perform a radio link failure detection procedure as follows.
   ■ 1> If the cell group is configured to be in the deactivated state (or if the beam failure detection procedure or the RLM procedure is configured with respect to the deactivated cell group), or if an indication indicating asynchronous SpCell is received from the lower layer device as many as a specific number of times (e.g., value of N310),
      ◆ the second timer T310 for the SpCell may start. (When the cell group is activated (or when the cell group is configured to be activated), or when the cell group is not configured to be deactivated, or when the random access procedure for the SpCell starts or is performed, or when the random access procedure is successfully completed, the second timer T310 being driven may be stopped. Further, if the second timer expires, the occurrence of the radio link failure for the cell group may be declared).
   ■ 1> If a certain DAPS bearer is configured, or if an indication indicating asynchronous source SpCell is received from the lower layer device as many as a specific number of times (e.g., value of N310), or if the first timer is being driven,
      ◆ the second timer T310 for the source SpCell may start.
   ■ 1> If the indication indicating the asynchronous SpCell is received from the lower layer device as many as a specific number of times (e.g., value of N310), or if the first timer T304 or the fourth timer is not being driven,
      ◆ the second timer T310 for the source SpCell may start.

As described above, the UE may receive a second RRC message 1k-20 or may apply received configuration information, and may generate a third RRC message 1k-25 or a fourth RRC message and may transmit the generated third or fourth RRC message to the base station (1k-25). The third RRC message may include some of a plurality of pieces of information below.
- Second RRC message identifier having the same value as a second RRC message identifier included in the second RRC message
- Indicator or identifier indicating that the second RRC message is successfully received
- Fourth RRC message including a response indicating that a first RRC message generated and transmitted by a secondary base station is successfully received. The fourth RRC message may include some of a plurality of pieces of information below.
   ■ First RRC message identifier having the same value as a first RRC message identifier included in the first RRC message
   ■ Indicator or an identifier indicating that the first RRC message is successfully received
   ■ Response indicator indicating successful application of the first RRC message

If the base station (e.g., master base station) receives the third RRC message, the base station may identify whether the third RRC message is a response message to the second RRC message through the second identifier. Further, the base station may identify the fourth RRC message included in the third RRC message, and may transmit, to the secondary cell group base station, the fourth RRC message included in a configuration completion message for indicating configuration completion through an Xn interface (e.g., interface between base stations) or an Sn interface (interface between a base station or an AMF or a UMF, or interface between base stations) (1k-30). The configuration completion message may include some of a plurality of pieces of information below.
- Fourth RRC message included in the third RRC message
- Request acceptance message or an indicator or identifier indicating completion of the configuration (addition or modification or release of cell group) or indication (activation or deactivation or suspension or resumption of cell group) which is indicated by the first RRC message.

If the base station (e.g., the secondary base station) receives the configuration completion message, the base station may read or identify the fourth RRC message included in the configuration completion message, and may identify whether the fourth RRC message is a response message to the first RRC message through the first identifier. Further, the base station can identify whether the configuration or the indication indicated by the base station has been successfully completed. If the secondary base station receives the configuration completion message or the fourth RRC message, the secondary base station may transmit, as a response thereto, a response message indicating successful reception of the configuration completion message or the fourth RRC message to the master base station.

FIG. 1L is a diagram illustrating a second signaling procedure for configuring or releasing dual connectivity, or configuring or releasing or activating or resuming or suspending or deactivating a secondary cell group configured with dual connectivity in a next-generation mobile communication system to which the disclosure is applicable.

In FIG. 1L, a UE may configure an RRC connection with a network or a base station as shown in FIG. 1F of the disclosure, and may perform data transmission or reception with the base station (e.g., master cell group (MCG), master node (MN), or cells (PCells or SCells) of the master cell group).

As described above, the base station may configure dual connectivity for the UE for a predetermined reason (e.g., in case that a high data rate is required, or at a request of the UE (11-05), or in case that high QoS requirements should be satisfied). For example, the UE may transmit, to the base station, a request to configure or release or activate or deactivate or resume or suspend dual connectivity, a cell group (e.g., secondary cell group), or a cell, and the request message may include a frequency (or channel) measurement result report or a cell group identifier or cell identifiers or measurement results (11-05). As another method, the base station may determine whether to configure or release or add or deactivate or activate or resume or modify or reconfigure or suspend dual connectivity, a cell group (e.g., secondary cell group), or a cell in consideration of an amount of downlink (or uplink) data or an amount of a buffer.

As described above, the master base station (master node (MN) or master cell group (MCG)) may receive a frequency or channel measurement report for a frequency or a channel received from the UE, and may determine a secondary base station (secondary node (SN) or secondary cell group (SCG)) for configuring dual connectivity based on the measurement report. Further, the master base station may determine whether to configure or release or add or deactivate or activate or resume or modify or reconfigure or suspend dual connectivity or a cell group (e.g., secondary cell group) or a cell in consideration of the amount of downlink (or uplink) data or the amount of a buffer. In order to configure or release or add or deactivate or activate or resume or modify or reconfigure or suspend dual connectivity or a cell group (e.g., secondary cell group) or a cell to the determined secondary base station, the master base station may transmit a first RRC message to the UE (11-10). In order to indicate or configure or release or add or deactivate or activate or resume or modify or reconfigure or suspend dual connectivity or a cell group (e.g., SCG) or a cell for the UE, each separate new request message may be defined and indicated in the first RRC message, and as another method, a new indicator may be defined in an existing message (e.g., RRCReconfiguration message or RRCResume message) to indicate (or request) to configure or release or add or deactivate or activate or resume or modify or reconfigure or suspend a cell group (e.g., secondary cell group) or a cell. The first RRC message may include at least some of a plurality of pieces of information below.
- First RRC message identifier (e.g., rrc-Transaction identifier) for identifying the first RRC message. Because the UE and the base station (e.g., master base station) transmit or receive a plurality of RRC messages with each other, an identifier for identifying each RRC message may be included in the RRC message. For example, the same first RRC message identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
- Configuration information or indicator (e.g., configuration information or indicator for a UE) for configuring or releasing or adding or deactivating or activating or resuming or modifying or reconfiguring or suspending dual connectivity or a cell group (e.g., secondary cell group) or a cell.
- Indicator indicating a state of a cell group (e.g., active or inactive or suspended or resumed)
- Cell group identifier for identifying cell groups. The cell group identifier may be allocated by the master base station, or one of already promised identifiers may be allocated by the secondary base station.
- Cell group or cell configuration information
- Bearer configuration information. For example, indicator information indicating an operation of a protocol layer device (e.g., SDAP layer device or PDCP layer device or RLC layer device or MAC layer device) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
- In case that configuration information or an indicator for configuring or adding or activating or resuming or modifying or reconfiguring dual connectivity or a cell group (e.g., SCG) or a cell is included, a first indicator (e.g., mobilityControlInfor or ReconfigurationWithSync) may also be included. However, in case that configuration information or an indicator for releasing or deactivating or reconfiguring or suspending dual connectivity or a cell group (e.g., SCG) or a cell is included, the first indicator (e.g., mobilityControlInfor or ReconfigurationWithSync) may not be included. As described above, the first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell). As another method, the UE may perform PDCCH monitoring in the indicated or configured cell group or cell, and may trigger and perform a random access procedure as indicated in the PDCCH. For example, an upper layer device (e.g., RRC layer device) may transmit an indicator to trigger the random access procedure to a lower layer device (e.g., MAC layer device).
- In case that configuration information or an indicator for configuring or adding or activating or resuming or modifying or reconfiguring dual connectivity or a cell group (e.g., secondary cell group) or a cell is included, random access configuration information may also be included. However, in case that configuration information or an indicator for releasing or deactivating or reconfiguring or suspending dual connectivity or a cell group (e.g., secondary cell group) or a cell is included, the random access configuration information may not be included. The random access configuration information may include random access transmission resource information (time or frequency transmission resource) for preamble transmission for the cell group or the cell or designated preamble information for the cell group or cell.
- Time information indicating when to activate or resume or deactivate or suspend dual connectivity or a cell group (e.g., secondary cell group) or a cell (PSCell or SCG SCell) (e.g., information indicating timing (e.g., X), a time unit, a subframe, a time slot, or a symbol unit), for example, if the message is received in an n-th time unit, time information indicating whether to activate or resume or deactivate or suspend a cell in an (n+X)-th time unit)
- First channel measurement configuration information for each cell or each BWP
- Second channel measurement configuration information for each cell or each BWP
- An indicator that adds the cell group configuration or an indicator (ReconfigurationWithSync) that indicates the cell group modification or an indicator (ReconfigurationWithSync or newly defined indicator) that indicates a random access procedure
- An indicator (ReconfigurationWithSync or newly defined indicator) that indicates whether to activate the cell group by performing the random access procedure or to activate the cell group without the random access procedure when the cell group is activated
- Separate radio resource management (RRM) configuration information or frequency measurement configuration information (e.g., frequency measurement configuration information (reduced or relaxed RRM configuration information) simplified for battery saving) to be applied or performed when the radio resource management (RRM) configuration information or the frequency measurement configuration information or the cell group is deactivated
- Configuration information for radio link monitoring (RLM) to be applied or performed when the configuration information for the RLM or the cell group is deactivated. For example, the configuration information for the RLM may be beam configuration information in the unit of a cell or beam configuration information for each bandwidth part to be measured by the UE when the cell group is deactivated, and may include beam-related configuration information (transmission configuration indication (TCI) state or quasi co-location (QCL)), and further, the configuration information may include a timing advance (TA) value (or an offset value) for synchronization with a downlink signal or an uplink signal of the base station, a time alignment timer (TAT) indicating effectiveness of the TA value or a TAT value. Further, the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when a beam failure occurs. Further, the configuration information may include the BWP configuration information (e.g., which may be indicated as a BWP identifier) indicating in what BWP the RLM procedure is to be performed. As another method, when the cell group is in the deactivated state, the UE may minimize a cell group activation delay by performing the RLM procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the RLM procedure is to be performed is not configured) by performing the RLM procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the RLM procedure is to be performed is not configured when the cell group is activated, the RLM procedure may be performed in the finally (or previously) activated bandwidth part. Further, the configuration information may include the beam-related configuration information (e.g., may be indicated as the bandwidth part identifier or TCI state or QCL configuration information) indicating in which beam the RLM procedure is to be performed. As still another method, when the cell group is in the deactivated state, the UE may minimize the cell group activation delay by performing the RLM procedure in the beam (e.g., TCI state or QCL configuration information) configured in the RRC message and by activating the beam, performing the RLM procedure, and early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the RLM procedure is to be performed is not configured) by performing the RLM procedure in the finally (or previously) activated beam before the cell group is deactivated, whereas in case that the cell group is activated, the UE may perform the activation procedure in the beam configured in the RRC message. If the beam-related configuration information indicating in which beam the RLM procedure is to be performed is not configured when the cell group is activated, the RLM procedure may be performed in the finally (or previously) activated beam.
- Configuration information for a beam failure detection procedure or beam failure detection (BFD) or configuration information for the BFD that should be applied or performed when the cell group is deactivated. For example, the configuration information may be beam configuration information in the unit of a cell or beam configuration information for each bandwidth part that should be measured by the UE when the cell group is deactivated, and may include beam-related configuration information (e.g., transmission configuration indication (TCI) state or quasi co-location (QCL)). Further, the configuration information may include a timing advance (TA) value (or an offset value) for synchronization with a downlink signal or an uplink signal of the base station, a time alignment timer (TAT) indicating effectiveness of the TA value, or a TAT value, and further, the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when the beam failure occurs. Further, the configuration information may include the bandwidth part configuration information (e.g., may be indicated as a bandwidth part identifier) indicating in which bandwidth part the beam failure detection procedure is to be performed. As another method, when the cell group is in the deactivated state, the UE may minimize a cell group activation delay by performing the beam failure detection procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the beam failure detection procedure is to be performed is not configured) by performing the beam failure detection procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the beam failure detection procedure is to be performed is not configured when the cell group is activated, the beam failure detection procedure may be performed in the finally (or previously) activated bandwidth part. Further, the configuration information may include the beam-related configuration information (e.g., may be indicated as the bandwidth part identifier or TCI state or QCL configuration information) indicating in which beam the beam failure detection procedure is to be performed. As still another method, when the cell group is in the deactivated state, the UE may minimize the cell group activation delay by performing the beam failure detection procedure in the beam (e.g., TCI state or QCL configuration information) configured in the RRC message and by early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the beam failure detection procedure is to be performed is not configured) by performing the beam failure detection procedure in the finally (or previously) activated beam before the cell group is deactivated, whereas in case that the cell group is activated, the UE may perform the activation procedure in the beam configured in the RRC message. If the beam-related configuration information indicating in which beam the beam failure detection procedure is to be performed is not configured when the cell group is activated, the beam failure detection procedure may be performed in the finally (or previously) activated beam.

In case of receiving a first RRC message 11-15, the UE may read and identify the first RRC message and may configure or add or modify or resume or suspend or deactivate dual connectivity or a cell group (e.g., secondary cell group). Further, if a first indicator to trigger a random access procedure is included in the first RRC message, the UE may trigger a random access procedure for the configured or indicated cell group or cell. When the random access procedure is performed, if there is random access information in the RRC message or if there is stored random access information, the UE may perform a random access procedure (e.g., contention-free random access procedure (e.g., 4-step random access or 2-step random access)) based on the stored random access information or the random access information received in the RRC message or system information. If there is no random access information in the RRC message, the UE may perform a random access procedure (e.g., contention-based random access procedure (e.g., 4-step random access or 2-step random access)). As another method, the UE may perform PDCCH monitoring in the cell group or cell indicated or configured as above, and may trigger and perform the random access procedure as indicated on the PDCCH. For example, an upper layer device (e.g., RRC layer device) may transmit an indicator to trigger the random access procedure to a lower layer device (e.g., MAC layer device).

The UE may receive a first RRC message 11-10 or may apply received configuration information, and may generate and transmit a second RRC message to the base station (11-15). The second RRC message may include some of a plurality of pieces of information below.
- First RRC message identifier having the same value as a first RRC message identifier included in the first RRC message
- Indicator or identifier indicating that the first RRC message is successfully received

If the base station (e.g., master base station) receives the second RRC message, the base station may identify, through the first identifier, whether the second RRC message is a response message to the first RRC message. Further, the base station identifies the first RRC message, and may transmit, to the secondary base station, an indication message including an indication indicating that a cell group has been configured or added or released or activated or resumed or suspended or deactivated through an Xn interface (e.g., interface between base stations) or an Sn interface (interface between a base station and an AMF or a UMF, or interface between base stations) (11-20). The indication message may include some of a plurality of pieces of information below.
- Identifier for identifying the indication message
- Configuration information or an indicator (e.g., configuration information or an indicator for the secondary cell group) indicating that dual connectivity or a cell group (e.g., secondary cell group) or a cell has been configured or released or added or deactivated or activated or resumed or modified or reconfigured or suspended

If the base station (e.g., secondary base station) receives the indication message, the base station may read or identify configuration information or a message included in the indication message, may generate an indication acknowledgement message as a response message to the indication message, and may transmit the indication acknowledgement message to the master base station (11-25).
- Identifier having the same value as an identifier included in the indication message
- Indicator or identifier indicating that the indication message is successfully received
- Response indicator indicating that the indication message is successfully applied.

The signaling procedures proposed in the disclosure may be combined and modified to be extended to new signaling procedures. For example, in case that the master base station receives a message 11-05 from the UE, the master base station may ask or request the secondary base station as in 11-20 or 1k-10 of FIG. 1K, and then, in response thereto, may receive a response message as in 11-25 or 1k-15 of FIG. 1K, and then may configure and transmit the RRC message corresponding to 11-10 to the UE according to the response message, and the UE may configure a cell group according to the indication of the RRC message and may transmit, to the master base station, the message 11-15 in response thereto.

FIG. 1M is a diagram illustrating a third signaling procedure for configuring or releasing dual connectivity, or configuring or releasing or activating or resuming or suspending or deactivating a secondary cell group configured with dual connectivity in a next-generation mobile communication system to which the disclosure is applicable.

In FIG. 1M, a UE may configure an RRC connection with a network or a base station as shown in FIG. 1F of the disclosure, and may perform data transmission or reception with the base station (e.g., master cell group (MCG), master node (MN), or cells (PCells or SCells) of the master cell group).

In FIG. 1M, according to the configuration procedure of FIG. 1F, the base station may configure the UE with SRB (e.g., SRB 3) on which the UE and the secondary base station may directly transmit or receive a control message or an RRC message.

As described above, the base station (e.g., secondary base station or master base station) may configure dual connectivity for the UE for a predetermined reason (e.g., in case that a high data rate is required, or at a request of the UE (1m-05), or in case that high QoS requirements should be satisfied). For example, the UE may transmit, to the base station, a request to configure or release or activate or deactivate or resume or suspend dual connectivity, a cell group (e.g., secondary cell group), or a cell, or may transmit the request to the secondary base station through the SRB 3, and the request message may include a frequency (or channel) measurement result report or a cell group identifier or cell identifiers or measurement results (1m-05). As another method, the secondary base station may determine whether to configure or release or add or deactivate or activate or resume or modify or reconfigure or suspend dual connectivity or a cell group (e.g., secondary cell group) or a cell in consideration of an amount of downlink (or uplink) data or an amount of a buffer.

As described above, the secondary base station (master node (MN) or master cell group (MCG)) may receive a frequency or channel measurement report for a frequency or a channel received from the UE, and may determine whether to configure or release or add or deactivate or activate or resume or modify or reconfigure or suspend dual connectivity or a cell group (e.g., secondary cell group) or a cell based on the measurement report. Further, the secondary base station may determine whether to configure or release or add or deactivate or activate or resume or modify or reconfigure or suspend the dual connectivity or the cell group (e.g., secondary cell group) or the cell in consideration of the amount of downlink (or uplink) data or the amount of a buffer.

As described above, in order to configure or release or add or deactivate or activate or resume or modify or reconfigure or suspend the dual connectivity or the cell group (e.g., secondary cell group) or the cell, the secondary base station may transmit a first RRC message to the UE through the SRB 3 (1m-10). In order to configure or release or add or deactivate or activate or resume or modify or reconfigure or suspend the dual connectivity or the cell group (e.g., secondary cell group) or the cell for the UE, each separate new request message may be defined and indicated in the first RRC message, and as another method, a new indicator may be defined in an existing message (e.g., RRCReconfiguration message or RRCResume message) to indicate (or request) to configure or release or add or deactivate or activate or resume or modify or reconfigure or suspend the cell group (e.g., secondary cell group) or the cell. The first RRC message may include some of a plurality of pieces of information below.
- First RRC message identifier (e.g., rrc-Transaction identifier) for identifying the first RRC message. Because the UE and the base station (e.g., secondary base station) transmit or receive a plurality of RRC messages with each other, an identifier for identifying each RRC message may be included in the RRC message. For example, the same first RRC identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
- Configuration information or an indicator (e.g., configuration information or an indicator for the UE) for configuring or releasing or adding or deactivating or activating or resuming or modifying or reconfiguring or suspending dual connectivity or a cell group (e.g., secondary cell group) or a cell
- Indicator indicating a state of a cell group (e.g., active or inactive or suspended or resumed)
- Cell group identifier for identifying cell groups. The cell group identifier may be allocated by the master base station, or one of already promised identifiers may be allocated by the secondary base station.
- Cell group or cell configuration information
- Bearer configuration information. For example, indicator information indicating an operation of a protocol layer device (e.g., SDAP layer device or PDCP layer device or RLC layer device or MAC layer device) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
- In case that configuration information or an indicator for configuring or adding or activating or resuming or modifying or reconfiguring dual connectivity or a cell group (e.g., secondary cell group) or a cell is included, a first indicator (e.g., mobilityControlInfor or ReconfigurationWithSync) may also be included. However, in case that configuration information or an indicator for releasing or deactivating or reconfiguring or suspending dual connectivity or a cell group (e.g., secondary cell group) or a cell is included, the first indicator (e.g., mobilityControlInfor or ReconfigurationWithSync) may not be included. As described above, the first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell). As another method, the UE may perform PDCCH monitoring in the indicated or configured cell group or cell, and may trigger and perform a random access procedure as indicated on the PDCCH. For example, the upper layer device (e.g., RRC layer device) may transmit an indicator to trigger the random access procedure to the lower layer device (e.g., MAC layer device).
- In case that configuration information or an indicator for configuring or adding or activating or resuming or modifying or reconfiguring dual connectivity or a cell group (e.g., secondary cell group) or a cell is included, random access configuration information may also be included. However, in case that configuration information or an indicator for releasing or deactivating or reconfiguring or suspending dual connectivity or a cell group (e.g., secondary cell group) or a cell is included, the random access configuration information may not be included. The random access configuration information may include random access transmission resource information (time or frequency transmission resource) for preamble transmission for the cell group or the cell or designated preamble information for the cell group or cell.
- Time information indicating when to activate or resume or deactivate or suspend dual connectivity or a cell group (e.g., secondary cell group) or a cell (PSCell or SCG SCell) (e.g., information indicating timing (e.g., X), a time unit, a subframe, a time slot, or a symbol unit), for example, if the message is received in an n-th time unit, time information indicating whether to activate or resume or deactivate or suspend a cell in an (n+X)-th time unit)
- First channel measurement configuration information for each cell or each BWP
- Second channel measurement configuration information for each cell or each BWP
- An indicator that adds the cell group configuration or an indicator (ReconfigurationWithSync) that indicates the cell group modification or an indicator (ReconfigurationWithSync or newly defined indicator) that indicates a random access procedure
- An indicator (ReconfigurationWithSync or newly defined indicator) that indicates whether to activate the cell group by performing the random access procedure or to activate the cell group without the random access procedure when the cell group is activated
- Separate radio resource management (RRM) configuration information or frequency measurement configuration information (e.g., frequency measurement configuration information (reduced or relaxed RRM configuration information) simplified for battery saving) to be applied or performed when the radio resource management (RRM) configuration information or the frequency measurement configuration information or the cell group is deactivated
- Configuration information for radio link monitoring (RLM) to be applied or performed when the configuration information for the RLM or the cell group is deactivated. For example, the configuration information for the RLM may be beam configuration information in the unit of a cell or beam configuration information for each bandwidth part to be measured by the UE when the cell group is deactivated, and may include beam-related configuration information (transmission configuration indication (TCI) state or quasi co-location (QCL)), and further, the configuration information may include a timing advance (TA) value (or an offset value) for synchronization with a downlink signal or an uplink signal of the base station, a time alignment timer (TAT) indicating effectiveness of the TA value or a TAT value. Further, the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when a beam failure occurs. Further, the configuration information may include the BWP configuration information (e.g., which may be indicated as a BWP identifier) indicating in what BWP the RLM procedure is to be performed. As another method, when the cell group is in the deactivated state, the UE may minimize a cell group activation delay by performing the RLM procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the RLM procedure is to be performed is not configured) by performing the RLM procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the RLM procedure is to be performed is not configured when the cell group is activated, the RLM procedure may be performed in the finally (or previously) activated bandwidth part. Further, the configuration information may include the beam-related configuration information (e.g., may be indicated as the bandwidth part identifier or TCI state or QCL configuration information) indicating in which beam the RLM procedure is to be performed. As still another method, when the cell group is in the deactivated state, the UE may minimize the cell group activation delay by performing the RLM procedure in the beam (e.g., TCI state or QCL configuration information) configured in the RRC message and by activating the beam, performing the RLM procedure, and early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the RLM procedure is to be performed is not configured) by performing the RLM procedure in the finally (or previously) activated beam before the cell group is deactivated, whereas in case that the cell group is activated, the UE may perform the activation procedure in the beam configured in the RRC message. If the beam-related configuration information indicating in which beam the RLM procedure is to be performed is not configured when the cell group is activated, the RLM procedure may be performed in the finally (or previously) activated beam.
- Configuration information for a beam failure detection procedure or beam failure detection (BFD) or configuration information for the BFD that should be applied or performed when the cell group is deactivated. For example, the configuration information may be beam configuration information in the unit of a cell or beam configuration information for each bandwidth part that should be measured by the UE when the cell group is deactivated, and may include beam-related configuration information (e.g., transmission configuration indication (TCI) state or quasi co-location (QCL)). Further, the configuration information may include a timing advance (TA) value (or an offset value) for synchronization with a downlink signal or an uplink signal of the base station, a time alignment timer (TAT) indicating effectiveness of the TA value, or a TAT value, and further, the configuration information may include synchronization signal block (SSB) configuration information that becomes the target of measurement, channel state information reference signal (CSI-RS) configuration information, reference signal (RS) configuration information, or transmission resource information (e.g., PUCCH configuration information (e.g., scheduling request (SR) information or specific transmission resource) or frequency transmission resource or time transmission resource) that can report the result when the beam failure occurs. Further, the configuration information may include the bandwidth part configuration information (e.g., may be indicated as a bandwidth part identifier) indicating in which bandwidth part the beam failure detection procedure is to be performed. As another method, when the cell group is in the deactivated state, the UE may minimize a cell group activation delay by performing the beam failure detection procedure in the first activated bandwidth part (or first activated downlink bandwidth part (firstActiveDownlinkBWP-ID)) configured in the RRC message and by early monitoring the first activated bandwidth part to be activated when the cell group is activated. As still another method, in case that the cell group is configured in the deactivated state (or activated state), the UE may continuously maintain the connection state with the cell group (e.g., in case that the bandwidth part configuration information indicating in which bandwidth part the beam failure detection procedure is to be performed is not configured) by performing the beam failure detection procedure in the finally (or previously) activated bandwidth part before the cell group is deactivated, whereas in case that the cell group is activated, the UE may perform the activation procedure in the first activated bandwidth part (or first activated downlink bandwidth part (firstActiveDownlinkBWP-ID)) configured in the RRC message. If the bandwidth part related configuration information indicating in which bandwidth part the beam failure detection procedure is to be performed is not configured when the cell group is activated, the beam failure detection procedure may be performed in the finally (or previously) activated bandwidth part. Further, the configuration information may include the beam-related configuration information (e.g., may be indicated as the bandwidth part identifier or TCI state or QCL configuration information) indicating in which beam the beam failure detection procedure is to be performed. As still another method, when the cell group is in the deactivated state, the UE may minimize the cell group activation delay by performing the beam failure detection procedure in the beam (e.g., TCI state or QCL configuration information) configured in the RRC message and by early monitoring the beam to be activated when the cell group is activated. As still another method, in case that the cell group is configured in the deactivated state (or activated state), the UE may continuously maintain the connection state with the cell group (e.g., in case that the beam-related configuration information indicating in which beam the beam failure detection procedure is to be performed is not configured) by performing the beam failure detection procedure in the finally (or previously) activated beam before the cell group is deactivated, whereas in case that the cell group is activated, the UE may perform the activation procedure in the beam configured in the RRC message. If the beam-related configuration information indicating in which beam the beam failure detection procedure is to be performed is not configured when the cell group is activated, the beam failure detection procedure may be performed in the finally (or previously) activated beam.

In case of receiving a first RRC message 1m-15 through SRB 3, the UE may read and identify the first RRC message and may configure or add or modify or resume or suspend or deactivate dual connectivity or a cell group (e.g., secondary cell group). Further, if a first indicator to trigger a random access procedure is included in the first RRC message, the UE may trigger a random access procedure for the configured or indicated cell group or cell. When the random access procedure is performed, if there is random access information in the RRC message or if there is stored random access information, the UE may perform a random access procedure (e.g., contention-free random access procedure (e.g., 4-step random access or 2-step random access)) based on the stored random access information or the random access information received in the RRC message or system information. If there is no random access information in the RRC message, the UE may perform a random access procedure (e.g., contention-based random access procedure (e.g., 4-step random access or 2-step random access)). As another method, the UE may perform PDCCH monitoring in the cell group or cell indicated or configured as above, and may trigger and perform the random access procedure as indicated on the PDCCH. For example, an upper layer device (e.g., RRC layer device) may transmit an indicator to trigger the random access procedure to a lower layer device (e.g., MAC layer device).

The UE may receive a first RRC message 1m-10 or may apply received configuration information, and may generate and transmit a second RRC message to the secondary base station through the SRB 3 (1m-15). The second RRC message may include some of a plurality of pieces of information below.
- First RRC message identifier having the same value as a first RRC message identifier included in the first RRC message
- Indicator or identifier indicating that the first RRC message is successfully received

If the base station (e.g., secondary base station) receives the second RRC message, the base station may identify, through the first identifier, whether the second RRC message is a response message to the first RRC message. Further, the base station identifies the first RRC message, and may transmit, to the master base station or mater cell group base station, an indication message including an indication indicating that a cell group has been configured or added or released or activated or resumed or suspended or deactivated through an Xn interface (e.g., interface between base stations) or an Sn interface (interface between a base station and an AMF or a UMF, or interface between base stations) (1m-20). The indication message may include some of a plurality of pieces of information below.
- Identifier for identifying the indication message
- Configuration information or an indicator (e.g., configuration information or an indicator for the secondary cell group) indicating that dual connectivity or a cell group (e.g., secondary cell group) or a cell has been configured or released or added or deactivated or activated or resumed or modified or reconfigured or suspended

If the base station (e.g., master base station) receives the indication message, the base station may read or identify configuration information or a message included in the indication message, may generate an indication acknowledgement message as a response message to the indication message, and may transmit the indication acknowledgement message to the secondary base station (1m-25).
- Identifier having the same value as an identifier included in the indication message
- Indicator or identifier indicating that the indication message is successfully received
- Response indicator indicating that the indication message is successfully applied.

When the base station transmits a message to the UE so as to configure or indicate, to the UE, cell group or cell configuration information proposed in the disclosure, for example, in case that configuration information or an indicator is included in the message so as to configure or add or activate or resume or modify or reconfigure dual connectivity or cell group (or secondary cell group) or a cell, SDAP configuration information may be included in the message or may be reconfigured or mapping configuration information about a bearer of a SDAP layer device and QoS flow may be included in the message or may be configured or reconfigured. However, in case that configuration information or an indicator to release or deactivate or reconfigure or suspend dual connectivity or cell group (or secondary cell group) or a cell is included, the SDAP configuration information may not be included in the message or may not be reconfigured, or mapping configuration information about a bearer of a SDAP layer device and QoS flow may not be included in the message or may not be configured or reconfigured, or application may be suspended.

The signaling procedures proposed in the disclosure may be combined and modified, and thus may be extended to new signaling procedures.

The signaling procedures proposed in the disclosure may be extended to multiple access technology. For example, configuration information of a plurality of cell groups may be configured for a UE through an RRC message, and one or a plurality of cell groups (or cells) among the configured cell groups may be activated or resumed through an indicator of a PDCCH or MAC control information or an RRC message, or one or a plurality of cell groups may be suspended or deactivated.

Hereinafter, when dual connectivity or a cell group (e.g., secondary cell group) or a cell (PSCell or SCG SCell) is activated or resumed or added or deactivated or released or suspended, proposed UE operations for each cell (PSCell or SCG SCell) or proposed UE operations for each protocol layer device (e.g., SDAP layer device or PDCP layer device or RLC layer device or MAC layer device or PHY layer device) will be described.
- 1> If a UE receives configuration information or an indicator (e.g., through DCI of a PDCCH or MAC control information or an RRC message) for configuring or adding or activating or resuming or modifying or reconfiguring dual connectivity or a cell group (e.g., secondary cell group) or a cell, the UE may perform some of procedures below.
   ■ 2> Upper layer device (e.g., RRC layer device) may indicate the configuration information or the indicator for a lower layer device (e.g., PDCP layer device or RLC layer device or MAC layer device or PHY layer device).
   ■ 2> UE operation for SCell: If the UE receives the configuration information or the indicator, the UE may maintain a PSCell in an active state, may activate a downlink BWP of the PSCell to a normal BWP (e.g., first active BWP or BWP other than a dormant BWP) or a last activated BWP configured by the RRC message, and may perform a UE operation in the activated BWP. As another method, if the UE receives the configuration information or the indicator, the UE may maintain the PSCell in an active state, may reconfigure or switch a PDCCH monitoring period or a DRX configuration period of the PSCell to a short period based on first DRX configuration information, and may perform PDCCH monitoring and perform a UE operation of the active cell. In the above-described method, the UE may perform a UE operation for the PSCell, and thus may quickly receive a scheduling indication from a cell group or a cell and may start data transmission or reception. Further, in order to more quickly receive a scheduling indication from a cell group or a cell and start data transmission or reception, the UE may measure many or frequent channel signals based on first channel measurement configuration information configured by the RRC message and may quickly report the channel measurement result to a base station. If a certain condition is satisfied, the UE may measure a channel signal again based on second channel measurement configuration information and may report the measurement result to the base station.
   ■ 2> UE operation for SCell of secondary cell group: If the UE receives the configuration information or the indicator, the UE may activate the SCell of the secondary cell group, may activate a downlink BWP or an uplink BWP to a BWP (e.g., first active BWP) configured by the RRC message, and may perform a UE operation of the activated SCell or BWP. As another method, if the UE receives the configuration information or the indicator in case that a dormant BWP is configured for the SCell of the secondary cell group, the UE may maintain the SCell in an active state, may activate a downlink BWP of the SCell to a BWP (e.g., first active BWP) configured by the RRC message, and may perform a UE operation in the activated BWP, or in case that a dormant BWP is not configured for the SCell of the secondary cell group, the UE may switch the SCell to an active state, may activate a downlink BWP or an uplink BWP to a BWP (e.g., first active BWP) configured by the RRC message, and may perform a UE operation of the activated SCell or BWP. As another method, if the UE receives the configuration information or the indicator, the UE may determine switching or activation or deactivation of the state of the SCell or the BWP according to SCell configuration information or an indicator configured in the message including the configuration information or the indicator, and may perform a UE operation.
   ■ 2> UE operation of MAC layer device for secondary cell group: If the UE receives the configuration information or the indicator, the UE may perform a MAC reset procedure on a MAC layer device (e.g., may reset or release configuration information configured in the MAC layer device, may suspend or reset configured timers, or may suspend or reset an HARQ procedure). For example, a timing advance timer (TAT) indicating the validity of signal synchronization between the UE and the base station may be considered to be suspended or expired. As another method, if the UE receives the configuration information or the indicator, the UE may perform a MAC partial reset procedure (or in case that an indicator indicating a MAC partial reset procedure is included in a message including the configuration information or the indicator, the UE may perform a MAC partial reset procedure). For example, the timing advance timer (TAT) indicating the validity of signal synchronization between the UE and the base station may be continuously maintained, or HARQ retransmission during retransmission may be continuously performed. As another method, the UE may not perform any procedure on the MAC layer device, and may maintain the current configuration. Further, if an indication to trigger a random access procedure is indicated from an upper layer device (e.g., RRC layer device), or if the TAT timer is suspended or expired, the UE may trigger a random access procedure. As another method, if the TAT timer is not suspended or expired, the UE may not trigger or perform a random access procedure. This is because, if the TAT timer is being driven, signal synchronization with the secondary cell group is matched or maintained, and thus an unnecessary random access procedure may be performed. As another method, in case that the base station triggers a random access procedure by an indication of a PDCCH, the UE may trigger the random access procedure, and may set or adjust a timing advance (TA) value or may start the TA timer. After the UE completes the random access procedure, the UE may resume or activate the secondary cell group and may restart data transmission or reception. The UE may perform a contention-based random access (CBRA) procedure as the random access procedure. As another method, if dedicated random access configuration information (dedicated RACH config or dedicated preamble) is configured (or included) in a message (or previously received message) indicating cell group activation or resumption, the UE may perform a contention-based random access (CBRA) procedure, or if the dedicated random access configuration information (dedicated RACH config or dedicated preamble) is not configured (or not included) in the message (or previously received message) indicating the cell group activation or resumption, the UE may perform the contention-based random access (CBRA) procedure or may not perform the random access procedure. If it is configured (or indicated) to activate the cell group (e.g., secondary cell group) (or if the state of the cell group is not configured as an inactive state), the UE may reset a MAC layer device (MAC reset). The MAC layer device reset (MAC reset) procedure may be performed after the UE determines whether to perform the random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when the PDCCH is successfully received or the transmission resource is received). This is because, if the MAC layer device is first reset when the cell group is activated, a TimeAlignmentTimer (TAT) connected to the PTAG (or PSCell) is considered as expired, and thus a procedure for activating the cell group without a random access procedure proposed in the disclosure is unable to be performed (i.e., the cell group can be activated without the random access procedure only in case that the TAT timer is being driven). As another method, instead of the MAC layer device reset procedure, a MAC layer device partial reset (partial MAC reset) procedure may be performed. As proposed above, if the MAC layer device is not reset or is not partially reset, data stored in a downlink buffer of the UE is not flushed, so that an error may occur in soft combining when data is received at a later time (e.g., when the cell group is activated or thereafter), or data in an uplink buffer (e.g., message 3 buffer or message A buffer) is not flushed, so that an error may occur as old data is transmitted when data is transmitted at a later time (e.g., when a cell group is activated or thereafter).
   ■ 2> Operation for data radio bearer (DRB) configured for secondary cell group: If the UE receives the configuration information or the indicator, the UE may resume DRBs (or SN (SCG) terminated DRBs or DRBs with a PDCP layer device configured for the SCG or a bearer using an RLC UM mode or a bearer using an RLC AM mode) included in the secondary cell group. For example, with respect to a split bearer with a PDCP layer device configured for an master cell group (bearer for which one RLC layer device is configured for the master cell group and another RLC layer device is configured for the secondary cell group), an indicator (reestablishRLC) to trigger a procedure of reestablishing the RLC layer device configured for the secondary cell group may be included together in the RRC message including the configuration information or the indicator, or the UE may perform a reestablishment procedure for the RLC layer device configured for the secondary cell group. For example, for a split bearer with a PDCP layer device configured for the secondary cell group (bearer for which one RLC layer device is configured for the master cell group and another RLC layer device is configured for the secondary cell group), an indicator (reestablishRLC) to trigger a procedure of reestablishing the RLC layer device configured for the master cell group may be included together, or an indicator to trigger a PDCP reestablishment procedure (reestablishPDCP) or a PDCP resume procedure in the PDCP layer device configured for the secondary cell group may be included together in the RRC message including the configuration information or the indicator, or the UE may perform a reestablishment procedure for the RLC layer device configured for the master cell group, or may perform a PDCP reestablishment procedure or a PDCP resume procedure in the PDCP layer device configured for the secondary cell group. For example, for bearers configured for the secondary cell group, the UE may resume the bearers, or may indicate an RRC layer device to trigger a PDCP reestablishment procedure or a PDCP resume procedure in a PDCP layer device, or may perform the PDCP reestablishment procedure or the PDCP resume procedure in the PDCP layer device. The UE may trigger a first PDCP resume procedure for bearers (or bearer using an RLC UM mode or bearer using an RLC AM mode) configured for the secondary cell group, or may perform the first PDCP resume procedure in the PDCP layer device. As another method, in order to solve a security issue problem which occurs when different data are transmitted with the same security key when the secondary cell group is activated or resumed, the UE may trigger a second PDCP resume procedure for bearers (or bearer using an RLC UM mode or bearer using an RLC AM mode) configured for the secondary cell group, or the second PDCP resume procedure may be performed in the PDCP layer device. As another method, in case that a PDCP layer device resume procedure is triggered in an upper layer device, a first PDCP resume procedure may be triggered and performed, and in case that a PDCP layer device resume procedure is triggered in an upper layer device or an indicator to activate or resume a cell group (or cell) is indicated, a second PDCP resume procedure may be triggered and performed. As another method, in order to solve a security issue problem occurring when different data are transmitted with the same security key, in case that the base station indicates an indicator to activate or resume a cell group (or cell), the base station may configure a new security key including security key configuration information (e.g., sk-counter) in an RRC message including an indicator to activate or resume a cell group (or cell) and may modify or update the security key, or may include a PDCP reestablishment procedure indicator in the RRC message to modify or update a security key of bearers (or bearer using an RLC UM mode or bearer using an RLC AM mode) configured for the secondary cell group, or the UE may perform a PDCP reestablishment procedure for the bearers. As another method, if security configuration information is included in a message including an indication to resume or activate a cell group, or modification (or update) of the security configuration information is indicated, or an indicator indicating a first PDCP resume procedure is included, the UE may trigger the first PDCP resume procedure with respect to bearers (or bearer using an RLC UM mode or bearer using an RLC AM mode) configured for the secondary cell group, or may perform the first PDCP resume procedure in a PDCP layer device. However, in case that the security configuration information is not included in the message including the indication to resume or activate the cell group, or modification (or update) of the security configuration information is not indicated, or an indicator indicating a second PDCP resume procedure is included, the UE, in order to solve the security issue problem which occurs when different data are transmitted with the same security key when the secondary cell group is activated or resumed, the UE may trigger the second PDCP resume procedure for the bearers (or bearer using an RLC UM mode or bearer using an RLC AM mode) configured for the secondary cell group, or may perform the second PDCP resume procedure in the PDCP layer device. The methods as proposed above may be performed when the message including the indication to suspend or deactivate the cell group. Further, the methods as proposed above may be applied to SCG bearers (bearers with the PDCP layer device put in the SCG or SCG terminated bearers).
   ■ 2> Operation for signaling radio bearer (SRB) configured for secondary cell group: If the UE receives the configuration information or the indicator and activates the PSCell, or if an activated downlink BWP of the PSCell is a normal BWP other than a dormant BWP, or an activated PSCell monitors the PDCCH with a long period based on first DRX configuration information, SRBs (or SN (SCG) terminated SRB or SRB or SRB 3 with a PDCP layer device configured for the SCG) included in the secondary cell group may be continuously maintained (e.g., the UE may continuously transmit or receive a control message to or from a secondary base station). Further, in order to discard old data (e.g., PDCP SDU or PDCP PDU) stored in the SRBs configured for the secondary cell group, the UE may perform a data discard procedure (e.g., a discard indication to a PDCP layer device or an RLC layer device reestablishment procedure). As another method, if the UE receives the configuration information or the indicator, the UE may resume the SRBs (or SN (SCG) terminated SRB or SRB or SRB 3 with a PDCP layer device configured for the SCG) included in the secondary cell group. Further, in order to discard the old data (e.g., PDCP SDU or PDCP PDU) stored in the SRBs configured for the secondary cell group, the UE may perform a data discard procedure (e.g., a discard indication to a PDCP layer device or an RLC reestablishment procedure). For example, with respect to a split bearer with a PDCP layer device configured for an master cell group (bearer for which one RLC layer device is configured for the master cell group and another RLC layer device is configured for the secondary cell group), an indicator (reestablishRLC) to trigger a procedure of reestablishing the RLC layer device configured for the secondary cell group may be included together in the RRC message including the configuration information or the indicator, or the UE may perform a reestablishment procedure for the RLC layer device configured for the secondary cell group. For example, for a split bearer with a PDCP layer device configured for the secondary cell group (bearer for which one RLC layer device is configured for the master cell group and another RLC layer device is configured for the secondary cell group), an indicator (reestablishRLC) to trigger a procedure of reestablishing the RLC layer device configured for the master cell group may be included together, or an indicator to trigger a PDCP reestablishment procedure (reestablishPDCP) or a PDCP resume procedure in the PDCP layer device configured for the secondary cell group may be included together in the RRC message including the configuration information or the indicator, or the UE may perform a reestablishment procedure for the RLC layer device configured for the master cell group, or may perform a PDCP reestablishment procedure or a PDCP resume procedure in the PDCP layer device configured for the secondary cell group. For example, for bearers configured for the secondary cell group, the UE may resume the bearers, or may indicate an RRC layer device to trigger a PDCP reestablishment procedure or a PDCP resume procedure in a PDCP layer device, or may perform the PDCP reestablishment procedure or the PDCP resume procedure in the PDCP layer device. The UE may trigger a first PDCP resume procedure for bearers configured for the secondary cell group, or may perform the first PDCP resume procedure in the PDCP layer device. As another method, in order to solve a security issue problem which occurs when different data are transmitted with the same security key when the secondary cell group is activated or resumed, the UE may trigger a second PDCP resume procedure for bearers configured for the secondary cell group, or the second PDCP resume procedure may be performed in the PDCP layer device. As another method, in case that a PDCP layer device resume procedure is triggered in an upper layer device, a first PDCP resume procedure may be triggered and performed, and in case that a PDCP layer device resume procedure is triggered in an upper layer device or an indicator to activate or resume a cell group (or cell) is indicated, a second PDCP resume procedure may be triggered and performed. As another method, in order to solve a security issue problem occurring when different data are transmitted with the same security key, in case that the base station indicates an indicator to activate or resume a cell group (or cell), the base station may configure a new security key including security key configuration information (e.g., sk-counter) in an RRC message including an indicator to activate or resume a cell group (or cell) and may modify or update the security key, or may include a PDCP reestablishment procedure indicator in the RRC message to modify or update a security key of bearers configured for the secondary cell group, or the UE may perform a PDCP reestablishment procedure for the bearers. As another method, if security configuration information is included in a message including an indication to resume or activate a cell group, or modification (or update) of the security configuration information is indicated, or an indicator indicating a first PDCP resume procedure is included, the UE may trigger the first PDCP resume procedure with respect to bearers configured for the secondary cell group, or may perform the first PDCP resume procedure in a PDCP layer device. However, in case that the security configuration information is not included in the message including the indication to resume or activate the cell group, or modification (or update) of the security configuration information is not indicated, or an indicator indicating a second PDCP resume procedure is included, the UE, in order to solve the security issue problem which occurs when different data are transmitted with the same security key when the secondary cell group is activated or resumed, the UE may trigger the second PDCP resume procedure for the bearers configured for the secondary cell group, or may perform the second PDCP resume procedure in the PDCP layer device. The methods as proposed above may be performed when the message including the indication to suspend or deactivate the cell group is received. Further, the methods as proposed above may be applied to SCG bearers (bearers with the PDCP layer device put in the SCG or SCG terminated bearers).
   ■ 2> UE operation for PUCCH SCell of secondary cell group: If the UE receives the configuration information or the indicator, the UE may activate the PUCCH SCell of the secondary cell group, may activate a downlink BWP or an uplink BWP to a BWP (e.g., first active BWP) configured by the RRC message, and may perform a UE operation of the activated SCell or BWP. As another method, if the UE receives the configuration information or the indicator in case that a dormant BWP is configured for the PUCCH SCell of the secondary cell group, the UE may maintain the SCell in an active state, may activate a downlink BWP of the SCell to a BWP (e.g., first active BWP) configured by the RRC message, and may perform a UE operation in the activated BWP, or in case that a dormant BWP is not configured for the SCell of the secondary cell group, the UE may switch the SCell to an active state, may activate a downlink BWP or an uplink BWP to a BWP (e.g., first active BWP) configured by the RRC message, and may perform a UE operation of the activated SCell or BWP. As another method, if the UE receives the configuration information or the indicator, the UE may determine switching or activation or deactivation of the state of the SCell or the BWP according to SCell configuration information or an indicator configured by the message including the configuration information or the indicator, and may perform a UE operation. As another method, if the UE receives the configuration information or the indicator, the UE may apply, to the PUCCH SCell, first DRX configuration information (e.g., second DRX configuration information is suspended and the first DRX configuration information is reconfigured) configured by an RRC message, and may perform a UE operation in an activated SCell if the PDCCH monitoring can be performed.
   ■ 2> The UE may transmit, to the master cell group or the secondary cell group, an indicator indicating configuration or addition or activation or resumption or modification or reconfiguration of the cell group (e.g., secondary cell group) or the cell, and the indicator may be transmitted from the UE to the secondary cell group (or base station) or the master cell group (or base station) through a physical signal (e.g., HARQ ACK or NACK or new transmission resource) or MAC control information or an RRC message.
   ■ 2> If the UE receives an indicator to resume or activate or add the cell group (e.g., secondary cell group), the UE may trigger, in a PDCP layer device, a PDCP status report on configured SCG bearers or bearers connected to an SCG RLC layer device or SCG split bearers or MCG bearers or MCG split bearers, and may report the triggered PDCP status report to the base station. This is because, by transmitting the PDCP status report, lost data between the UE and the base station or the state of window variables can be identified, and thus synchronization between a transmission window and a reception window can be achieved.
- 1> If the UE receives configuration information or an indicator (e.g., through DCI of PDCCH or MAC control information or RRC message) for releasing or deactivating or reconfiguring or suspending dual connectivity or the cell group (e.g., secondary cell group) or the cell, the UE may perform some of procedures below.
   ■ 2> Upper layer device (e.g., RRC layer device) may indicate the configuration information or the indicator for a lower layer device (e.g., PDCP layer device or RLC layer device or MAC layer device or PHY layer device).
   ■ 2> UE operation for SCell: If the UE receives the configuration information or the indicator, the UE may maintain a PSCell in an active state, may activate a downlink BWP of the PSCell to a dormant BWP configured by the RRC message, and may perform a UE operation in the dormant BWP. As another method, if the UE receives the configuration information or the indicator, the UE may maintain the PSCell in an active state, may reconfigure or switch a PDCCH monitoring period or a DRX configuration period of the PSCell to a very long period based on second DRX configuration information, and may perform PDCCH monitoring and perform a UE operation for the active cell. As another method, if the UE receives the configuration information or the indicator, the UE may deactivate the PSCell and may perform a UE operation of the inactive cell. In the same method, the UE performs the UE operation for the PSCell, and thus can reduce battery power consumption of the UE.
   ■ 2> UE operation for SCell of secondary cell group: If the UE receives the configuration information or the indicator, the UE may deactivate the SCell of the secondary cell group, and may perform a UE operation of the deactivated SCell. As another method, if the UE receives the configuration information or the indicator in case that a dormant BWP is configured for the SCell of the secondary cell group, the UE may maintain the SCell in an active state, may activate a downlink BWP of the SCell to a dormant BWP, and may perform a UE operation in the dormant BWP, or in case that a dormant BWP is not configured for the SCell of the secondary cell group, the UE may switch the SCell to an inactive state, and may perform a UE operation in the inactive SCell or BWP. As another method, if the UE receives the configuration information or the indicator, the UE may determine switching or activation or deactivation of the state of the SCell or the BWP according to SCell configuration information or an indicator configured in the message including the configuration information or the indicator, and may perform a UE operation.
   ■ 2> UE operation of MAC layer device for secondary cell group: If the UE receives the configuration information or the indicator, the UE may perform a MAC reset procedure on a MAC layer device (e.g., may reset or release configuration information configured in the MAC layer device, may suspend or reset configured timers, or may suspend or reset an HARQ procedure). For example, a timing advance timer (TAT) indicating the validity of signal synchronization between the UE and the base station may be considered to be suspended or expired. As another method, in order to prevent data loss due to a reset procedure of the MAC layer device, if the UE receives the configuration information or the indicator, the UE may perform a MAC partial reset procedure (or in case that an indicator indicating a MAC partial reset procedure is included in a message including the configuration information or the indicator, the UE may perform a MAC partial reset procedure). For example, the timing advance timer (TAT) indicating the validity of signal synchronization between the UE and the base station may be continuously maintained, or HARQ retransmission during retransmission may be continuously performed. As another method, the UE may not perform any procedure on the MAC layer device, and may maintain the current configuration. If the TAT timer is expired in case that the TAT timer is continuously maintained, the UE may perform a random access procedure to readjust or set timing advance (TA) by performing the random access procedure even in case that the secondary cell group is suspended or deactivated. When the UE performs the random access procedure, the UE may indicate by an indicator (e.g., the UE may transmit the indicator including a buffer status report (MAC control information) and may indicate that there is no data to be transmitted or a new indicator may be introduced) to the base station, being the random access procedure to adjust the TA, or after the random access procedure is completed, the base station may transmit, to the UE, a message including an indication to suspend or deactivate a cell group again, or after the random access procedure is completed, the UE may maintain the cell group in a suspended or deactivated state (as another method, the UE may autonomously maintain the cell group to be in a suspended or deactivated state even without an indication from the base station). As another method, if the TAT timer is expired in case that the TAT timer keeps being driven, the base station is also driving the same TAT timer, and thus the base station may trigger a random access procedure (for TA adjustment or reset) to the UE through a cell (PCell or SCell or PSCell) of the master cell group or the secondary cell group, or may transmit, to the UE, a message including an indicator to resume or activate the cell group. In case that it is configured (or indicated) to activate a cell group (e.g., secondary cell group) (or in case that the state of the cell group is not configured as an inactive state), the UE may reset the MAC layer device (MAC reset). The MAC layer device reset (MAC reset) procedure may be performed after the UE determines whether to perform the random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when the PDCCH is successfully received or the transmission resource is received). This is because, if the MAC layer device is first reset when the cell group is activated, a TimeAlignmentTimer (TAT) connected to the PTAG (or PSCell) is considered as expired, and thus a procedure for activating the cell group without a random access procedure proposed in the disclosure is unable to be performed (i.e., the cell group can be activated without the random access procedure only in case that the TAT timer is being driven). As another method, instead of the MAC layer device reset procedure, a MAC layer device partial reset (partial MAC reset) procedure may be performed. As proposed above, if the MAC layer device is not reset or is not partially reset, data stored in a downlink buffer of the UE is not flushed, so that an error may occur in soft combining when data is received at a later time (e.g., when the cell group is activated or thereafter), or data in an uplink buffer (e.g., message 3 buffer or message A buffer) is not flushed, so that an error may occur as old data is transmitted when data is transmitted at a later time (e.g., when a cell group is activated or thereafter).
   ■ 2> Operation for data radio bearer (DRB) (or bearer using an RLC UM mode or bearer using an RLC AM mode) configured for secondary cell group: If the UE receives the configuration information or the indicator, the UE may suspend DRBs (or SCG (SN) terminated DRB or DRB with a PDCP layer device configured for the SCG or bearer using an RLC UM mode or bearer using an RLC AM mode) included in the secondary cell group. For example, for a split bearer (bearer on which one RLC layer device is configured for the master cell group and another RLC layer device is configured for the secondary cell group) with a PDCP layer device configured for the master cell group, an indicator (reestablishRLC) to trigger a procedure of reestablishing the RLC layer device configured for the secondary cell group may also be included, or an indicator to trigger a PDCP data recovery procedure in the PDCP layer device configured for the master cell group may also be included, in the RRC message including the configuration information or the indicator, or the UE may perform a reestablishment procedure on the RLC layer device configured for the secondary cell group, or may perform a PDCP data recovery procedure in the PDCP layer device configured for the master cell group. For example, for a split bearer with a PDCP layer device configured for the secondary cell group (bearer on which one RLC layer device is configured for the master cell group and another RLC layer device is configured for the secondary cell group), an indicator (reestablishRLC) to trigger a procedure of reestablishing the RLC layer device configured for the master cell group may also be included, or an indicator to trigger a PDCP reestablishment procedure (reestablishPDCP) or a PDCP suspend procedure (PDCP suspend) in the PDCP layer device configured for the secondary cell group may also be included in the RRC message including the configuration information or the indicator, or the UE may perform a reestablishment procedure on the RLC layer device configured for the master cell group, or may perform a PDCP reestablishment procedure or a PDCP suspend procedure in the PDCP layer device configured for the secondary cell group. For example, for bearers (or bearer using an RLC UM mode or bearer using an RLC AM mode) configured for the secondary cell group, the UE may suspend bearers, or may indicate an RRC layer device to trigger a PDCP reestablishment procedure or a PDCP suspend procedure in a PDCP layer device, or may perform the PDCP reestablishment procedure or the PDCP suspend procedure in the PDCP layer device. The UE may trigger a first DPCP suspend procedure for bearers (or bearer using an RLC UM mode or bearer using an RLC AM mode) configured for the secondary cell group, or may perform a first PDCP suspend procedure in the PDCP layer device. As another method, in order to solve a security issue problem occurring through transmission of different data with the same security key when the secondary cell group is activated or resumed, the UE may trigger a second PDCP suspend procedure for bearers (or bearer using an RLC UM mode or bearer using an RLC AM mode) configured for the secondary cell group, or may perform a second PDCP suspend procedure in the PDCP layer device. As another method, in case that a PDCP layer device suspend procedure is triggered in an upper layer device, a first PDCP suspend procedure may be triggered and performed, and in case that a PDCP layer device suspend procedure is triggered in an upper layer device or an indicator to deactivate or suspend a cell group (or cell) is indicated, a second PDCP suspend procedure may be triggered and performed. As another method, in case that security configuration information is included in a message including an indication to suspend or deactivate a cell group, or modification (or update) of the security configuration information is indicated or an indicator indicating a first PDCP suspend procedure is included, the UE may trigger the first PDCP suspend procedure with respect to bearers (or bearer using an RLC UM mode or bearer using an RLC AM mode) configured for the secondary cell group or may perform the first PDCP suspend procedure in a PDCP layer device. However, if the security configuration information is not included in the message including the indication to suspend or deactivate the cell group, or modification (or update) of the security configuration information is not indicated or an indicator indicating a second PDCP suspend procedure is included, in order to solve the security issue problem occurring in case that different data are transmitted with the same security key when the secondary cell group is activated or resumed, the UE may trigger the second PDCP suspend procedure with respect to the bearers (or bearer using an RLC UM mode or bearer using an RLC AM mode) configured for the secondary cell group, or may perform the second PDCP suspend procedure in the PDCP layer device. The methods proposed as above may be performed when a message including an indication to resume or activate the cell group is received. Further, the proposed methods may be applied to SCG bearers (bearers with PDCP layer device configured for the SCG or SCG terminated bearers).
   ■ 2> Operation for signaling radio bearer (SRB) configured for secondary cell group: If the UE receives the configuration information or the indicator and activates the PSCell, or if an activated downlink BWP of the PSCell is a normal BWP other than a dormant BWP, or an activated PSCell monitors the PDCCH with a long period based on second DRX configuration information, SRBs (or SN (SCG) terminated SRB or SRB or SRB 3 with a PDCP layer device configured for the SCG) included in the secondary cell group may be continuously maintained without being suspended (e.g., the UE may continuously transmit or receive a control message to or from a secondary base station). Further, in order to discard old data (e.g., PDCP SDU or PDCP PDU) stored in the SRBs configured for the secondary cell group, the UE may perform a data discard procedure (e.g., a discard indication to a PDCP layer device or an RLC layer device reestablishment procedure). As another method, if the UE receives the configuration information or the indicator, the UE may suspend the SRBs (or SN (SCG) terminated SRB or SRB or SRB 3 with a PDCP layer device configured for the SCG) included in the secondary cell group. Further, in order to discard the old data (e.g., PDCP SDU or PDCP PDU) stored in the SRBs configured for the secondary cell group, the UE may perform a data discard procedure (e.g., a discard indication to a PDCP layer device or an RLC reestablishment procedure). For example, with respect to a split bearer with a PDCP layer device configured for an master cell group (bearer for which one RLC layer device is configured for the master cell group and another RLC layer device is configured for the secondary cell group), an indicator (reestablishRLC) to trigger a procedure of reestablishing the RLC layer device configured for the secondary cell group may be included together in the RRC message including the configuration information or the indicator, or an indicator to trigger a PDCP data recovery procedure in the PDCP layer device configured for the master cell group may be included together, or the UE may perform a reestablishment procedure for the RLC layer device configured for the secondary cell group, or may perform the PDCP data recovery procedure in the PDCP layer device configured for the master cell group. For example, for a split bearer with a PDCP layer device configured for the secondary cell group (bearer for which one RLC layer device is configured for the master cell group and another RLC layer device is configured for the secondary cell group), an indicator (reestablishRLC) to trigger a procedure of reestablishing the RLC layer device configured for the master cell group may be included together, or an indicator to trigger a PDCP reestablishment procedure (reestablishPDCP) or a PDCP suspend procedure in the PDCP layer device configured for the secondary cell group, or the UE may perform a reestablishment procedure for the RLC layer device configured for the master cell group, or may perform a PDCP reestablishment procedure or a PDCP suspend procedure in the PDCP layer device configured for the secondary cell group. For example, for bearers configured for the secondary cell group, the UE may suspend the bearers, or may indicate an RRC layer device to trigger a PDCP reestablishment procedure or a PDCP suspend procedure in a PDCP layer device, or may perform the PDCP reestablishment procedure or the PDCP suspend procedure in the PDCP layer device. The UE may trigger a first PDCP suspend procedure for bearers configured for the secondary cell group, or may perform the first PDCP suspend procedure in the PDCP layer device. As another method, in order to solve a security issue problem which occurs when different data are transmitted with the same security key when the secondary cell group is activated or resumed, the UE may trigger a second PDCP suspend procedure for bearers configured for the secondary cell group, or may perform the second PDCP suspend procedure in the PDCP layer device. As another method, in case that a PDCP layer device suspend procedure is triggered in an upper layer device, a first PDCP suspend procedure may be triggered and performed, and in case that a PDCP layer device suspend procedure is triggered in an upper layer device or an indicator to activate or resume a cell group (or cell) is indicated, a second PDCP suspend procedure may be triggered and performed. As another method, in case that security configuration information is included in the message including an indication to suspend or deactivate the cell group, or modification (or update) of the security configuration information is indicated, or an indicator indicating a first PDCP suspend procedure is included, the UE may trigger the first PDCP suspend procedure for the bearers configured for the secondary cell group, or may perform the first PDCP suspend procedure in the PDCP layer device. However, in case that the security configuration information is not included in the message including the indication to suspend or deactivate the cell group, or modification (or update) of the security configuration information is not indicated, or an indicator indicating a second PDCP suspend procedure is included, in order to solve the security issue problem which occurs when different data are transmitted with the same security key when the secondary cell group is activated or resumed, the UE may trigger the second PDCP suspend procedure for the bearers configured for the secondary cell group, or may perform the second PDCP suspend procedure in the PDCP layer device. The methods as proposed above may be performed when the message including the indication to resume or activate the cell group is received. Further, the methods as proposed above may be applied to SCG bearers (bearers with the PDCP layer device put in the SCG or SCG terminated bearers).
   ■ 2> UE operation for PUCCH SCell of secondary cell group: If the UE receives the configuration information or the indicator, the UE may deactivate the PUCCH SCell of the secondary cell group, and may perform a UE operation of the deactivated SCell. As another method, if the UE receives the configuration information or the indicator in case that a dormant BWP is configured for the PUCCH SCell of the secondary cell group, the UE may maintain the SCell in an active state, may activate a downlink BWP of the SCell to a dormant BWP, and may perform a UE operation in the dormant BWP, or in case that the dormant BWP is not configured for the PUCCH SCell of the secondary cell group, the UE may switch the SCell to an inactive state, and may perform a UE operation in the deactivated SCell or BWP. As another method, if the UE receives the configuration information or the indicator, the UE may determine switching or activation or deactivation of the state of the SCell or the BWP according to SCell configuration information or an indicator configured by the message including the configuration information or the indicator, and may perform a UE operation. As another method, if the UE receives the configuration information or the indicator, the UE may apply, to the PUCCH SCell, second DRX configuration information configured by an RRC message, and may perform a UE operation in an activated SCell if the PDCCH monitoring can be performed based on a long period.
   ■ 2> The UE may transmit, to the master cell group or the secondary cell group, an indicator indicating that the UE has performed suspension or deactivation or release or modification of the cell group (e.g., secondary cell group) or the cell, and the indicator may be transmitted from the UE to the secondary cell group (or base station) or the master cell group (or base station) through a physical signal (e.g., HARQ ACK or NACK or new transmission resource) or MAC control information or an RRC message.
   ■ 2> If the UE receives an indicator to suspend or deactivate or release the cell group (e.g., secondary cell group) or the cell, the UE may trigger, in a PDCP layer device, a PDCP status report on configured SCG bearers or bearers connected to an SCG RLC layer device or SCG split bearers or MCG bearers or MCG split bearers, and may report the triggered PDCP status report to the base station. This is because, by transmitting the PDCP status report, lost data between the UE and the base station or the state of window variables can be identified, and thus synchronization between a transmission window and a reception window can be achieved.

Partial reset of a MAC layer device proposed in the disclosure may include one or a plurality of UE operations in procedures below.
- The UE performs a flush operation of the remaining HARQ processes (i.e., normal HARQ process or HARQ process for system information) excluding an HARQ process for MBS among HARQ processes configured for a serving cell, and the HARQ process for MBS operates to empty (flush) or release (flush) or reset (flush) or omit flushing after handover completion or after RRC mode transition (RRC inactive mode or RRC idle mode).
- In case of a flush operation or after the handover completion or at a time when an MBS service can be received from a target base station after the RRC state mode transition (RRC inactive mode or RRC idle mode) or at a time when G-RNTI monitoring starts, data of the HARQ process related to the MBS can be flushed. Further, until the handover completion or until completion of the RRC state mode transition (RRC inactive mode or RRC idle mode), data reception through G-RNTI may be continuously performed, and in case of handover, the base station may perform monitoring of C-RNTI at an allocated target through the RRC message. As another method, even before completion of a random access, data reception from a target base station through G-RNTI may be continuously performed.
- If there is an ongoing random access procedure, it may be suspended.
- If there is a specifically configured or indicated preamble identifier or preamble configuration information or PRACH (random access configuration related information) configuration information, it may be discarded.
- If there is a temporary cell identifier (temporary C-RNTI), it may be released.
- A buffer for message 3 transmission may be flushed.
- All new data indicators for an HARQ process for an uplink may be set to 0.
- If uplink DRX retransmission timer being driven on an uplink is being driven, it may be suspended.
- If all uplink HARQ related timers are being driven, they may be suspended.
- All TAT timers (e.g., TAT timers related to a secondary timing advance group (STAG)) excluding time alignment timer (TAT) timers related to the cell PSCell or a primary timing advance group (PTAG) are considered to be expired or are suspended (if the TAT timers are set). For example, the TAT timer related to the PTAG may be continuously maintained without being suspended, and thus can be quickly activated without the random access procedure when the UE re-activates the cell or the cell group. Further, the TAT timer related to a secondary timing advance group (STAG) may be considered to be suspended or expired, and thus an unnecessary UE procedure may be removed (if the TAT timers are set). If the time alignment timer (TAT) timer related to the primary timing advance group (PTAG) is expired in the inactive cell or cell group, the MAC layer device may indicate an upper layer device (e.g., RRC layer device) that the TAT timer is expired. Further, if the time alignment timer (TAT) timer related to the primary timing advance group (PTAG) is expired in the inactive cell or cell group, the UE may suspend a beam failure detection procedure or an RLM procedure (or it may be considered that a beam failure occurs or a radio link is not valid). As another method, if the UE detects the beam failure, the UE may suspend the TAT timer related to the PTAG (or may consider expiration of the TAT timer) or may suspend the RLM procedure. As another method, if the UE detects a radio link failure, the UE may suspend the TAT timer related to the PTAG (or may consider the expiration of the timer) or may suspend the beam failure detection procedure (or may consider that the beam failure occurs).

In case that a reset procedure of the MAC layer device is performed, or a partial reset procedure indicator of the MAC layer device is not included or is not indicated, or is not performed, the UE performs the reset procedure of the entire MAC layer device, and thus the UE may flush all of the configured normal HARQ process or HARQ process for MBS or HARQ process for system information.

Hereinafter, as proposed above, proposed are MAC layer device procedures to be performed by the UE for which dual connectivity is configured in case that a cell group (or SCG) is configured in an inactive state, a beam failure detection (BFD) procedure is configured, or an RLM procedure is configured by an RRC message. For example, it is proposed that the UE performs different beam failure detection procedures or beam failure recovery procedures depending on whether the state of the cell group configured in the RRC message is an inactive state or an active state.
- 1> If the UE receives the RRC message and a beam failure detection (BFD) procedure or a first BFR procedure or a second BFR procedure is configured in the RRC message, or a cell (PSCell or Scell) or a cell group, for which the beam failure detection procedure is configured, is not configured in an inactive state (or is configured in an active state),
   ■ 2> the UE performs the beam failure detection procedure.
   ■ 2> If a beam failure is detected with respect to the cell (PSCell or Scell) or the cell group,
      ◆ 3> the first BFR procedure or the second BFR procedure proposed in the disclosure is performed.
   ■ 2> If a random access procedure problem is detected due to the beam failure,
      ◆ 3> the UE may report, to the base station, the random access procedure problem due to the beam failure.
- 1> Otherwise, if the UE receives the RRC message and a beam failure detection procedure or a first BFR procedure or a second BFR procedure is configured in the RRC message or a cell (PSCell or SCell), or a cell group (or SCG) is configured in an inactive state in the RRC message, and the beam failure detection procedure or the first BFR procedure or the second BFR procedure is configured for the cell group, or a cell or a cell group, for which the beam failure detection procedure is configured, is configured in an inactive state,
   ■ 2> the UE performs the beam failure detection procedure.
   ■ 2> If beam failure is detected with respect to the cell (PSCell or Scell) or the cell group,
      ◆ 3> the first BFR procedure or the second BFR procedure proposed in the disclosure is not performed. This is because a random access procedure may be unnecessarily triggered for the deactivated cell group. The MAC layer device may indicate or report, to an upper layer device (or an RRC layer device), that the beam failure is detected.
   ■ 2> If beam failure is detected with respect to the deactivated cell group (SCG) or cell (PSCell) or MAC layer device,
      ◆ 3> the UE may report the beam failure to the base station (or MCG). For example, the UE may report the beam failure by including the beam failure in an SCG failure report message (SCGFailureInformation) and transmitting the message to the base station.
   ■ 2> If a random access procedure problem due to the beam failure is detected,
      ◆ 3> the UE may report, to the base station, the random access procedure problem due to the beam failure.

The disclosure proposes a detailed procedure for a beam failure detection procedure of the MAC layer device of the UE as proposed above in case that the beam failure detection procedure is configured by the RRC message.
- 1> If an indication indicating beam failure occurrence is received from a lower layer device,
   ■ 2> a timer for beam failure detection (BeamFailureDetectionTimer) may start or restart (The timer may be set in the RRC message).
   ■ 2> A variable value for counting the number of beam failures (BFI_COUNTER) may be increased by 1.
   ■ 2> If the variable value for counting the number of beam failures is equal to or larger than the maximum number of beam failures (beamFailureInstanceMaxCount) (where, the maximum number of beam failures may be set in the RRC message),
      ◆ 3> If a serving cell (cell in which the beam failure occurs) is SCell,
         • 4> a beam failure recovery (BFR) procedure may be triggered or performed with respect to the cell.
      ◆ 3> Else if the serving cell (cell in which the beam failure occurs) is PSCell or an inactive cell group or the cell (PSCell) of the inactive cell group,
         • 4> the beam failure occurrence with respect to the cell may be indicated to an upper layer device (e.g., RRC layer device).
         • 4> It may be considered that a time alignment timer (TAT) timer corresponding to (or related to) a primary timing advance group (PTAG) is expired. Further, the TAT timer related to the PTAG may be suspended. This is because, if the beam failure occurs with respect to the inactive cell group or the, it may be determined that a TA value is no longer valid, and thus there is no need to unnecessarily drive the TAT timer. Further, an RLM procedure may be suspended or a radio link failure may be declared. This is because, if the beam failure occurs with respect to the inactive cell group or cell, it may be determined that a radio link is no longer valid.
      ◆ 3> Else
         • 4> a random access procedure may start or may be performed with respect to the SpCell.

The beam failure recovery (BFR) procedure proposed in the disclosure is as follows.

In the disclosure, the first BFR procedure (e.g., Rel-15 beam failure recovery (BFR)) is available only for PCell or SpCell. That is, if beam failure occurs in the UE in a connected mode, the UE performs a random access procedure. The random access procedure is dependent on whether a preamble for BFR is configured in the RRC message. The preamble may be configured for each beam. If the preamble for the BFR is configured, a search space for the BFR is also configured. In case that the preamble for BFR is configured as described above, CFRA is performed. That is, if a failure occurs in beam #1, the UE searches for the beam, and if it is determined that the beam is available in beam #3, the UE identifies whether the preamble for the BFR is configured in beam #3, and if configured, the UE performs the CFRA based on the preamble. Then, the UE waits for a response, and monitors a PDCCH in the configured search space. If the UE performs the random access based on the preamble, the base station is aware of the occurrence of the beam failure, and provides scheduling (DL assignment or UL grant) on PDCCH to the UE. Then, the UE continuously transmits or receives data on the beam, and thus the beam is recovered (in the CFRA, the base station is accurately aware of the beam failure, and thus, there is no need to transmit RAR for TA reconfiguration).

If the preamble for the BFR is not configured in the RRC message, CBRA is performed. That is, when a failure occurs in beam #1, the UE searches for the beam, and if it is determined that beam #3 is available for the beam #3, the UE identifies whether the preamble for the BFR is configured for beam #3, and if not, the UE performs the CBRA. Then, the UE waits for a response and an RAR. Although the base station does not know why the UE suddenly performs the random access, the base station transmits the RAR and completes the random access procedure. Then, the UE receives an indication on the PDCCH, and performs data transmission or reception on the beam, so that the beam is recovered.

The first BFR procedure (e.g., Rel-15 beam failure recovery (BFR)) or BeamFailureRecoveryConfig for the SpCell is configured on a UL BWP. This is because, if the BFR is triggered, a BFR dedicated preamble may be configured.

The second BFR procedure (Rel-16 beam failure recovery (BFR)) of the disclosure is available not only for the SpCell but also for the SCell. By the RRC message, a BFR-dedicated scheduling request (SR) or transmission resource of PUCCH) may be configured for each cell and each BWP. If the beam failure occurs with respect to a certain BWP of the SCell, a BFR MAC control element (CE) is generated. Further, if the beam failure occurs with respect to the BWP, and the dedicated SR is configured (PCell or PUCCH SR), the SR is transmitted on the PUCCH. Further, if the beam failure reporting continuously fails on the dedicated SR, the random access procedure of CBRA is performed. If an SR count exceeds, only the CBRA is performed in a same manner that the BSR is transmitted in a legacy manner. The random access procedure is performed on the PCell. Therefore, when the MAC CE is transmitted on the PCell with respect to SCell, the UE detects in what SCell the failure occurs, and if the UE finds an available one among TCI sets (or TCI states) configured by RRC, an available beam may be optionally reported for each SCell. If HARQ ACK is received with respect to MAC PDU including the MAC CE in case that the UE transmits the MAC CE including the available beam with respect to the SCell, the UE and the base station use the available beam for the SCell. If the MAC CE does not include the available beam with respect to the SCell, the base station may designate a beam by DCI of the PDCCH or TCI state MAC CE as a response thereto.

Further, a BFR procedure for the SpCell can be improved in the second BFR procedure (Rel-16 beam failure recovery (BFR) procedure).

For example, the second BFR procedure (Rel-16 beam failure recovery (BFR) procedure) may be possible for PCell or SpCell, as in Rel-15. That is, if a beam failure occurs, the UE performs a random access procedure. The random access procedure varies depending on whether a preamble for the BFR is configured. The preamble may be configured for each beam. Further, if the preamble for the BFR is configured, a search space for the BFR is also configured. If the preamble for BFR is configured, the CFRA is performed with the preamble. That is, if a failure occurs in beam #1, the UE searches for the beam, and if it is determined that the beam is available in beam #3, the UE identifies whether the preamble for the BFR is configured for beam #3, and if configured, the UE performs the CFRA. Then, the UE waits for a beam response and monitors a PDCCH in the configured search space. If the UE performs the random access based on the preamble, the base station identifies occurrence of the beam failure and then provides scheduling (DL assignment or UL grant) on the PDCCH to the UE. Then, the UE continuously transmits or receives data on the beam, and thus the beam is recovered (In the CFRA, the base station accurately identifies the beam failure, and thus, there is no need to transmit RAR for TA reconfiguration).

If the preamble for the BFR is not configured, the CBRA is performed. That is, if the failure occurs in beam #1, the UE searches for the beam, and if it is determined that the beam is available in beam #3, the UE identifies whether the preamble for the BFR is configured for beam #3, and if not configured, the UE performs the CBRA. Then, the UE waits for a response and an RAR. Although the base station does not know why the UE suddenly performs the random access, the base station transmits the RAR, and the UE receives the RAR and then generates and transmits the BFR MAC CE in Msg3. However, the MAC CE is unable to include an available beam for the SpCell. This is because, unlike the SCell, the PCell transmits the BFR MAC CE with respect to the BFR occurring in the PCell. That is, if the beam failure occurs in the PCell, the UE searches for an available beam and transmits the preamble with respect to the available beam, and thus, even in the random access procedure, the base station and the UE are aware of the available beam for the PCell. That is, the available beam is already included. Therefore, if the random access procedure is completed, the UE performs data transmission or reception on beam #3, so that the beam is recovered.

That is, if the BFR is triggered with respect to Rel-16 SpCell, the random access is unconditionally triggered regardless of the SR, and the BFR MAC CE is configured (if the preamble for the BFR is not configured) and transmitted. Further, BeamFailureRecoverySCellConfig is configured in a DL BWP in the RRC message for Rel-16 BFR or SCell. This is to configure a candidate RS inclusive in the BFR MAC CE if the BFR is triggered. A dedicated SR for the SCell BFR is included in MAC-CellGroupConfig in the RRC message. For example, it may be configured in schedulingRequestConfig.

Further, the base station configures, in the RRC message, a beam failure RS for the UE to identify the beam failure. If failure occurs for all RSs, the UE detects the beam failure and performs the random access procedure.

In case that the base station pre-configures the preamble for the beam failure recovery, the CFRA is performed as the random access procedure, and the base station can be aware whether the UE performs the random access procedure for the beam recovery based on the preamble.

However, if the base station does not pre-configure the preamble for the beam failure recovery, the UE performs the CBRA. The BSR is triggered to transmit UL data in a state where the SR is not configured, and this is not distinguished from the triggering of the random access procedure from the viewpoint of the base station. However, if the UE suddenly performs the random access procedure, the base station may determine it as one of two cases, and if there is the BSR, the base station receives BSR information, and if not, the base station recognizes it as the BFR, and even in case that the two cases are simultaneously triggered, the base station reads the BSR, and implicitly determines it based on the preamble. When the UE reads the SSB, the UE can be aware of the number of beams and which beam is transmitted in what period, at what time, and on what frequency resource. Further, the UE may measure the beam intensity, and may perform the random access procedure with respect to the beam that exceeds a predetermined level. If a certain beam is selected, the UE may perform the random access on the beam in consideration of the time, frequency resource, or period.

Hereinafter, proposed are procedures to be performed by the UE in case that the state of the cell group is configured as an active state or an inactive state, or the PSCell of the cell group is configured as an active state or an inactive state. The UE may receive an indication of an active state or an inactive state with respect to a cell group or cell (PSCell) by the RRC message (RRCReconfiguration or RRCResume) or MAC control information or PDCCH DCI. For example, in case that the inactive state is configured in the RRC message (RRCReconfiguration or RRCResume) or the MAC control information or the PDCCH DCI, the cell group (or SCG) or the cell (or PSCell) may be deactivated, and in case that the inactive state is not configured (or the active state is configured) in the RRC message (RRCReconfiguration or RRCResume) or the MAC control information or the PDCCH DCI, the cell group or the cell may be activated.

In the disclosure, UE operations when an indication to activate the cell group or the cell is received (or an indication to deactivate the cell group or the cell is not received) are as follows.
- If an indication to activate the cell group (or SCG) or the cell (or PSCell) of the UE is received by the DCI (L1 control signal) of the PDCCH or the MAC CE or the RRC message (or an indication to deactivate the cell group or the cell is not received) the UE may perform one or a plurality of operations below.
   ■ The UEactivates the cell group or the cell.
   ■ The UE switches or activates an uplink BWP or downlink BWP (e.g., first active downlink BWP or first active uplink BWP) configured by the RRC message. As another method, by performing the random access procedure, the UE may switch or activate an uplink BWP or downlink BWP (e.g., first active downlink BWP or first active uplink BWP) configured by the RRC message, in case that reconfigurationWithSync is configured, or a beam failure is detected, or a radio link failure is detected, or a TAT timer is not being driven (or is expired) or the cell group or the cell is activated. Further, in case that the random access procedure is performed, the random access procedure may be performed in the BWP. However, in case that the random access procedure is not performed (or it is configured not to perform the random access procedure or a beam failure is not detected or a radio link failure is not detected or a TAT timer is being driven (or is not expired)), the UE may activate the previously (or finally) activated BWP.
   ■ The UE transmits a sounding reference signal (SRS) for the base station to perform channel measurement on an uplink in the activated BWP. For example, the UE may periodically transmit the SRS.
   ■ The UE performs PUCCH transmission if a PUCCH is configured for the activated BWP.
   ■ If there is a configured type-1 transmission resource on which usage is suspended, the UE may reset the stored type-1 transmission resource to its default setting and use it. The configured type-1 transmission resource is a periodic transmission resource (uplink or downlink) that is pre-allocated by the RRC message and means a transmission resource that can be used by being activated by the RRC message.
   ■ The UE triggers PHR with respect to the BWP. The PHR may be triggered for an MCG or an SCG. Further, the PHR may be reported to the MCG or the SCG.
   ■ The UE may report the channel measurement result (CSI or CQI or PMI or RI or PTI or CRI) for a downlink on the activated BWP according to the base station configuration.
   ■ The UE monitors a PDCCH so as to read an indication of the base station in the activated BWP.
   ■ The UE monitors a PDCCH so as to read cross scheduling for the activated BWP.
   ■ The UE starts or restarts a BWP inactivity timer. As another method, the UE may start or restart the BWP inactivity timer only in case that the BWP inactivity timer is not configured. The BWP inactivity timer may be configured by the RRC message, and when the timer is expired, the UE may switch the BWP to hibernation or dormant BWP. For example, the UE may start or restart the BWP inactivity timer only in a dormant BWP.

In the disclosure, UE operations when an indication to deactivate the cell group or the cell is received are as follows.
- If an indication to deactivate the cell group (or SCG) or the cell (or PSCell) of the UE is received by DCI (L1 control signal) of PDCCH or MAC CE or RRC message, the UE may perform one or a plurality of operations among operations below.
   ■ The UE deactivates the cell group or the cell or an indicated uplink or downlink BWP.
   ■ All TAT timers (e.g., TAT timers related to a secondary timing advance group (STAG)) excluding time alignment timer (TAT) timers related to the cell PSCell or a primary timing advance group (PTAG) are considered to be expired or are suspended (if the TAT timers are set). For example, the TAT timer related to the PTAG may be continuously maintained without being suspended, and thus can be quickly activated without the random access procedure when the UE re-activates the cell or the cell group. Further, the TAT timer related to a secondary timing advance group (STAG) may be considered to be suspended or expired, and thus an unnecessary UE procedure may be removed (if the TAT timers are set). If the time alignment timer (TAT) timer related to the primary timing advance group (PTAG) is expired in the inactive cell or cell group, the MAC layer device may indicate an upper layer device (e.g., RRC layer device) that the TAT timer is expired. Further, if the time alignment timer (TAT) timer related to the primary timing advance group (PTAG) is expired in the inactive cell or cell group, the UE may suspend a beam failure detection procedure or an RLM procedure (or it may be considered that a beam failure occurs or a radio link is not valid). As another method, if the UE detects the beam failure, the UE may suspend the TAT timer related to the PTAG (or may consider expiration of the TAT timer) or may suspend the RLM procedure. As another method, if the UE detects a radio link failure, the UE may suspend the TAT timer related to the PTAG (or may consider the expiration of the timer) or may suspend the beam failure detection procedure (or may consider that the beam failure occurs).
   ■ The UE suspends a BWP inactivity timer (e.g., an inactivity timer for a downlink BWP) that is configured for the cell or BWP and is being driven.
   ■ The UE may release a periodic downlink transmission resource (DL SPS or configured downlink assignment) or a periodic uplink transmission resource (UL SPS or configured uplink grant Type 2) configured for the cell or the BWP. The meaning of "release" is that configuration information such as period information or the like configured by the RRC message is stored in the UE, but information about a periodic transmission resource indicated or activated by L1 signaling (e.g., DCI) is discarded and is no longer used. The periodic transmission resource may be called type 2 configured transmission resource. Further, an operation of releasing the periodic transmission resource may be performed only when the Scell is switched from an active state to an inactive state. This is because when being transitioned from a dormant state to an inactive state, the periodic transmission resource is not present in the dormant state, and thus an operation of releasing is not necessary. As another method, the periodic transmission resources can be released only in case that the periodic downlink transmission resource or the periodic uplink transmission resource is configured or is configured and used.
   ■ The UE may suspend the periodic uplink transmission resource (configured uplink grant Type 1 configured by RRC) configured for the cell or the BWP. The meaning of "suspend" is that the UE stores transmission resource configuration information configured by the RRC message but no longer uses it. The periodic transmission resource may be called type 1 configured transmission resource. Further, an operation of releasing the periodic transmission resource may be performed only when the Scell is transitioned from an active state to an inactive state. This is because when being transitioned from a dormant state to an inactive state, the periodic transmission resource is not present in the dormant state, and thus an operation of releasing is not necessary. As another method, the periodic transmission resources can be released only in case that the periodic downlink transmission resource or the periodic uplink transmission resource is configured or is configured and used.
   ■ The UE flushes all HARQ buffers configured for the cell or the BWP.
   ■ If there is a PUSCH transmission resource configured for periodic channel measurement reporting (semi-persistent CSI reporting) with respect to the cell or the BWP, the UE releases the transmission resource.
   ■ The UE does not transmit an SRS with respect to the cell or the BWP.
   ■ The UE does not perform or report channel measurement (CSI or CQI or PMI or RI or PTI or CRI) for a downlink in the cell or the BWP.
   ■ The UE does not transmit uplink data on UL-SCH in the cell or the BWP.
   ■ The UE does not perform a random access procedure in the cell or the BWP.
   ■ The UE does not monitor a PDCCH in the cell or the BWP.
   ■ The UE does not monitor a PDCCH with respect to the cell or the BWP. Even for cross-scheduling, the UE does not monitor a PDCCH with respect to a scheduled cell.
   ■ The UE does not perform PUCCH or SPUCCH transmission in the cell or the BWP.

The first PDCP suspend (or resume) procedure proposed in the disclosure may include one or a plurality of UE operations among procedures below. The proposed procedure may be applied to or configured for a bearer using an RLC UM mode or a bearer using an RLC AM mode, or the UE performs the proposed procedure on the bearer using an RLC UM mode or the bearer using an RLC AM mode.
- A transmission PDCP layer device of the UE may reset a transmission window variable or may configure the transmission window variable as an initial value, or may discard stored data (e.g., PDCP PDU or PDCP SDU). As another method, in order to prevent data loss, the transmission PDCP layer device of the UE may discard only the PDCP PDU. This is a procedure for preventing invalid data from being transmitted or retransmitted when a secondary cell group is activated or resumed at a later time.
- If a reordering timer (t-reordering) (timer for arranging data in an ascending order based on PDCP sequence numbers or count values) is being driven, a reception PDCP layer device of the UE may suspend or reset the reordering timer. As another method, the reception PDCP layer device of the UE may perform a header decompression procedure on stored data (e.g., PDCP SDU), and may transmit the data to an upper layer device in an ascending order of count values. The reception PDCP layer device of the UE may reset a reception window variable or may configure the reception window variable as an initial value.

The second PDCP suspend (or resume) procedure proposed in the disclosure may include one or a plurality of UE operations among procedures below. The proposed procedure may be applied to or configured for a bearer using an RLC UM mode or a bearer using an RLC AM mode, or the UE may perform the proposed procedure on the bearer using an RLC UM mode or the bearer using an RLC AM mode.
- A transmission PDCP layer device of the UE may not reset a transmission window variable or configure the transmission window variable as an initial value, but may changelessly maintain a variable value. The reason why the variable value (e.g., count value) is maintained is to solve a security issue problem occurring when different data are transmitted with the same security key (e.g., count value) when a secondary cell group is activated or resumed. The transmission PDCP layer device of the UE may discard stored data (e.g., PDCP PDU or PDCP SDU). As another method, in order to prevent data loss, the transmission PDCP layer device of the UE may discard only the PDCP PDU. This is a procedure for preventing invalid data from being transmitted or retransmitted when the secondary cell group is activated or resumed at a later time. As another method, the transmission PDCP layer device of the UE may store values of transmission window variables and may reset the window variables (e.g., set to zero). If security configuration information is modified when a cell group is resumed or activated, or a message indicating to resume or activate the cell group includes security configuration information or indicates modification of a security key, the transmission PDCP layer device of the UE may use the reset window variables. As another method, If security configuration information is not modified when the cell group is resumed or activated, or a message indicating to resume or activate the cell group does not include security configuration information or does not indicate modification of a security key, the transmission PDCP layer device of the UE may retrieve the stored values of the transmission window variables or may set or reset or reset and use the stored values of the transmission window variables as values of the transmission window variables.
- If a reordering timer (t-reordering) (timer for arranging data in an ascending order based on PDCP sequence numbers or count values) is being driven, a reception PDCP layer device of the UE may suspend or reset the reordering timer. Further, the reception PDCP layer device of the UE may perform a header decompression procedure on stored data (e.g., PDCP SDU), and may transmit the data to an upper layer device in an ascending order of count values. The reception PDCP layer device of the UE may maintain a variable value without resetting a reception window variable or without configure the reception window variable as an initial value. The reason why the variable value (e.g., count value) is maintained is to solve a security issue problem occurring when different data are transmitted with the same security key (e.g., count value) when the secondary cell group is activated or resumed. As another method, in order not to directly trigger the reordering timer even without a count value or a PDCP sequence number gap when the secondary cell group is activated or resumed or data is received, the UE may configure or update an RX_NEXT window variable (variable indicating a count value of data expected to be received next) to a value of an RX DELIV window variable (variable indicating a count value corresponding to next data of data transmitted to an upper layer device) or to a count value of data first received by the UE. As another method, in case that a reordering timer value is configured in the message or in case that an indicator is received from an upper layer device, the reception PDCP layer device of the UE may configure or update an RX_REORD window variable (variable indicating a count value of next data of data triggering the reordering timer) to a variable value of an RX_NEXT window variable value, or may suspend or restart the reordering timer. As another method, the reception PDCP layer device of the UE may store values of reception window variables and may reset the window variables (e.g., set to zero). If security configuration information is modified when a cell group is resumed or activated, or a message indicating to resume or activate the cell group includes security configuration information or indicates modification of a security key, the reception PDCP layer device of the UE may use the reset window variables. As another method, if security configuration information is not modified when the cell group is resumed or activated, or a message indicating to resume or activate the cell group does not include security configuration information or does not indicate modification of a security key, the reception PDCP layer device of the UE may retrieve the stored values of the reception window variables or may set or reset or reset and use the stored values of the reception window variables as values of the reception window variables.

When the UE receives configuration information or an indicator for releasing or deactivating or reconfiguring or suspending dual connectivity or a cell group (e.g., secondary cell group) or a cell (e.g., by DCI of a PDCCH or MAC control information or an RRC message) and the UE performs the above UE operations, if data to be transmitted through an uplink occurs or is generated, the UE may transmit a scheduling request (SR) or MAC control information (or indicator or the amount of buffer or a buffer state report) on a transmission resource of the PDCCH configured by the RRC message to a master base station or a secondary base station to request an uplink transmission resource or to request to configure or add or activate or resume or modify or reconfigure dual connectivity or a cell group (e.g., secondary cell group) or a cell. As another method, when the UE receives configuration information or an indicator for releasing or deactivating or reconfiguring or suspending dual connectivity or a cell group (e.g., secondary cell group) or a cell (e.g., by DCI of a PDCCH or MAC control information or an RRC message) and the UE performs the above UE operations, if data to be transmitted through an uplink occurs or is generated, the UE may generate an RRC message and may transmit the RRC message to a master base station or a secondary base station to request an uplink transmission resource or to request to configure or add or activate or resume or modify or reconfigure dual connectivity or a cell group (e.g., secondary cell group) or a cell.

Procedures proposed in the disclosure may be extended to a multiple access technology. For example, configuration information of a plurality of cell groups may be configured for the UE by an RRC message, and one or more cell groups (or cells) among the configured plurality of cell groups may be activated or resumed through an indicator of a PDCCH or MAC control information or an RRC message, or one or more cell groups may be suspended or deactivated.

Hereinafter, when a cell group or a PSCell of the secondary cell group is deactivated or suspended due to a deactivation or suspend procedure of a cell group or a cell, as proposed in the disclosure, UE operations of the UE to activate or resume the cell group or the cell, in response to generation or occurrence of uplink data with respect to the secondary cell group (or bearers that belong to the secondary cell group), will be described.

As proposed in the disclosure, if the cell group or the cell is deactivated or suspended, the UE is unable to transmit or receive data, and thus, if uplink data of the UE is generated with respect to the secondary cell group (or bearers that belong to the secondary cell group), it is required to activate or resume the cell group or the cell again. A procedure, by the UE, of requesting the base station (a master base station or a secondary base station) to activate or resume the cell group or the cell again will be performed by one method or a method extended from a combination or application of methods below.
- First method: The UE may configure a message (e.g., an RRC message) of requesting to activate or resume the secondary cell group or the cell again and may transmit the message to the master base station. When receiving the message, the master base station may request the secondary base station for a resume procedure as the first signaling procedure of FIG. 1K proposed in the disclosure, may receive a response, and may configure and transmit, to the UE, a message (e.g., an RRC message) of indicating activation or resumption of the secondary cell group again. As another method, as in the second signaling procedure of FIG. 1L, the master base station may configure and transmit, to the UE, a message (e.g., an RRC message) of indicating activation or resumption of the secondary cell group again, and then may indicate the secondary base station with activation or resumption. As another method, as in the third signaling procedure of FIG. 1M, the UE may configure and transmit, to the secondary base station through SRB3, a message (e.g., an RRC message) of requesting to activate or resume the secondary cell group or the cell again, and the secondary base station may configure and transmit, to the UE, a message (e.g., an RRC message) of indicating activation or resumption of the secondary cell group again, and then may indicate the master base station with activation or resumption.
- Second method: The UE may configure a message (e.g., MAC control information) of requesting to activate or resume the secondary cell group or the cell again and may transmit the message to the master base station. When receiving the message, the master base station may request the secondary base station for a resume procedure as the first signaling procedure of FIG. 1K proposed in the disclosure, may receive a response, and may configure and transmit, to the UE, a message (e.g., an RRC message or MAC control information) of indicating activation or resumption of the secondary cell group again. As another method, as in the second signaling procedure of FIG. 1L, the master base station may configure and transmit, to the UE, a message (e.g., an RRC message or MAC control information) of indicating activation or resumption of the secondary cell group again, and then may indicate the secondary base station with activation or resumption. As another method, as in the third signaling procedure of FIG. 1M, the UE may configure and transmit, to the secondary base station through SRB3, a message (e.g., MAC control information) of requesting to activate or resume the secondary cell group or the cell again, and the secondary base station may configure and transmit, to the UE, a message (e.g., an RRC message or MAC control information) of indicating activation or resumption of the secondary cell group again, and then may indicate the master base station with activation or resumption. When activation or resumption of the cell group is requested or indicated by MAC control information, the MAC control information may be newly defined and designed, or as another method, a new field (or indicator) may be defined or a new value (or field value or identifier value) may be defined in legacy MAC control information to indicate the activation or resumption of the cell group.
- Third method: The UE may configure a message (e.g., a physical signal of a PHY layer device) of requesting to activate or resume the secondary cell group or the cell again and may transmit the message to the master base station. When receiving the message, the master base station may request the secondary base station for a resume procedure as the first signaling procedure of FIG. 1K proposed in the disclosure, may receive a response, and may configure and transmit, to the UE, a message (e.g., an RRC message or a physical signal of a PHY layer device) of indicating activation or resumption of the secondary cell group again. As another method, as in the second signaling procedure of FIG. 1L, the master base station may configure and transmit, to the UE, a message (e.g., an RRC message or a physical signal of a PHY layer device) of indicating activation or resumption of the secondary cell group again, and then may indicate the secondary base station with activation or resumption. As another method, as in the third signaling procedure of FIG. 1M, the UE may configure and transmit, to the secondary base station through SRB3, a message (e.g., a physical signal of a PHY layer device) of requesting to activate or resume the secondary cell group or the cell again, and the secondary base station may configure and transmit, to the UE, a message (e.g., an RRC message or a physical signal of a PHY layer device) of indicating activation or resumption of the secondary cell group again, and then may indicate the master base station with activation or resumption. When activation or resumption of the cell group is requested or indicated through a physical signal of a PHY layer device, the physical signal of the PHY layer device may be newly defined and designed as a new transmission resource (e.g., a new SR transmission resource (e.g., a PUCCH transmission resource of a PCell or PSCell) or a new field of DCI of a PDCCH (a PDCCH transmission resource transmitted from a PSCell or transmitted from a PCell) which is for the secondary cell group), or as another method, a new field (or indicator) may be defined or a new value (or field value or identifier value) may be defined in a legacy physical signal of a PHY layer device (e.g., a SR transmission resource (e.g., a PUCCH transmission resource of a PCell or PSCell) or a field of DCI of a PDCCH (a PDCCH transmission resource transmitted from a PSCell or transmitted from a PCell)) to indicate the activation or resumption of the cell group. As another method, when the UE performs PDCCH monitoring with respect to a PSCell of the secondary cell group with a long period by applying second DRX configuration information or when the secondary cell group of the UE is in an inactive state or a suspended state, if the PSCell triggers a random access procedure to the UE through DCI of PDCCH, the UE may interpret a received indication as activation or resumption of the secondary cell group. A physical transmission resource may indicate a transmission resource for a random access, and when uplink data for the secondary cell group is generated while the secondary cell group is suspended or inactive, the UE may perform a random access procedure. As another method, when uplink data for the secondary cell group is generated while the secondary cell group is suspended or inactive, if an SR transmission resource is configured (or a TA timer is being driven), the SR transmission resource may be transmitted to the master cell group or the secondary cell group, and if the SR transmission resource is not configured (or the TA timer is expired), the random access procedure may be performed. A contention-based random access (CBRA) procedure may be performed as the random access procedure. As another method, if dedicated random access configuration information (dedicated RACH config or dedicated preamble) is configured (or is included) in a message (or a pre-received message) indicating cell group suspension or deactivation, the UE may perform a contention-free random access (CFRA) procedure, or if dedicated random access configuration information (dedicated RACH config or dedicated preamble) is not configured (or is not included) in a message (or a pre-received message) indicating cell group deactivation or suspension, the UE may perform the contention-based random access (CBRA) procedure. During the random access procedure or upon completion of the random access procedure, an indicator (e.g., BSR (MAC control information (MAC control element))) indicating generation of the uplink data may be included and indicated to the base station, and when the base station (e.g., secondary base station or master base station) receives the indicator or completes the random access procedure, the base station may transmit, to the UE, a message indicating resumption or activation of the secondary cell group, so that the UE may resume or activate the secondary cell group so as to perform again data transmission or reception.

As proposed in the disclosure, when the UE activates or resumes the cell group (e.g., the secondary cell group) or the cell (e.g., a PSCell), in response to an indicator of a PDCCH or MAC control information or an RRC message, the UE may complete activation or resumption of the cell group or the cell at a first point of time. The first point of time may be configured by an RRC message, as proposed in the disclosure. For example, the RRC message may include time information (e.g., information (e.g., X) to indicate timing, a time unit, a subframe or a time slot or a symbol unit) to indicate when to activate or resume or deactivate or suspend dual connectivity or a cell group (or a secondary cell group) or a cell (a PSCell or an SCG SCell). For example, in the above case, when the UE has received PDCCH or MAC control information or an RRC message to indicate or activate or resume or deactivate or suspend the cell group (e.g., the secondary cell group) or the cell (e.g., the PSCell) at an n-th time unit, time information to complete activation or resumption or deactivation or suspension of the cell group or the cell may be configured at an (n+X)-th time unit. As another method, the time information (e.g., X) may not be configured by a base station but may be used as a value that is preset and defined and thus fixed. As another example, when a random access is started (a preamble is transmitted) or a random access is successfully completed at an n-th time unit after the PDCCH or the MAC control information or the RRC message to indicate or activate or resume or deactivate or suspend the cell group (e.g., the secondary cell group) or the cell (e.g., the PSCell) is received, time information to complete activation or resumption or deactivation or suspension of the cell group or the cell may be configured at an (n+X)-th time unit. As another method, the time information (e.g., X) may not be configured by a base station but may be used as a value that is preset and defined and thus fixed. When activation or suspension or deactivation or resumption of the cell group or the cell is completed, the UE may perform UE operations according to a state (e.g., activation or hibernation or deactivation) of each cell or BWP, which is proposed in the disclosure. Further, when activation or resumption of the cell group or the cell is completed, a DRX operation of the UE may be started or restarted, or when deactivation or suspension of the cell group or the cell is completed, the DRX operation of the UE may be suspended or deactivated.

Further, as proposed above in the disclosure, when the UE activates a cell (e.g., PSCell or SCell) of a cell group (e.g., master cell group or secondary cell group), in response to an indication of MAC control information, activation of the cell may be completed at a second point of time. The second point of time may be configured by an RRC message, as proposed above in the disclosure. For example, the RRC message may include time information (e.g., information (e.g., X) to indicate timing, a time unit, a subframe or a time slot or a symbol unit) to indicate when to activate or deactivate carrier aggregation or dual connectivity or a cell group (or master cell group or secondary cell group) or a cell (an MCG SCell or an SCG SCell). For example, when the UE has received MAC control information to indicate or activate or deactivate a cell (e.g., SCell) at an n-th time unit, time information to complete activation or deactivation of the cell may be configured at an (n+X)-th time unit. As another method, the time information (e.g., X) may not be configured by a base station but may be used as a value that is preset and defined and thus fixed. As another example, when a random access is started (a preamble is transmitted) or a random access is successfully completed at an n-th time unit after the MAC control information to indicate or activate or deactivate the cell (e.g., the SCell or the PSCell) is received, time information to complete activation or deactivation of the cell may be configured at an (n+X)-th time unit. As another method, the time information (e.g., X) may not be configured by a base station but may be used as a value that is preset and defined and thus fixed. When activation or suspension or deactivation or resumption of the cell group or the cell is completed, the UE may perform UE operations according to a state (e.g., activation or hibernation or deactivation) of each cell or BWP, which is proposed in the disclosure. Further, when activation or resumption of the cell group or the cell is completed, a DRX operation of the UE may be started or restarted, or when deactivation or suspension of the cell group or the cell is completed, the DRX operation of the UE may be suspended or deactivated.

Further, as proposed above in the disclosure, when the UE activates a cell (e.g., PSCell or SCell) of a cell group (e.g., master cell group or secondary cell group), in response to an indication of an RRC message, activation of the cell may be completed at a third point of time. The third point of time may be configured by an RRC message, as proposed above in the disclosure. For example, the RRC message may include time information (e.g., information (e.g., X) to indicate timing, a time unit, a subframe or a time slot or a symbol unit) to indicate when to activate or deactivate carrier aggregation or dual connectivity or a cell group (or master cell group or secondary cell group) or a cell (an MCG SCell or an SCG SCell or a PSCell). For example, when the UE has received an RRC message to indicate or activate or deactivate a cell (e.g., SCell) at an n-th time unit, time information to complete activation or deactivation of the cell may be configured at an (n+X)-th time unit. As another method, the time information (e.g., X) may not be configured by a base station but may be used as a value that is preset and defined and thus fixed. As another example, when a random access is started (a preamble is transmitted) or a random access is successfully completed at an n-th time unit after the RRC message to indicate or activate or deactivate the cell (e.g., the SCell or the PSCell) is received, time information to complete activation or deactivation of the cell may be configured at an (n+X)-th time unit. As another method, the time information (e.g., X) may not be configured by a base station but may be used as a value that is preset and defined and thus fixed. X may be configured or preset, based on a slot number, or may be configured or preset, based on a shortest slot length among preset PCells or PSCells or SCells. When activation or suspension or deactivation or resumption of the cell group or the cell is completed, the UE may perform UE operations according to a state (e.g., activation or hibernation or deactivation) of each cell or BWP, which is proposed in the disclosure. Further, when activation or resumption of the cell group or the cell is completed, a DRX operation of the UE may be started or restarted, or in the above case, when deactivation or suspension of the cell group or the cell is completed, the DRX operation of the UE may be suspended or deactivated.

On the other hand, the concept of a cell group which is proposed in the disclosure may be extended to a subcell group. For example, in the disclosure, in order to configure dual connectivity for a UE, a first cell group and a second cell group are configured and applied as a master cell group and a secondary cell group, so that the dual connectivity may be configured and thus the UE can perform data transmission or reception to or from two base stations. However, if the concept of the cell group is extended to a subcell group, a plurality of subcell groups of the cell group may be configured for a UE connected with one base station, or subcell group identifiers may be respectively configured for the subcell groups. Further, the UE performs data transmission or reception with respect to one base station, but, the UE may extend and apply an activation or suspension or resumption or deactivation procedure to different frequencies or cells for each of subcell groups, in response to PDCCH or MAC control information or an RRC message, which is proposed in the disclosure. For example, when the UE performs communication with one base station and a plurality of frequencies or cells, the base station may configure the UE with a plurality of subcell groups with respect to a plurality of frequencies or cells of the base station, which correspond to the cell group (master cell group), so as to allow the UE to apply carrier aggregation, and may define fields to indicate activation or deactivation or suspension or resumption of each subcell group, the fields respectively indicating the subcell groups in PDCCH or MAC control information or an RRC message. Further, the UE may apply an activation or suspension or resumption or deactivation procedure to different frequencies or cells for each of the subcell groups, in response to PDCCH or MAC control information or an RRC message, which is proposed in the disclosure. As another method, a proposed subcell group may be implemented by introducing downlink or uplink logical channel restriction with respect to each cell. For example, an RRC message may include configuration information to restrict logical channels, which belong to one cell group, to transmit or receive data only for a particular frequency or cell and may be transmitted to the UE. Logical channels (e.g., logical channel identifiers) may be configured by mapping them to each cell or frequency, and thus may be grouped to be regarded as a subcell group proposed above, and fields to respectively indicate the cells may be defined in PDCCH or MAC control information or an RRC message, such that the fields may indicate activation or deactivation or suspension or resumption of the respective cells.

Further, in the disclosure, when the UE for which dual connectivity is configured performs data transmission or reception to or from a master cell group or a secondary cell group or when the secondary cell group is suspended or deactivated, if the master cell group detects a radio link failure, the UE may report the radio link failure to the secondary cell group or to the master cell group through the secondary cell group. For example, the UE may configure an RRC message for reporting the radio link failure and may report the radio link failure by transmitting the RRC message through split SRB 1 or SRB 3. In a case where split SRB 1 is configured, the UE may report the radio link failure always through split SRB 1. As another method, when the UE for which dual connectivity is configured performs data transmission or reception to or from a master cell group or a secondary cell group or when the secondary cell group is suspended or deactivated, if the master cell group detects a radio link failure, the UE may declare the radio link failure and may perform an RRC connection reestablishment procedure.

Further, in the disclosure, when the UE for which dual connectivity is configured performs data transmission or reception to or from an master cell group or a secondary cell group or when the secondary cell group is suspended or deactivated, if the secondary cell group detects a radio link failure, the UE may report the radio link failure to the master cell group or to the secondary cell group through the master cell group. For example, the UE may configure an RRC message for reporting the radio link failure and may report the radio link failure by transmitting the RRC message through SRB 1 or split SRB 1 or SRB 3. In case that SRB 1 or split SRB 1 is configured, the UE may report the radio link failure always through split SRB 1.

In the disclosure, that the secondary cell group is released when dual connectivity is configured for the UE means that connection (data transmission or reception) to the secondary cell group is released or configuration information of the secondary cell group (or bearer configuration information or protocol layer device configuration information (PHY or MAC or RLC or PDCP or SDAP layer device) is discarded or released, and on the other hand, that the secondary cell group is suspended or deactivated means that connection (data transmission or reception) to the secondary cell group is released or suspended, but configuration information of the secondary cell group (or bearer configuration information or protocol layer device configuration information (PHY or MAC or RLC or PDCP or SDAP layer device) is maintained or suspended or stored, or connection to the secondary cell group may be quickly resumed or activated based on the stored configuration information of the secondary cell group at a later time.

Hereinafter, in the disclosure, it is proposed that the UE reports the frequency measurement result to SRB 3 by prioritizing the SRB 3 in case that a frequency measurement procedure or a frequency measurement report procedure is configured to the UE by the RRC message (e.g., RRCReconfiguration) or in case that dual connectivity is configured to the UE, or in case that the frequency measurement report procedure is configured with respect to the cell group (or SCG), and it is proposed to report the frequency measurement result through SRB 1 (or SRB of MCG) only in case that the SRB 3 is not configured. However, it is proposed that the UE does not perform the measurement report through the SRB 3 in case that the cell group (SCG) is deactivated. For example, a procedure is proposed, in which the UE performs the frequency measurement result reporting through SRB 3 if the SRB 3 is configured only in case that the cell group is not deactivated, or a procedure is proposed, in which the UE reports the frequency measurement result through SRB 1 (or SRB of MCG) in case that the cell group is deactivated. This is because, if the frequency measurement result is transmitted to the SRB 3 in a state where the cell group (SCG) is deactivated, the cell group should be unnecessarily activated. The detailed procedure of the UE is as follows.
- 1> If the frequency measurement procedure or the frequency measurement report procedure is configured to the UE,
   ■ 2> If the UE is configured to (NG)EN-DC (or in case that the frequency measurement procedure or the frequency measurement reporting procedure is configured with respect to the cell group (or SCG),
      ◆ 3> If SRB 3 is configured to the UE, and if the state of the cell group (SCG) is not configured to an inactive state,
         • 4> the UE transfers a frequency measurement result reporting message to a lower layer device to transmit the message through the SRB 3.
      ◆ 3> Else
         • 4> the UE transfers the frequency measurement result reporting message to the lower layer device to transmit the message through the SRB 1 (or SRB of MCG (E-UTRA)).
   ■ 2> If the UE is configured to NR-DC or in case that the frequency measurement procedure or the frequency measurement reporting procedure is configured with respect to the cell group (or SCG),
      ◆ 3> If SRB 3 is configured to the UE, and if the state of the cell group (SCG) is not configured to an inactive state,
         • 4> the UE transfers the frequency measurement result reporting message to the lower layer device to transmit the message through the SRB 3.
      ◆ 3> Else
         • 4> the UE transfers the frequency measurement result reporting message to the lower layer device to transmit the message through the SRB 1 (or SRB of MCG (E-UTRA)).

FIG. 1N is a diagram illustrating an operation of a UE proposed in the disclosure.

In FIG. 1N, a UE 1n-01 may receive a message (e.g., DCI of a PDCCH or MAC control information or an RRC message) from a base station (1n-05). In case that cell group configuration information or a cell group state or cell group indicator is included in the message, the UE may identify whether a cell group is indicated to be configured or added or activated or resumed or whether the cell group is indicated to be released or deactivated or suspended in the message (1n-10). If the cell group is indicated to be configured or added or activated or resumed in the message, cell group configuration or addition or activation or resume procedure, which is proposed in the disclosure, may be performed (1n-20), and if the cell group is indicated to be released or deactivated or suspended, cell group release or deactivation or suspend procedure, which is proposed in the disclosure, may be performed (1n-30).

FIG. 1O is a diagram illustrating the structure of a UE to which an embodiment of the disclosure is applicable.

With reference to the drawing, the UE includes a radio frequency (RF) processor 1o-10, a baseband processor 1o-20, a storage unit 1o-30, and a controller 1o-40.

The RF processor 1o-10 performs a function for transmitting and receiving a signal on a radio channel, such as signal band conversion and amplification. That is, the RF processor 1o-10 performs up-conversion of a baseband signal provided from the baseband processor 1o-20 into an RF-band signal to transmit the converted signal through an antenna, and performs down-conversion of the RF-band signal received through the antenna into a baseband signal. For example, the RF processor 1o-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Further, the RF processor 1o-10 may include a plurality of RF chains. Further, the RF processor 1o-10 may perform beamforming. For the beamforming, the RF processor 1o-10 may adjust phases and sizes of signals transmitted or received through the plurality of antennas or antenna elements. Further, the RF processor may perform MIMO, and may receive several layer devices during performing of the MIMO operation. Under the control of the controller, the RF processor 1o-10 may perform received beam sweeping by properly configuring a plurality of antennas or antenna elements, or may adjust the direction and a width of a received beam so that the received beam is coordinated with a transmitted beam.

The baseband processor 1o-20 performs a conversion function between a baseband signal and a bit string in accordance with the physical layer device standard of the system. For example, during data transmission, the baseband processor 1o-20 generates complex symbols by encoding and modulating a transmitted bit string. Further, during data reception, the baseband processor 1o-20 restores a received bit string by demodulating and decoding the baseband signal provided from the RF processor 1o-10. For example, in case of complying with an orthogonal frequency division multiplexing (OFDM) method, during data transmission, the baseband processor 1o-20 generates complex symbols by encoding and modulating a transmitted bit string, performs mapping of the complex symbols onto subcarriers, and then configures OFDM symbols through the inverse fast Fourier transform (IFFT) operation and cyclic prefix (CP) insertion. Further, during data reception, the baseband processor 1o-20 divides the baseband signal being provided from the RF processor 1o-10 in the unit of OFDM symbols, restores the signals mapped onto the subcarriers through the fast Fourier transform (FFT) operation, and then restores the received bit string through demodulation and decoding.

The baseband processor 1o-20 and the RF processor 1o-10 transmit and receive the signals as described above. Accordingly, the baseband processor 1o-20 and the RF processor 1o-10 may be called a transmitter, a receiver, a transceiver, or a communication unit. Further, in order to support different radio access technologies, at least one of the baseband processor 1o-20 and the RF processor 1o-10 may include a plurality of communication modules. Further, in order to process signals of different frequency bands, at least one of the baseband processor 1o-20 and the RF processor 1o-10 may include different communication modules. For example, the different radio access technologies may include an LTE network and an NR network. Further, the different frequency bands may include super high frequency (SHF) (e.g., 2.5 GHz, 5 GHz) band and millimeter (mm) wave (e.g., 60 GHz) band.

The storage unit 1o-30 stores therein a basic program for an operation of the UE, application programs, and data of configuration information. Further, the storage unit 1o-30 provides stored data in accordance with a request from the controller 1o-40.

The controller 1o-40 controls the overall operations of the UE. For example, the controller 1o-40 transmits and receives signals through the baseband processor 1o-20 and the RF processor 1o-10. Further, the controller 1o-40 records or reads data in or from the storage unit 1o-30. For this, the controller 1o-40 may include at least one processor. For example, the controller 1o-40 may include a communication processor (CP) that performs a control for communication and an application processor (AP) that controls an upper layer device, such as an application program.

FIG. 1P is a diagram illustrating the structure of a base station (or transmission reception point (TRP)) to which an embodiment of the disclosure is applicable.

As illustrated in the drawing, the base station is configured to include an RF processor 1p-10, a baseband processor 1p-20, a backhaul communica tion unit 1p-30, a storage unit 1p-40, and a controller 1p-50.

The RF processor 1p-10 performs a function for transmitting and receiving signals on a radio channel, such as signal band conversion and amplification. That is, the RF processor 1p-10 performs up-conversion of a baseband signal provided from the baseband processor 1p-20 into an RF-band signal to transmit the converted signal through an antenna, and performs down-conversion of the RF-band signal received through the antenna into a baseband signal. For example, the RF processor 1p-10 may include a transmission filter, a reception filter, an amplifier, a mixer, an oscillator, a DAC, and an ADC. Although only one antenna is illustrated in the drawing, the first access node may be provided with a plurality of antennas. Further, the RF processor 1p-10 may include a plurality of RF chains. Further, the RF processor 1p-10 may perform beamforming. For the beamforming, the RF processor 1p-10 may adjust phases and sizes of signals being transmitted or received through the plurality of antennas or antenna elements. The RF processor may perform a downward MIMO operation through transmission of one or more layer devices.

The baseband processor 1p-20 performs a conversion function between a baseband signal and a bit string in accordance with the physical layer device standard of the first radio access technology. For example, during data transmission, the baseband processor 1p-20 generates complex symbols by encoding and modulating a transmitted bit string. Further, during data reception, the baseband processor 1p-20 restores a received bit string by demodulating and decoding the baseband signal provided from the RF processor 1p-10. For example, in case of complying with an OFDM method, during data transmission, the baseband processor 1p-20 generates complex symbols by encoding and modulating a transmitted bit string, performs mapping of the complex symbols to subcarriers, and then configures OFDM symbols through the IFFT operation and CP insertion. Further, during data reception, the baseband processor 1p-20 divides the baseband signal provided from the RF processor 1p-10 in the unit of OFDM symbols, restores the signals mapped to the subcarriers through the FFT operation, and then restores the received bit string through demodulation and decoding. The baseband processor 1p-20 and the RF processor 1p-10 transmit and receive the signals as described above. Accordingly, the baseband processor 1p-20 and the RF processor 1p-10 may be called a transmitter, a receiver, a transceiver, a communication unit, or a wireless communication unit.

The communication unit 1p-30 provides an interface for performing communication with other nodes in the network.

The storage unit 1p-40 stores therein a basic program for an operation of the main base station, application programs, and data of configuration information. In particular, the storage unit 1p-40 may store information about a bearer allocated to the connected UE and the measurement result reported from the connected UE. Further, the storage unit 1p-40 may store information that becomes the basis of determination of whether to provide or suspend a multi-connection to the UE. Further, the storage unit 1p-40 provides stored data in accordance with a request from the controller 1p-50.

The controller 1p-50 controls the overall operation of the primary base station. For example, the controller 1p-50 transmits and receives signals through the baseband processor 1p-20 and the RF processor 1p-10 or through the backhaul communication unit 1p-30. Further, the controller 1p-50 records or reads data in or from the storage unit 1p-40. For this, the controller 1p-50 may include at least one processor.

Methods proposed in the disclosure may be executed with some or all of the contents included in respective embodiments within the range that does not harm the essence of the disclosure.

Meanwhile, embodiments of the disclosure disclosed in the specification and drawings are merely used to present specific examples to easily explain the technical contents of the disclosure and to help understanding of the disclosure, but are not intended to limit the scope of the disclosure. That is, it will be apparent to those of ordinary skill in the art to which the disclosure pertains that other modification examples based on the technical concept of the disclosure can be embodied.

Further, although preferred embodiments of the disclosure are disclosed and specific terms are used in the specification and drawings, they are merely used to easily explain the technical contents of the disclosure and to help understanding of the disclosure, but are not intended to limit the scope of the disclosure. Here, in addition to the disclosed embodiments, it will be apparent to those of ordinary skill in the art to which the disclosure pertains that other modification examples based on the technical concept of the disclosure can be embodied.

## Claims

1. A method of a UE in a wireless communication system in which dual connectivity (DC) is configured, the method comprising:
receiving, from a base station, beam failure detection configuration information related to beam failure detection;
detecting a beam failure based on the beam failure detection configuration information and a beam failure occurrence indicator from a lower layer device; and
reporting a beam failure of a primary secondary cell (PSCell) to an upper layer device if a serving cell is the PSCell and a secondary cell group (SCG) is in a deactivated state in case that the beam failure is detected.

2. The method of claim 1, further comprising driving a timer in case that the beam failure occurrence indicator is received from the lower layer device,
wherein the beam failure detection configuration information further includes the timer.

3. The method of claim 2, further comprising suspending the timer in case that the beam failure of the serving cell is reported to the upper layer device.

4. The method of claim 1, further comprising triggering a beam failure recovery procedure of the serving cell in case that the beam failure is detected in a state where the serving cell is a secondary cell (SCell).

5. The method of claim 1, wherein a random access procedure is performed with respect to a primary cell (PCell) or the PSCell in case that the beam failure is detected in a state where the serving cell is the PCell, or the serving cell is the PSCell and the secondary cell group (SCG) is activated.

6. The method of claim 1, wherein detecting the beam failure further comprises:
increasing a variable value for counting the number of beam failures in case that the beam failure occurrence indicator is received; and
determining that the beam failure is detected in case that the variable value for counting the number of beam failures is equal to or larger that a maximum number of beam failure,
wherein the beam failure detection configuration information includes the maximum number of beam failures.

7. The method of claim 1, wherein the beam failure detection configuration information further comprises synchronization signal block (SSB) configuration information and channel state information reference signal (CSI-RS) configuration information.

8. A UE in a wireless communication system comprising:
a transceiver configured to transmit and receive signals; and
a controller connected to the transceiver,
wherein the controller is configured to control to: receive, from a base station, beam failure detection configuration information related to beam failure detection, detect a beam failure based on the beam failure detection configuration information and a beam failure occurrence indicator from a lower layer device, and report a beam failure of a primary secondary cell (PSCell) to an upper layer device if a serving cell is the PSCell and a secondary cell group (SCG) is in a deactivated state in case that the beam failure is detected.

9. The UE of claim 8, wherein the controller is configured to control to drive a timer in case that the beam failure occurrence indicator is received from the lower layer device, and
wherein the beam failure detection configuration information further includes the timer.

10. The UE of claim 9, wherein the controller is configured to control to suspend the timer in case that the beam failure of the serving cell is reported to the upper layer device.

11. The UE of claim 8, wherein the controller is configured to control to trigger a beam failure recovery procedure of the serving cell in case that the beam failure is detected in a state where the serving cell is a secondary cell (SCell).

12. The UE of claim 8, wherein the controller is configured to control to perform a random access procedure with respect to a primary cell (PCell) or the PSCell in case that the beam failure is detected in a state where the serving cell is the PCell, or the serving cell is the PSCell and the secondary cell group (SCG) is activated.

13. The UE of claim 8, wherein the controller is configured to control to increase a variable value for counting the number of beam failures in case that the beam failure occurrence indicator is received, and determine that the beam failure is detected in case that the variable value for counting the number of beam failures is equal to or larger than a maximum number of beam failure, and
wherein the beam failure detection configuration information includes the maximum number of beam failures.

14. The UE of claim 8, wherein the beam failure detection configuration information further comprises synchronization signal block (SSB) configuration information and channel state information reference signal (CSI-RS) configuration information.
